(19) Europäisches Patentamt
European Patent Office
Office européen des brevets

(11) EP 1 475 656 A1

(12) **EUROPEAN PATENT APPLICATION**
published in accordance with Art. 158(3) EPC

(43) Date of publication:
**10.11.2004 Bulletin 2004/46**

(21) Application number: **03703275.2**

(22) Date of filing: **07.02.2003**

(51) Int Cl.[7]: **G02F 1/15**, G02F 1/17

(86) International application number:
**PCT/JP2003/001346**

(87) International publication number:
**WO 2003/069402 (21.08.2003 Gazette 2003/34)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **14.02.2002 JP 2002037373**

(71) Applicant: **Sony Corporation**
**Tokyo 141-0001 (JP)**

(72) Inventor: **TAKAHASHI, Kenichi,**
**SONY CORPORATION**
**Shinagawa-ku, Tokyo 141-0001 (JP)**

(74) Representative: **Körber, Martin, Dipl.-Phys. et al**
**Mitscherlich & Partner**
**Patentanwälte**
**Sonnenstrasse 33**
**80331 München (DE)**

(54) **ELECTROCHEMICAL DISPLAY ELEMENT AND ELECTROCHEMICAL DISPLAY**

(57) An electrochemical display device and an electrochemical display apparatus, having preferable cycle properties and preferable display quality, and a method for producing the same. The electrochemical display device according to the present invention is characterized in that it has: a first transparent electrode; an electrolyte layer containing a coloring material which colors by a coloring means and electrochemical reduction or oxidation, accompanied by deposition or dissolution; a second electrode having the electrolyte layer disposed between the first transparent electrode and the second electrode; and a third electrode independent of the first transparent electrode and the second electrode.

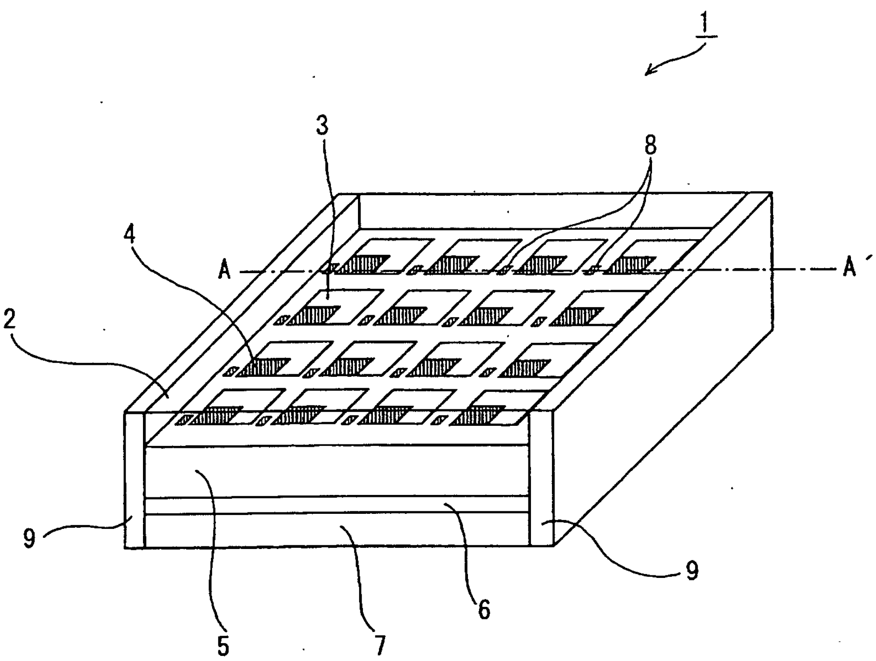


Fig.1

EP 1 475 656 A1

## Description

### TECHNICAL FIELD

. The present invention relates to an electrochemical display device using a principle such that the color of a material is changed utilizing electrochemical oxidation or reduction.

### BACKGROUND ART

In recent years, as the network widely spreads, documents, which have conventionally been delivered in the form of prints, are being delivered in the form of so-called electronic documents. Further, books, magazines and the like are frequently provided through so-called electronic publication.

The information has been read conventionally from a CRT or liquid crystal display of a computer. However, it is pointed out that a light emission type display causes severe fatigue for the reasons of ergonomics, making long-time reading difficult. In addition, there is a drawback in that information can be read only at the place in which a computer is located.

Laptop computers widely spread currently, and some of them are used as portable display, but they cannot be used in reading for several hours or longer because they are of a light emission type using a back light and further consume the power soon. Recently, a reflection type liquid crystal display is developed, and the use of this enables driving of a computer with low power consumption; however, the liquid crystal has only a reflectance of plain display (white display) as low as 30%, and hence has markedly poor visibility, as compared to printed paper, and is likely to cause fatigue, thus also making long-time reading difficult.

For solving these problems, recently, so-called paper-like display or electronic paper is being developed. They are colored mainly by making coloring particles to move between electrodes by an electrophoresis method, or rotating particles having dichroism in an electric field. However, these methods have disadvantages in that spaces between the particles absorb a light to lower the contrast, and the driving voltage required for obtaining a practical writing speed (1 second or faster) is as high as 100 V or more.

An electrochromic display apparatus (ECD), which achieves coloring based on an electrochemical action, is preferable in contrast, as compared to the above display using an electrophoresis method, and it has already been put into practical use in photochromic glass and clock display. However, the photochromic glass and clock display essentially have no need of matrix driving, and hence cannot be applied to display use of electronic paper, and they generally have poor black quality and low reflectance.

A display of electronic paper is always exposed to a light, such as sunlight or room light, when being used. In the electrochromic display apparatus practically used in photochromic glass and clock display, a predetermined organic material is used to form a black portion. However, an organic material generally has poor light resistance and hence poses a problem in that black color is faded and the black density is lowered after being used for a long time. In addition, the display apparatus of a matrix driving type described in Japanese Patent Application Publication No. Hei 4-73764 is known, but the driving device merely constitutes a part of the liquid crystal display apparatus.

For solving the above technical problems, there have been proposed an electrochemical display device and an electrochemical display apparatus, using metal ions as a material which changes in color by electrochemical oxidation and reduction, and using a white colored polymer electrolyte for dissolving the metal ions, and being capable of matrix driving and improving the contrast and the black density. However, the properties, especially cycle properties are unsatisfactory, and it is desired that the cycle properties are improved. In addition, there is a problem in that appropriate control of the oxidation reduction reactions is not satisfactorily achieved and the image remains upon display switching, that is, afterimage is caused, thus lowering the image quality.

In view of the above problems accompanying the prior art, the present invention has been made, and it is an object to provide an electrochemical display device and an electrochemical display apparatus, having preferable cycle properties and preferable display quality, and a method for producing the same.

### DISCLOSURE OF THE INVENTION

The electrochemical display device according to the present invention for attaining the above object is characterized in that it has: a first transparent electrode; an electrolyte layer containing a coloring material which colors by a coloring means and electrochemical reduction or oxidation, accompanied by deposition or dissolution; a second electrode having the electrolyte layer disposed between the first transparent electrode and the second electrode; and a third electrode independent of the first transparent electrode and the second electrode.

In the electrochemical display device according to the present invention having the above configuration, by virtue of having the third electrode independent of the first transparent electrode and the second electrode, the reaction

state during the deposition or dissolution of the coloring material is precisely detected without being affected by the first transparent electrode and second electrode. Therefore, a point in time when the deposition or electrochemical reaction satisfactorily proceeds at the electrode is precisely detected, and driving is controlled based on the result of detection, achieving precise control of the driving. In addition, the precise control of the driving prevents the reaction from proceeding to an excess extent, so that the occurrence of a side reaction due to the excess reaction is prevented.

In addition, the electrochemical display apparatus according to the present invention for attaining the above obj ect includes a plurality of electrochemical display devices arranged in a plane form, wherein each electrochemical display device has: a first transparent electrode; an electrolyte layer containing a coloring material which colors by a coloring means and electrochemical reduction or oxidation, accompanied by deposition or dissolution; a second electrode having the electrolyte layer disposed between the first transparent electrode and the second electrode; and a third electrode independent of the first transparent electrode and the second electrode.

In the electrochemical display apparatus according to the present invention having the above configuration, the electrochemical display device constituting the electrochemical display apparatus has the third electrode independent of the first transparent electrode and the second electrode, and hence the reaction state during the deposition or dissolution of the coloring material is precisely detected without being affected by the first transparent electrode and second electrode. Therefore, a point in time when the deposition or electrochemical reaction satisfactorily proceeds at the electrode is precisely detected, and driving is controlled based on the result of detection, achieving precise control of the driving. In addition, the precise control of the driving prevents the reaction from proceeding to an excess extent, so that the occurrence of a side reaction due to the excess reaction is prevented.

Further, the method for producing an electrochemical display device according to the present invention for attaining the above object has: a step for forming a first transparent electrode on a transparent support; a step for forming an electrolyte layer containing a coloring material which colors by a coloringmeans and electrochemical reduction or oxidation, accompanied by deposition or dissolution; a step for forming a second electrode having the electrolyte layer disposed between the first transparent electrode and the second electrode; and a step for forming a third electrode independent of the first transparent electrode and the second electrode.

In the above method for producing an electrochemical display device according to the present invention, the third electrode independent of the first transparent electrode and the second electrode is formed, and therefore a device is produced in which the reaction state during the deposition or dissolution of the coloring material is precisely detected without being affected by the first transparent electrode and second electrode. Thus, there is produced an electrochemical display device advantageous in that driving is precisely controlled to prevent the occurrence of a side reaction due to the excess reaction.

Furthermore, the method for producing an electrochemical display apparatus according to the present invention for attaining the above obj ect has: a step for forming a first transparent electrode on a transparent support; a step for forming an electrolyte layer containing a coloringmaterial which colors by a coloring means and electrochemical reduction or oxidation, accompanied by deposition or dissolution; a step for forming a second electrode having the electrolyte layer disposedbetween the first transparent electrode and the second electrode; and a step for forming a third electrode independent of the first transparent electrode and the second electrode.

In the above method for producing an electrochemical display apparatus according to the present invention, the third electrode independent of the first transparent electrode and the second electrode is formed when forming an electrochemical display device, and therefore a display apparatus is produced in which the reaction state during the deposition or dissolution of the coloring material is precisely detected without being affected by the first transparent electrode and second electrode. Thus, there is produced an electrochemical display apparatus advantageous in that driving is precisely controlled to prevent the occurrence of a side reaction due to the excess reaction.

## BRIEF DESCRIPTION OF THE DRAWINGS

FIG. 1 is a perspective view showing one example of the configuration of an electrodeposition type display apparatus according to the present invention.

FIG. 2 is a cross-sectional view showing one example of the configuration of an electrodeposition type display apparatus according to the present invention.

FIG. 3 is a plan view showing one example of the configuration of an electrodeposition type display apparatus according to the present invention.

FIG. 4 is a circuit diagram of an electrodeposition type display apparatus according to the present invention.

FIG. 5 is an explanatory view illustrating the process for producing an electrodeposition type display apparatus according to the present invention.

FIG. 6 is an explanatory view illustrating the process for producing an electrodeposition type display apparatus

according to the present invention.

FIG. 7 is an explanatory view illustrating the process for producing an electrodeposition type display apparatus according to the present invention.

FIG. 8 is an explanatory view illustrating the process for producing an electrodeposition type display apparatus according to the present invention.

FIG. 9 is an explanatory view illustrating the process for producing an electrodeposition type display apparatus according to the present invention.

FIG. 10 is an explanatory view illustrating the process for producing an electrodeposition type display apparatus according to the present invention.

FIG. 11 is a cross-sectional view showing another example of the configuration of an electrodeposition type display apparatus according to the present invention.

FIG. 12 is a cross-sectional view showing another example of the configuration of an electrodeposition type display apparatus according to the present invention.

FIG. 13 is a perspective view showing one example of the configuration of an electrodeposition type display device in which the third electrode is disposed on the side of the first transparent picture element electrode.

FIG. 14 is a plan view of the electrodeposition type display device shown in FIG. 13, as viewed from the top.

FIG. 15 is a perspective view showing one example of the configuration of an electrodeposition type display device in which the third electrode is disposed on the side of the second electrode.

FIG. 16 is a plan view of the electrodeposition type display device shown in FIG. 15, as viewed from the top.

FIG. 17 is a perspective view showing an example of the configuration of a conventional passive matrix-electrodeposition type display apparatus.

FIG. 18 is a plan view of the electrodeposition type display device shown in FIG. 17, as viewed from the top.

FIG. 19 is a plan view of the transparent picture element electrode substrate of the electrodeposition type display apparatus shown in FIG. 17, as viewed from the counter electrode side.

FIG. 20 is an enlarged view of the essential portion indicated by an arrow B shown in FIG. 19.

FIG. 21 is a plan view of the transparent picture element electrode substrate of a passive matrix-electrodeposition type display apparatus according to a first embodiment, as viewed from the counter electrode side.

FIG. 22 is an enlarged view of the essential portion indicated by an arrow C shown in FIG. 21.

FIG. 23 is an enlarged view of the essential portion indicated by an arrow D shown in FIG. 21.

FIG. 24 is a plan view of the transparent picture element electrode substrate of a passive matrix-electrodeposition type display apparatus according to a second embodiment, as viewed from the counter electrode side.

FIG. 25 is an enlarged view of the essential portion indicated by an arrow E shown in FIG. 24.

FIG. 26 is a plan view of the transparent picture element electrode substrate of a passive matrix-electrodeposition type display apparatus according to a third embodiment, as viewed from the counter electrode side.

FIG. 27 is an enlarged view of the essential portion indicated by an arrow F shown in FIG. 26.

FIG. 28 is an enlarged view of the essential portion indicated by an arrow G shown in FIG. 26.

FIG. 29 is a plan view of the transparent picture element electrode substrate of a passive matrix-electrodeposition type display apparatus according to a forth embodiment, as viewed from the counter electrode side.

FIG. 30 is an enlarged view of the essential portion indicated by an arrow H shown in FIG. 29.

FIG. 31 is a plan view of the transparent picture element electrode substrate of a passive matrix-electrodeposition type display apparatus according to a fifth embodiment, as viewed from the counter electrode side.

FIG. 32 is an enlarged view of the essential portion indicated by an arrow I shown in FIG. 31.

FIG. 33 is a plan view of the transparent picture element electrode substrate of a passive matrix-electrodeposition type display apparatus according to a sixth embodiment, as viewed from the counter electrode side.

FIG. 34 is an enlarged view of the essential portion indicated by an arrow J shown in FIG. 33.

FIG. 35 is a plan view of the transparent picture element electrode substrate of a passive matrix-electrodeposition type display apparatus according to a seventh embodiment, as viewed from the counter electrode side.

FIG. 36 is an enlarged view of the essential portion indicated by an arrow K shown in FIG. 35.

FIG. 37 is a plan view of the second electrode substrate of a passive matrix-electrodeposition type display apparatus in which the third electrode is disposed on the side of the second electrode, as viewed from the counter electrode side.

FIG. 38 is an enlarged view of the essential portion indicated by an arrow L shown in FIG. 37.

FIG. 39 is a plan view of the transparent picture element electrode substrate of a passive matrix-electrodeposition type display apparatus according to a eighth embodiment, as viewed from the counter electrode side.

FIG. 40 is an enlarged view of the essential portion indicated by an arrow M shown in FIG. 39.

FIG. 41 is an enlarged view of the essential portion indicated by an arrow N shown in FIG. 39.

FIG. 42 is a plan view of the transparent picture element electrode substrate of a passive matrix-electrodeposition type display apparatus according to a ninth embodiment, as viewed from the counter electrode side.

FIG. 43 is an enlarged view of the essential portion indicated by an arrow O shown in FIG. 42.

FIG. 44 is a plan view of the transparent picture element electrode substrate of a passive matrix-electrodeposition type display apparatus according to a 10th embodiment, as viewed from the counter electrode side.

FIG. 45 is an enlarged view of the essential portion indicated by an arrow P shown in FIG. 44.

FIG. 46 is an enlarged view of the essential portion indicated by an arrow Q shown in FIG. 44.

FIG. 47 is a plan view of the transparent picture element electrode substrate of a passive matrix-electrodeposition type display apparatus according to a 11th embodiment, as viewed from the counter electrode side.

FIG. 48 is an enlarged view of the essential portion indicated by an arrow R shown in FIG. 47.

FIG. 49 is a plan view of the transparent picture element electrode substrate of a passive matrix-electrodeposition type display apparatus according to a 12th embodiment, as viewed from the counter electrode side.

FIG. 50 is an enlarged view of the essential portion indicated by an arrow S shown in FIG. 49.

FIG. 51 is a cross-sectional view of a passive matrix-electrodeposition type display apparatus according to a 13th embodiment.

FIG. 52 is a cross-sectional view of an active matrix type, electrodeposition type display apparatus in which the TFT for driving and the third electrode are disposed on the side of the transparent picture element electrode.

FIG. 53 is a plan view of the electrodeposition type display apparatus shown in FIG. 52, as viewed from the top.

FIG. 54 is a plan view of the transparent picture element electrode of the electrodeposition type display apparatus shown in FIG. 52, as viewed from the counter electrode side.

FIG. 55 is an enlarged view of the essential portion indicated by an arrow T shown in FIG. 54.

FIG. 56 is a plan view of the transparent picture element electrode substrate of an active matrix type. electrodeposition type display apparatus according to a 14th embodiment, as viewed from the counter electrode side.

FIG. 57 is an enlarged view of the essential portion indicated by an arrow U shown in FIG. 56.

FIG. 58 is a plan view of the transparent picture element electrode substrate of an active matrix type, electrodeposition type display apparatus according to a 15th embodiment, as viewed from the counter electrode side.

FIG. 59 is an enlarged view of the essential portion indicated by an arrow V shown in FIG. 58.

FIG. 60 is a plan view of the transparent picture element electrode substrate of an active matrix type, electrodeposition type display apparatus according to a 16th embodiment, as viewed from the counter electrode side.

FIG. 61 is an enlarged view of the essential portion indicated by an arrow W shown in FIG. 60.

FIG. 62 is a plan view of the transparent picture element electrode substrate of an active matrix type, electrodeposition type display apparatus according to a 17th embodiment, as viewed from the counter electrode side.

FIG. 63 is an enlarged view of the essential portion indicated by an arrow X shown in FIG. 62.

FIG. 64 is a plan view of the transparent picture element electrode substrate of an active matrix type, electrodeposition type display apparatus according to a 18th embodiment, as viewed from the counter electrode side.

FIG. 65 is an enlarged view of the essential portion indicated by an arrow Y shown in FIG. 64.

FIG. 66 is a plan view of the transparent picture element electrode substrate of an active matrix type, electrodeposition type display apparatus according to a 19th embodiment, as viewed from the counter electrode side.

FIG. 67 is an enlarged view of the essential portion indicated by an arrow Z shown in FIG. 66.

FIG. 68 is a plan view of the transparent picture element electrode substrate of an active matrix type, electrodeposition type display apparatus according to a 20th embodiment, as viewed from the counter electrode side.

FIG. 69 is an enlarged view of the essential portion indicated by an arrow AA shown in FIG. 68.

FIG. 70 is a cross-sectional view of an active matrix type, electrodeposition type display apparatus in which the TFT for driving is disposed on the side of the transparent picture element electrode and the third electrode is disposed on the side of the counter electrode.

FIG. 71 is a plan view of the electrodeposition type display apparatus shown in FIG. 70, as viewed from the top.

FIG. 72 is a plan view of the second electrode substrate of an active matrix type, electrodeposition type display apparatus according to a 21st embodiment, as viewed from the counter electrode side.

FIG. 73 is a plan view of the second electrode substrate of an active matrix type, electrodeposition type display apparatus according to a 22nd embodiment, as viewed from the counter electrode side.

FIG. 74 is a plan view of the second electrode substrate of an active matrix type, electrodeposition type display apparatus according to a 23rd embodiment, as viewed from the counter electrode side.

FIG. 75 is a plan view of the second electrode substrate of an active matrix type, electrodeposition type display apparatus according to a 24th embodiment, as viewed from the counter electrode side.

FIG. 76 is an enlarged view of the essential portion indicated by an arrow AB shown in FIG. 75.

FIG. 77 is a plan view of the second electrode substrate of an active matrix type, electrodeposition type display apparatus according to a 25th embodiment, as viewed from the counter electrode side.

FIG. 78 is an enlarged view of the essential portion indicated by an arrow AC shown in FIG. 77.

FIG. 79 is a cross-sectional view of an active matrix type, electrodeposition type display apparatus according to a 26th embodiment.

FIG. 80 is a plan view of the second electrode substrate of an active matrix type, electrodeposition type display apparatus according to a 27th embodiment, as viewed from the counter electrode side.
FIG. 81 is a cross-sectional view of an active matrix type, electrodeposition type display apparatus in which the TFT for driving is disposed on the side of the second electrode and the third electrode is disposed on the side of the transparent picture element electrode.
FIG. 82 is a plan view of the transparent picture element electrode substrate of an active matrix type, electrodeposition type display apparatus according to a 28th embodiment, as viewed from the counter electrode side.
FIG. 83 is an enlarged view of the essential portion indicated by an arrow AD shown in FIG. 82.
FIG. 84 is an enlarged view of the essential portion indicated by an arrow AE shown in FIG. 83.
FIG. 85 is a plan view of the transparent picture element electrode substrate of an active matrix type, electrodeposition type display apparatus according to a 29th embodiment, as viewed from the counter electrode side.
FIG. 86 is an enlarged view of the essential portion indicated by an arrow AF shown in FIG. 85.
FIG. 87 is a plan view of the transparent picture element electrode substrate of an active matrix type, electrodeposition type display apparatus according to a 30th embodiment, as viewed from the counter electrode side.
FIG. 88 is an enlarged view of the essential portion indicated by an arrow AG shown in FIG: 87.
FIG. 89 is an enlarged view of the essential portion indicated by an arrow AH shown in FIG. 87.
FIG. 90 is a plan view of the transparent picture element electrode substrate of an active matrix type, electrodeposition type display apparatus according to a 31st embodiment, as viewed from the counter electrode side.
FIG. 91 is an enlarged view of the essential portion indicated by an arrow AI shown in FIG. 90.
FIG. 92 is a plan view of the transparent picture element electrode substrate of an active matrix type, electrodeposition type display apparatus according to a 32nd embodiment, as viewed from the counter electrode side.
FIG. 93 is an enlarged view of the essential portion indicated by an arrow AJ shown in FIG. 92.
FIG. 94 is a perspective view showing an electrode line structure having no insulating layer.
FIG. 95 is a perspective view showing an electrode line structure having an insulating layer perpendicular to the electrode line.
FIG. 96 is a perspective view showing an electrode line structure having an insulating layer patterned to expose only the picture element portion and third electrode portion.
FIG. 97 is a plan view of the display electrode of the passive matrix-electrodeposition type display apparatus in Example 1, as viewed from the counter electrode side.
FIG. 98 is an enlarged view of the essential portion indicated by an arrow AK shown in FIG. 97.
FIG. 99 is a characteristic diagram showing the results of the cyclic voltammogram measurement with respect to the electrodeposition type display apparatus in Example 1.
FIG. 100 is a characteristic diagram showing the results of the cyclic voltammogram measurement with respect to the electrodeposition type display apparatus in Example 1.
FIG. 101 is a plan view of the display electrode of the active matrix type, electrodeposition type display apparatus in Example 2, as viewed from the counter electrode side.
FIG. 102 is an enlarged view of the essential portion indicated by an arrow AL shown in FIG. 101.
FIG. 103 is a characteristic diagram showing the results of the cyclic voltammogram measurement with respect to the electrodeposition type display apparatus in Example 2.
FIG. 104 is a characteristic diagram showing the results of the cyclic voltammogram measurement with respect to the electrodeposition type display apparatus in Example 2.
FIG. 105 is a plan view of the counter electrode of the passive matrix-electrodeposition type display apparatus in Example 3, as viewed from the display electrode side.
FIG. 106 is an enlarged view of the essential portion indicated by an arrow AM shown in FIG. 105.
FIG. 107 is a characteristic diagram showing the results of the cyclic voltammogram measurement with respect to the electrodeposition type display apparatus in Example 3.
FIG. 108 is a characteristic diagram showing the results of the cyclic voltammogram measurement with respect to the electrodeposition type display apparatus in Example 3.
FIG. 109 is a characteristic diagram showing the results of the cyclic voltammogram measurement with respect to the electrodeposition type display apparatus in Example 4.

## BEST MODE FOR CARRYING OUT THE INVENTION

Hereinbelow, the present invention will be described in detail with reference to the drawings. The present invention is not limited to the following descriptions, and can be modified or changed as long as the effect aimed at by the present invention is not deviated.

The electrochemical display device according to the present invention is characterized in that it has a first transparent electrode, an electrolyte layer containing a coloring material which colors by a coloring means and electrochemical reduction or oxidation, accompanied by deposition or dissolution, a second electrode having the electrolyte layer disposed between the first transparent electrode and the second electrode, and a third electrode independent of the first transparent electrode and the second electrode. The electrochemical display apparatus according to the present invention is characterized in that it includes a plurality of the electrochemical display devices having the above configuration and being arranged in a plane form.

FIG. 1 is a perspective view showing an essential portion of an electrodeposition type display apparatus 1 which is an electrochemical display apparatus constituted by applying the present invention. FIG. 2 is a cross-sectional view of FIG. 1, taken along the line A-A', and FIG. 3 is a plan view. As shown in FIGs. 1 to 3, the electrodeposition type display apparatus 1 is characterized in that it includes a plurality of electrodeposition type display devices arranged in a plane form, each of which has a transparent picture element electrode 3 which is a first transparent electrode controlled by a TFT (thin film transistor) 4 serving as a driving device, an electrolyte layer 5 containingmetal ions and a coloring agent, a common electrode 6 as a second electrode, which is opposite to the first transparent electrode and common to the picture elements, and a third electrode 8 on the same plane as that of the transparent picture element electrode 3.

In the electrodeposition type display apparatus 1, one transparent picture element electrode 3 and one TFT 4 are combined to constitute one picture element, and the picture elements are arranged in a matrix form on the transparent support 2.

As the transparent support 2, a transparent glass substrate, such as a quartz glass plate or a white glass plate, can be used, but it is not limited to these, and examples include esters, such as polyethylene naphthalate and polyethylene terephthalate; polyamide; polycarbonate; cellulose esters, such as cellulose acetate; fluorine polymers, such as polyvinylidene fluoride and polytetrafluoroethylene-cohexafluoropropylene; polyethers, such as polyoxymethylene; polyacetal; polystyrene; polyolefins, such as polyethylene, polypropylene, and methylpentene polymer; and polyimide, such as polyimide-amide and polyetherimide. When a synthetic resin is used as the support, either a rigid substrate unlikely to be bent or a flexible structure in a film form can be made.

The transparent picture element electrode 3 is comprised of a transparent conductive film formed in a substantially rectangular or square pattern, and, as shown in FIGs. 1 to 3, the picture elements are separated from one another, and, in part of them, the TFT 4 is disposed per picture element. In the transparent picture element electrode 3, it is preferred to use a so-called ITO film included mainly of $In_2O_3$, $SnO_2$, or a mixture thereof or a thin film coated with $SnO_2$ or $In_2O_3$. Alternatively, one obtained by doping the ITO film or $SnO_2$- or $In_2O_3$-coated film with Sn or Sb may be used, or MgO, ZnO or the like can be used.

The TFT 4 formed in each picture element is selected by not shown wiring and controls the corresponding transparent picture element electrode 3. The TFT 4 is extremely effective in prevention of the occurrence of cross talk between the picture elements. The TFT 4 may be formed, for example, so as to occupy a corner of the transparent picture element electrode 3, but a structure may be employed in which the transparent picture element electrode 3 is stacked on the TFT 4. In FIGs. 1 to 3, the TFT 4 is formed so as to occupy a corner of the transparent picture element electrode 3, but the TFT 4 may be formed so as to occupy a corner of the second electrode as described below. In this case, a structure may be employed in which the second electrode is stacked on the TFT 4, and, when the TFT 4 is disposed at a corner of the second electrode, this structure is general.

To the TFT 4, specifically, are connected a gate line and a data line, and to each gate line is connected a gate electrode of each TFT 4, and one end of source/drain of each TFT 4 is connected to the data line, and another end of source/drain is electrically connected to the transparent picture element electrode 3. When the TFT 4 is provided at the second electrode, another end of source/drain is electrically connected to the second electrode. A driving device other than the TFT 4, such as a driving driver IC, may be comprised of other materials which can be formed on a transparent substrate as a matrix driving circuit used in flat display.

The electrolyte layer 5 containing metal ions can be constituted by an electrolytic solution or a polymer electrolyte. As the electrolytic solution, one containing a metal salt or a quaternary alkylammonium salt in a solvent can be used. As the solvent for the electrolytic solution, water, ethyl alcohol, isopropyl alcohol, propylene carbonate, dimethyl carbonate, ethylene carbonate, $\gamma$-butyrolactone, acetonitrile, sulfolane, dimethoxyethane, dimethylformamide, dimethyl sulfoxide, or a mixture thereof can be used.

As a matrix polymer used in the polymer electrolyte, preferred is a polymer material having a repeating unit of alkylene oxide, alkylenimine, or alkylene sulfide in a main skeleton unit or a side chain unit, or both of them; a copolymer containing a plurality of these different units; or a polymethylmethacrylate derivative;polyvinylidenefluoride; polyvinylidene chloride; polyacrylonitrile; a polycarbonate derivative; or a mixture thereof. When the electrolyte layer is comprised of a polymer electrolyte, the electrolyte layer comprised of a polymer electrolyte may be either of a single layer or a laminate structure obtained by stacking a plurality of polymer electrolyte layers.

The above-mentioned matrix polymer can be used in the form of polymer swollen with water or an organic solvent. Especially when a high response speed or the like is required, the addition of the plasticizer facilitates movement of the ions contained, and therefore it is preferred that water or an organic solvent is added to the matrix polymer.

When hydrophilicity is required according to the properties of the matrix polymer and the desired electrochemical reaction, it is preferred that water, ethyl alcohol, isopropyl alcohol, or a mixture thereof is added, and, when hydrophobicity is required, it is preferred that propylene carbonate, dimethyl carbonate, ethylene carbonate, γ-butyrolactone, acetonitrile, sulfolane, dimethoxyethane, ethyl alcohol, isopropyl alcohol, dimethylformamide, dimethyl sulfoxide, dimethylacetamide, n-methylpyrrolidone, or a mixture thereof is added.

In the electrodeposition type display apparatus 1 according to the present invention, the electrolyte layer 5 contains metal ions as a coloring material which colors by electrochemical reduction or oxidation, accompanied by deposition or dissolution. The electrochemical deposition or dissolution reaction of the metal ions causes coloring or decoloring to achieve display. In other words, a main principle is such that so-called plating and a dissolution reaction are advanced reversibly. With respect to the metal ions capable of coloring or decoloring by electrochemical deposition or dissolution, there is no particular limitation, and examples include ions of bismuth, copper, silver, sodium, lithium, iron, chromium, nickel, or cadmium and ions comprised of a combination thereof. Of these, especially preferred metal ions are bismuth and silver. The reason for this resides in that bismuth or silver can facilitate the reversible reaction, and exhibits high degree of color change in the deposition.

When a salt containing an ion species different from the metal ion species to be deposited or dissolved is added as a supporting electrolyte salt to the electrolyte layer 5, the electrochemical deposition or dissolution reaction can be carried out more effectively and stably. Examples of supporting electrolytes include lithium salts, such as LiCl, LiBr, LiI, $LiBF_4$, $LiClO_4$, $LiPF_6$, and $LiCF_3SO_3$; potassium salts, such as KCl, KI, and KBr; sodium salts, such as NaCl, NaI, and NaBr; and quaternary tetraalkylammonium salts, such as tetraethylammonium borofluoride, tetraethylammonium perchlorate, tetrabutylammonium borofluoride, tetrabutylammonium perchlorate, and tetrabutylammonium halides. There may be a variation in the length of alkyl chains in the above quaternary ammonium salts.

As a coloring means for improving the contrast, the electrolyte layer 5 contains a coloring agent, such as an inorganic pigment or an organic pigment. When the color of the metal ions is black as mentioned above, a white material having high opacifying properties is introduced as a background color. As this material, for example, white particles for coloring are used, and, as the white particles for coloring, titanium dioxide, calcium carbonate, silica, magnesium oxide, or aluminum oxide can be used. Alternatively, a dye for coloring can be used.

When inorganic particles are used as a coloring agent, the amount of the coloring agent added is preferably 1 to 20 wt%, more preferably 1 to 10 wt%, further preferably 5 to 10 wt%. In this case, when the amount of the coloring agent added is too small, desired coloring cannot be obtained, and, conversely, when the amount of the coloring agent added is too large, the ion content is lowered and further the conductivity of the electrolyte is lowered. Accordingly, by using the coloring agent in the above amount, preferable coloring conditions can be realized without causing the above problems.

When inorganic particles as a coloring agent are mixed into the electrolyte layer 5 comprised of a polymer electrolyte layer, the thickness of the electrolyte layer is preferably 20 to 200 μm, more preferably 50 to 150 μm, further preferably 70 to 150 μm. When the electrolyte layer has a smaller thickness, the resistance between the electrodes is lowered, leading to advantages in that the time required for coloring or decoloring becomes shorter and the power consumption is reduced. However, when the thickness of the electrolyte layer is 20 μm or less, the mechanical strength is disadvantageously lowered to cause a pinhole or crack. Further, when the thickness of the electrolyte layer is too small, the content of the white particles is lowered, so that the whiteness (optical density) is not satisfactory.

On the other hand, when a dye is used as the coloring means, the amount of the dye added may be as small as about 10 wt%. The reason for this resides in that the coloring efficiency of the dye is considerably high, as compared to that of inorganic particles. Therefore, a dye which is electrochemically stable can exhibit a satisfactory contrast even in a small amount. Generally, as the dye, it is preferred to use an oil-soluble dye.

When the electrolyte layer 5 is comprised of a polymer electrolyte, the electrolyte layer 5 comprised of a polymer electrolyte may have a laminate structure obtained by stacking a plurality of polymer electrolyte layers, and, in this case, by providing the coloring means only in part of the layers, the above-mentioned effect can be obtained.

For reversibly and efficiently advancing the electrochemical reactions, especially deposition and dissolution of a metal, it is preferred that at least one additive selected from a growth inhibitor, a stress relaxing agent, a brightener, a complexing agent, and a reducing agent is added to the electrolyte layer 5. As the additive, an organic compound having a group having an oxygen atom or a sulfur atom is preferred, and, for example, at least one member selected from the group comprised of thiourea, 1-allyl-2-thiourea, mercaptobenzimidazole, coumarin, phthalic acid, succinic acid, salicylic acid, glycolic acid, dimethylamineborane (DMAB), trimethylamineborane (TMAB), tartaric acid, oxalic acid, and D-glucono-1, 5-lactone can be added. Particularly, in the present invention, when adding mercaptobenzimidazole according to a mercaptoalkylimidazole represented by the chemical formula 1 below, not only be the reversibility improved, but also preferable effects can be advantageously obtained in long-term storage properties and high-temperature storage properties.

Chemical formula 1

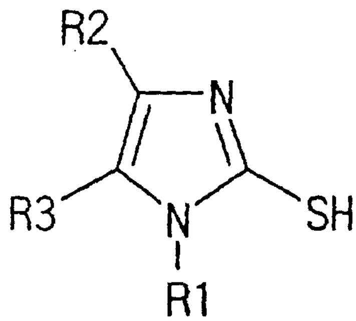

where each of R1, R2, and R3 is a hydrogen atom or alkyl substituent represented by $C_nH_{2+1}$ (wherein n is an integer of 0 or more).

In the electrodeposition type display apparatus of a system having the above configuration, a side reaction other than the predetermined reactions may be caused during the electrochemical reactions. For example, when the electrolyte layer 5 contains a salt containing a halide, the halide in the form of ions is oxidized depending on the potential according to the reaction represented by the chemical formula 2 below, thus causing coloring other than the desired coloring.

Chemical formula 2

$$I_2 + 2e^- \Leftrightarrow 2I^- \text{ (0.536V)}$$

$$Br_2 + 2e^- \Leftrightarrow 2Br^- \text{ (1.065V)}$$

$$Cl_2 + 2e^- \Leftrightarrow 2Cl^- \text{ (1.360V)}$$

(The values indicate standard electrode potentials in an aqueous solution.)

Therefore, for preventing the occurrence of unnecessary coloring, it is required to suppress the above side reaction and reduce the halide oxidized. In this case, as a reducing agent, a general reducing agent can be used and added as an additive to the electrolyte layer 5. As the reducing agent, for example, an ascorbic acid compound, a trialkylalcoholamine having a general formula represented by the chemical formula 3 below, or the like is preferred.

Chemical formula 3

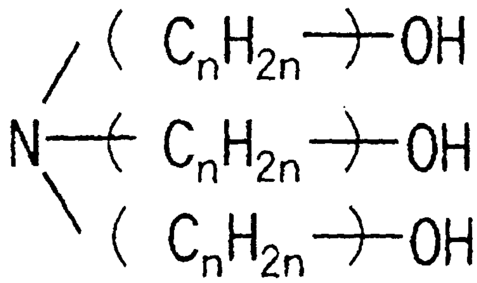

Particularly, in the present invention, when triethanolamine represented by the chemical formula 4 below which is a trialkylalcoholamine species is added to the electrolyte layer 5, preferable effects can be advantageously obtained in long-term storage properties and high-temperature storage properties.

When a reduction reaction is caused due to a side reaction other than the predetermined reaction, an oxidizing agent is added. Therefore, it is preferred that the electrolyte layer contains a reducing agent or an oxidizing agent for suppressing a side reaction which is possibly caused in any of the first transparent electrode and the second electrode mainly due to an anion species during the deposition of the coloring material.

Chemical formula 4

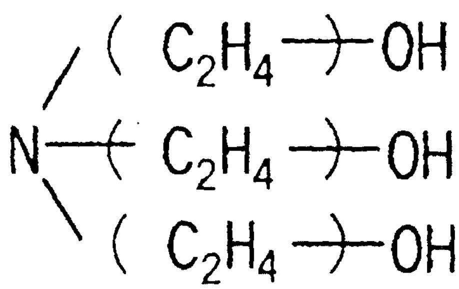

As the second electrode disposed opposite to the first transparent electrode, a common electrode 6 is formed. The common electrode 6 may be comprised of any metal which is electrochemically stable, but preferred are platinum, chromium, aluminum, cobalt, palladium, bismuth, and silver, and it can be prepared by forming a film comprised of a good conductor, such as a metallic thin film, on the support 7. Further, when it is possible to preliminarily or successively, satisfactorily make up for the metal used in the main reaction, carbon can be used in the common electrode. The use of carbon can lower the cost for the electrode. As an example of a method for carrying carbon on the electrode, there can be mentioned a method in which an ink is formed from carbon using a resin and printed on the surface of the substrate.

In the system in which bismuth or silver is deposited or dissolved, when the same metal species as that to be deposited or dissolved is usedas the second electrode, electrochemically stable electrode reactions can be realized.

The support 7 is not necessarily transparent, and a substrate or a film, which can surely support the common electrode 6 and the electrolyte layer 5, can be used. For example, a quartz glass plate, a white glass plate, a ceramic substrate, a paper substrate, a wooden substrate, or the like can be used, but the support is not limited to these, and, as a synthetic resin substrate, ester, such as polyethylene naphthalate or polyethylene terephthalate; polyamide; polycarbonate; cellulose ester, such as cellulose acetate; a fluorine polymer, such as polyvinylidene fluoride or polytetrafluoroethylene-cohexafluoropropylene; polyether, such as polyoxymethylene; polyacetal; polystyrene; polyolefin, such as polyethylene, polypropylene, or methylpentene polymer; or polyimide, such as polyimide-amide or polyetherimide can be used.

When the above synthetic resin is used as the support 7, either a rigid substrate unlikely to be bent or a flexible structure in a film form can be made. When the second electrode is integrally constituted as the common electrode and has satisfactory rigidity, there is no need to form the support 7.

For disposing the first transparent electrode opposite to the second electrode as shown in FIGs. 1 to 3, sealing resin portions 9 for holding both the supports 2, 7 are formed on the periphery. The sealing resin portions 9 surely hold the both supports 2, 7, and the transparent picture element electrodes 3, TFTs 4, electrolyte layer 5, and common electrode 6 disposed between the supports.

The third electrode 8 is formed as a member which is independent of and electrically insulated from the transparent picture element electrode 3 and the common electrode 6. The third electrode 8, which is formed as a member independent of and electrically insulated from the transparent picture element electrode 3 and the common electrode 6, can precisely detect the state of the reaction which proceeds during the deposition or dissolution of the coloring material without being affected by the transparent picture element electrode 3 and common electrode 6.

As a material for the third electrode 8, a stable metal material which is not involved in the reaction at all and is not dissolved in the reaction medium is selected and, for example, the same material as that for the common electrode 6, such as platinum, chromium, aluminum, cobalt, palladium, or silver, can be selected.

FIG. 4 is a circuit diagram of the electrodeposition type display apparatus 1. Picture elements comprised of the TFT 4 and the transparent picture element electrode 3 are arranged in a matrix form, and a common electrode is on the counter electrode side of a capacitor. Data line driving circuits 12, 12a and gate line driving circuit 13 for selecting the individual picture elements are provided, and predetermined data line 15 and gate line 14 are individually selected by a signal from a signal control portion 11. The third electrode 8 is connected from the signal control portion 11, and the potential of the picture element portion can be monitored by a signal from the third electrode 8, so that the state of the reaction which proceeds during the deposition or dissolution of the metal can be precisely detected without being affected by the transparent picture element electrode 3 and common electrode 6.

In the electrodeposition type display apparatus 1 according to the present invention having the above-described configuration, matrix driving using the TFT 4 is possible. In addition, by utilizing the metal ions and coloring agent contained in the electrolyte layer 5, there can be realized an electrodeposition type display apparatus which is advantageous not only in that it enables display with preferable contrast and high black density, but also in that it exhibits preferable display quality and preferable visibility.

Further, in the electrodeposition type display apparatus according to the present invention having the above configuration, electricity is conducted between the transparent picture element electrode 3 as the first transparent electrode and the second electrode 6 to allow ions in the electrolyte layer disposed between the transparent picture element electrode 3 and the second electrode 6 to move, so that an electrochemical reaction proceeds to cause deposition or dissolution of the metal, thus changing a color and coloring. The electrolyte layer 5 contains a coloring agent as the coloring means, and hence can improve the contrast when the coloring material changes in color.

In an electrodeposition type display apparatus having a structure including only the first transparent electrode and the second electrode and having no third electrode, for example, when being controlled by a voltage waveform, not only the potential of the first transparent electrode but also the potential of the second electrode vary due to the electrochemical reaction, so that the potential difference between the two electrodes is controlled by an external voltage waveform in a state such that both the potentials are varying. When such controlling is conducted, the inherent potential of the first transparent electrode cannot be known, making desired controlling difficult. This means that the coloring material cannot be controlled to be in a desired dissolved or deposited state. Therefore, in systems other than the system in which there is almost no variation in the potential of the second electrode, control of the potential difference between the two electrodes by an external voltage waveform is poor in reliability.

By contrast, in the electrodeposition type display apparatus 1, when display is achieved by conducting electricity between the transparent picture element electrode 3 as the first transparent electrode and the common electrode 6 to change a color, the third electrode 8 as a reference electrode, which is insulated from and independent of the transparent picture element electrode 3 and the common electrode 6, is not directly involved in the electrochemical reaction.

Thus, the state of the reaction which proceeds during the deposition or dissolution of the coloring material can be precisely detected without being affected by the transparent picture element electrode 3 and common electrode 6. In other words, using as a reference the potential of the third electrode 8 which does not vary, the reaction state during the deposition or dissolution of the coloring material can be detected or swept as a potential, thus making it possible to precisely detect a point in time when deposition or electrochemical reaction satisfactorily proceeds at the electrode. Then, based on the result of detection, driving, i.e., conduction between the transparent picture element electrode 3 and the second electrode 6 is controlled, enabling control of the electrochemical reaction with high reliability.

This means that the coloring material can be controlled to be in a desired dissolved or deposited state, so that control of coloring or decoloring of the coloring material, namely, control of display can be appropriately conducted,

thus enabling control of display with high reliability. Accordingly, the occurrence of a phenomenon in which the color remains upon decoloring, i.e., so-called afterimage can be prevented, thus making it possible to constitute an electrodeposition type display apparatus having preferable visibility. Therefore, in the electrodeposition type display apparatus 1, an electrodeposition type display apparatus having preferable display quality is realized.

When appropriate control of driving is not made in the electrodeposition type display apparatus, the reaction proceeds to an excess extent to cause a side reaction, leading to deterioration of the cycle properties.

However, in the electrodeposition type display apparatus 1, as mentioned above, the third electrode 8 is formed as a member which is independent of and electrically insulated from the transparent picture element electrode 3 and the common electrode 6, making it possible to precisely detect a point in time when deposition or electrochemical reaction satisfactorily proceeds at the electrode. Then, based on the result of detection, driving, i.e., conduction between the transparent picture element electrode 3 and the second electrode 6 is controlled to prevent the reaction from further proceeding. That is, this control can prevent a side reaction due to the excess deposition or dissolution reaction of the coloring material, so that deterioration of the cycle properties due to a side reaction other than the predetermined reactions can be prevented, thus remarkably improving the cycle properties. Therefore, in the electrodeposition type display apparatus 1, the use of the third electrode 8 has realized an electrodeposition type display apparatus having preferable cycle properties.

Next, a method for producing the above-described electrodeposition type display apparatus 1 is described. In the production of the electrodeposition type display apparatus 1, first, as shown in FIG. 5, on a transparent support 2 comprised of a glass substrate or the like, transparent picture element electrodes 3 comprised of an ITO film and TFTs 4 are formed. The ITO film can be formed by a conventionally known method, such as vapor deposition or sputtering, and the TFT 4 can be formed using a known technique for fabrication of semiconductor. In this case, prior to formation of the transparent picture element electrodes 3, the transparent support 2 may be subjected to treatment for improving the adhesion. The transparent picture element electrode 3 and the TFT 4 are formed per picture element, and the picture elements are arranged in a matrix form on the transparent support 2. Between the picture elements are formed third electrodes 8 comprised of silver by a conventionally known method, such as vapor deposition, sputtering, or plating. In the subsequent step, lead portions (not shown) which can be connected to driving circuits are formed. In the case of apassivematrix structure, a desired thin film is formed on the entire surface, and then patterned by a known resist technique to form a desired stripe form.

Then, an electrolyte layer 5 is formed on the transparent support 2. When, for example, a polymer electrolyte layer is formed as the electrolyte layer 5, first, a synthetic resin as a matrix polymer for the polymer solid electrolyte, a salt constituting the electrolyte and containing a metal species to be deposited or dissolved, and a supporting electrolyte salt are mixed together, and white particles as a coloring agent and a plasticizer are added thereto and dispersed.

Separately, as shown in FIG. 6, as a preliminary step for application of the polymer electrolyte material, the transparent support 2 is subjected to UV ozone treatment for cleaning and surface modification.

Then, as shown in FIG. 7, the polymer electrolyte material is applied onto the transparent support 2 after being subjected to UV ozone treatment to form the electrolyte layer 5. As the salt constituting the electrolyte and containing a metal species to be deposited or dissolved, for example, a silver salt or a bismuth salt can be used, and, as the supporting electrolyte salt, a material, such as a lithium salt, a potassium salt, a sodium salt, or a tetraalkylammonium salt, can be used. As the coloring agent, for example, titanium oxide or aluminum oxide can be used.

Then, as shown in FIG. 8, on a support 7 comprised of, for example, polyethylene terephthalate, a common electrode 6 comprised of a palladium film having a desired thickness is formed. The common electrode 6 is formedby a conventionally knownmethod, such as vapor deposition, sputtering, or plating, on the support 7 which has been subjected to treatment for improving the adhesion.

Then, as shown in FIG. 9, the support 7 is stacked on the electrolyte layer 5 comprised of a polymer electrolyte so that the common electrode 6 faces the electrolyte layer 5. Then, as shown in FIG. 10, sealing resin portions 9 are formed at the edges of the resultant laminate using a general-purpose sealing agent to seal the display portion, thus producing the electrodeposition type display apparatus 1.

Then, the matrix polymer in the polymer electrolyte having high fluidity may be permitted to undergo a cross-linking reaction by a heating or ultraviolet irradiation means to make gelation. In this case, a cross-linking agent or a photosensitizer can be used to efficiently promote the gelation.

Alternatively, before forming the electrolyte layer 5 comprised of a polymer electrolyte, the transparent support 2 and the support 7 may be stacked in a state such that a desired gap between the electrodes is formed using a partition or the like to secure an injection inlet for a polymer electrolyte solution having fluidity. Then, as conducted in the process for liquid crystal, a polymer electrolyte solution having fluidity is injected by an injection method utilizing capillary phenomena, and then the injection inlet is sealed up, thus producing the electrodeposition type display apparatus 1. By using the injection method, an electrolytic solution containing no resin and a solution containing a coloring agent are injected, thus constituting the electrodeposition type display apparatus 1.

For keeping the gap between the transparent support 2 and the support 7 stacked to face each other constant

in the in-plane direction, a frame-form gap-forming member comprised of a resin, an inorganic material or the like may be provided at the outer periphery portion of the transparent support 2 and the support 7, or fine spheres used in a liquid crystal device or the like can be dispersed in the polymer electrolyte to form a desired gap. Alternatively, nonwoven fabric or a porous film containing a polymer electrolyte can be used as a gap-forming member.

The active matrix type in which the third electrode 8 is disposed on the first transparent electrode side, i.e., transparent picture element electrode side is described above, but the present invention is not limited to this type. The above-described electrochemical display device is roughly classified into an active matrix type and a passive matrix type (simple matrix type). The active matrix type includes a type having the TFT incorporated to the side of the first transparent electrode as a working electrode as mentioned above, and a type having the TFT incorporated to the side of the second electrode as a counter electrode.

In the active matrix type, considering the opening ratio of the display picture element, the latter type having the TFT incorporated to the side of the second electrode is preferred since the TFT does not reduce the opening area. For further utilizing the effectiveness of the third electrode as a reference electrode disposed on the side of the first transparent electrode, it is preferred that the third electrode is close to the working electrode, and, in this case, the former type having the TFT incorporated to the side of the first transparent electrode is preferred. Further, the structure for the third electrode includes a structure in which the third electrode is disposed on the side of the first transparent electrode and a structure in which the third electrode is disposed on the side of the second electrode as a counter electrode.

FIG. 11 is a cross-sectional view showing one example of the configuration of an electrodeposition type display device of the latter type having the TFT incorporated to the side of the second electrode as a counter electrode. The electrodeposition type display device is configured by having second electrodes 25, which are formed on a support 27 and controlled by TFTs 26 serving as driving devices, an electrolyte layer 24, first transparent electrodes 22 opposite to the second electrodes 25, and third electrodes 23. The first transparent electrodes 22 are formed in a stripe form on a transparent support 21, and the third electrode 23 is disposed on the transparent support 21 per stripe of the first transparent electrode 22. The electrolyte layer 24 is comprised of an electrolytic solution or a polymer electrolyte, which contain metal ions and a coloring agent, and the gap portion between the first transparent electrodes 22 and the second electrodes 25 is filled with the electrolyte layer.

The third electrode can be formed by weaving a thin metal wire into a mesh form, and a structure can be employed in which the thus formed third electrode is sandwiched with nonwoven fabric and disposed between the first transparent electrodes and the second electrodes so as to prevent the occurrence of short-circuiting between the third electrode and the other electrodes.

FIG. 12 is a cross-sectional view showing one example of the configuration of the electrodeposition type display device shown in FIG. 1 having a third electrode formed by weaving a thin metal wire into a mesh form. The electrodeposition type displaydevice is configured by having transparent picture element electrodes 3 as first transparent electrodes controlledby TFTs 4 serving as driving devices, an electrolyte layer 5, a common electrode 6 as a second electrode, which is opposite to the first transparent electrodes and common to the picture elements, and a third electrode 31. The third electrode 31 is formed by weaving a thin metal wire into a mesh form, and sandwiched with nonwoven fabric 32 and then disposed between the transparent picture element electrodes 3 and the common electrode 6 so as to prevent the occurrence of short-circuiting between the third electrode and the other electrodes. The electrolyte layer 5 is comprised of an electrolytic solution or a polymer electrolyte, which contain metal ions and a coloring agent, and the gap portion between the first transparent picture element electrode 3 and the common electrode 6 is filled with the electrolyte layer.

On the other hand, the passive matrix type includes a type having the third electrode disposed on the side of the first transparent electrode as a working electrode and a type having the third electrode disposed on the side of the second electrode as a counter electrode.

FIG. 13 is a perspective view showing one example of the configuration of an electrodeposition type display device of the former type having the third electrode disposed on the side of the first transparent electrode. The electrodeposition type display device is configured by having transparent picture element electrodes 42 formed in a stripe form on a transparent support 41, an electrolyte layer 46, second electrodes 45, which are formed in a stripe form on a support 44 facing the transparent picture element electrodes 42, and third electrodes 43. As shown in FIG. 14, the transparent picture element electrodes 42 and the second electrodes 45 are arranged so that the individual stripe structures cross at a right angle, and the crossing portions of the stripe structures correspond to display active regions. The third electrodes 43 are arranged in a stripe form in the same number as that of the stripes of the transparent picture element electrodes 42 on the same substrate on which the transparent picture element electrodes 42 are formed in a stripe form, namely, on the transparent support 41 so that the stripes of the third electrodes 43 are parallel to those of the transparent picture element electrodes 42. The electrolyte layer 46 is comprised of an electrolytic solution or a polymer electrolyte, which contain metal ions and a coloring agent, and the gap portion between the first transparent picture element electrodes 42 and the second electrodes 45 is filled with the electrolyte layer 46.

FIG. 15 is a perspective view showing one example of the configuration of an electrodeposition type display device of the latter type having the third electrode disposed on the side of the second electrode. The electrodeposition type display device is configured by having transparent picture element electrodes 42 formed in a stripe form on a transparent support 41, an electrolyte layer 46, second electrodes 45 formed in a stripe form on a support 44, and third electrodes 43. As shown in FIG. 16, the transparent picture element electrodes 42 and the second electrodes 45 are arranged so that the individual stripe structures cross at a right angle, and the crossing portions of the stripe structures correspond to display active regions. The third electrodes 43 are arranged in a stripe form in the same number as that of the stripes of the second electrodes 45 on the same substrate on which the second electrodes 45 are formed in a stripe form, namely, on the support 44 so that the stripes of the third electrodes 43 are parallel to those of the second electrodes 45. The electrolyte layer 46 is comprised of an electrolytic solution or a polymer electrolyte, which contain metal ions and a coloring agent, and the gap portion between the first transparent picture element electrodes 42 and the second electrodes 45 is filled with the electrolyte layer 46.

Hereinbelow, examples of arrangement of the third electrode in the electrodeposition type display device according to the present invention are shown as specific embodiments of the present invention.

First, examples of the configuration of a passive matrix-electrodeposition type display device in which the third electrode is arranged on the side of the transparent picture element electrode are described. In the following first to seventh embodiments, the basic configuration of the electrodeposition type display device is the configuration of a conventional standard passive matrix-electrodeposition type display device in which no third electrode is provided, i. e., configuration shown in FIG. 17 and FIG. 18. Specifically, the device includes transparent picture element electrodes 52 formed in a stripe form on a transparent support 51, an electrolyte layer 55, and second electrodes 54 which are formed in a stripe form on a support 53 facing the transparent picture element electrodes 52. As shown in FIG. 19, both ends of the transparent picture element electrodes 52 are connected to transparent picture element electrode withdrawal portions 56 and transparent picture element electrode withdrawal portions 57. As shown in FIG. 20, on the transparent picture element electrodes 52, insulating layers 58 are formed so as to be perpendicular to the transparent picture element electrodes 52. FIG. 19 is a plan view of the transparent support 51 as viewed from the counter electrode side, and FIG. 20 is an enlarged view of the essential portion indicated by an arrow B shown in FIG. 19. Hereinbelow, an explanation is made with reference to the plan view of the transparent support 51 on which the transparent picture element electrodes 52 are formed (hereinafter, frequently referred to as "transparent picture element electrode substrate"), as viewed from the counter electrode side, and the enlarged view of the essential portion.

[ First embodiment]

The first embodiment is an example of the arrangement in which a third electrode 59 in a line form is arranged on the transparent picture element electrode substrate so as to surround the whole of the effective picture elements on the side of the transparent picture element electrodes 52 as shown in FIG. 21. The third electrode 59 is connected to third electrode withdrawal portions 60, 61, 62, 63. As shown in FIG. 22, on the transparent picture element electrodes 52, insulating layers 58 are formed so as to be perpendicular to the transparent picture element electrodes 52. At the portion on which the third electrode 59 is disposed, as shown in FIG. 23, the third electrode 59 is formed on the insulating layer 58. When the third electrode is arranged so as to surround the whole of the effective picture elements as described above, the opening ratio can be increased, making it possible to constitute an electrodeposition type display device having preferable light withdrawal efficiency.

[ Second embodiment]

The second embodiment is an example of the arrangement in which top and bottom third electrodes 59 in a line form are arranged, on the transparent picture element electrode substrate, in the direction parallel to the stripe structure of the transparent picture element electrodes 52 so that the whole of the effective picture elements are disposed between the two third electrodes as shown in FIG. 24. The top and bottom third electrodes 59 are connected, respectively, to third electrode withdrawal portions 60, 61 and third electrode withdrawal portions 62, 63. As shown in FIG. 25, on the transparent picture element electrodes 52, insulating layers 58 are formed so as to be perpendicular to the transparent picture element electrodes 52. When the top and bottom third electrodes are arranged so that the whole of the effective picture elements are disposed between the two third electrodes as described above, the opening ratio can be increased, making it possible to constitute an electrodeposition type display device having preferable light withdrawal efficiency.

[Third embodiment]

The third embodiment is an example of the arrangement in which right and left third electrodes 59 in a line

form are arranged, on the transparent picture element electrode substrate, in the direction perpendicular to the stripe structure of the transparent picture element electrodes 52 so that the whole of the effective picture elements are disposed between the right and left third electrodes as shown in FIG. 26. The right and left third electrodes 59 are connected, respectively, to third electrode withdrawal portions 60, 63 and third electrode withdrawal portions 61, 62. As shown in FIG. 27, on the transparent picture element electrodes 52, insulating layers 58 are formed so as to be perpendicular to the transparent picture element electrodes 52. At the portion on which the third electrode 59 is disposed, as shown in FIG. 28, the third electrode 59 is formed on the insulating layer 58. When the two third electrodes are arranged so that the whole of the effective picture elements are disposed between the right and left third electrodes as described above, the opening ratio can be increased, making it possible to constitute an electrodeposition type display device having preferable light withdrawal efficiency.

[ Forth embodiment]

The forth embodiment is an example of the arrangement in which third electrodes 59 in a line form in the same number as that of the stripes of the transparent picture element electrodes 52 are formed, on the transparent picture element electrode substrate, in the direction parallel to the stripe structure of the transparent picture element electrodes 52 between the stripes of the transparent picture element electrodes 52 as shown in FIG. 29. The third electrodes 59 are individually connected to third electrode withdrawal portions 60 and third electrode withdrawal portions 61. As shown in FIG. 30, on the transparent picture element electrodes 52 and the third electrodes 59, insulating layers 58 are formed so as to be perpendicular to the transparent picture element electrodes 52 and third electrodes 59.

[ Fifth embodiment]

The fifth embodiment is an example of the arrangement in which third electrodes 59 in a line form are formed, on the transparent picture element electrode substrate, in the direction parallel to the stripe structure of the transparent picture element electrodes 52 at intervals of the predetermined number of the stripes of the transparent picture element electrodes 52 as shown in FIG. 31. The third electrodes 59 are individually connected to third electrode withdrawal portions 60 and third electrode withdrawal portions 61. As shown in FIG. 32, on the transparent picture element electrodes 52 and the third electrodes 59, insulating layers 58 are formed so as to be perpendicular to the transparent picture element electrodes 52 and third electrodes 59.

[Sixth embodiment]

The sixth embodiment is an example of the arrangement in which third electrodes 59 in a line form are formed, on the transparent picture element electrode substrate, in the direction perpendicular to the stripe structure of the transparent picture element electrodes 52 between the picture elements in the lengthwise direction as shown in FIG. 33. The third electrodes 59 are individually connected to third electrode withdrawal portions 60 and third electrode withdrawal portions 61. As shown in FIG. 34, the third electrodes 59 in the same number as that of insulating layers 58 are formed on the insulating layers 58 formed in the direction perpendicular to the stripe structure of the transparent picture element electrodes 52.

[ Seventh embodiment]

The seventh embodiment is an example of the arrangement in which third electrodes 59 in a line form are formed, on the transparent picture element electrode substrate, in the direction perpendicular to the stripe structure of the transparent picture element electrodes 52 between the picture elements in the lengthwise direction at predetermined intervals as shown in FIG. 35. The third electrodes 59 are individually connected to third electrode withdrawal portions 60 and third electrode withdrawal portions 61. As shown in FIG. 36, the third electrodes 59 are formed on insulating layers 58 formed in the direction perpendicular to the stripe structure of the transparent picture element electrodes 52 at intervals of the predetermined number of the insulating layers 58.

Next, examples of the configuration of a passive matrix-electrodeposition type display device in which the third electrode is arranged on the side of the second electrode are described. In the following eighth to twelfth embodiments, the basic configuration of the electrodeposition type display device is the same as that in the first to seventh embodiments, i.e., configuration shown in FIG. 17 and FIG. 18. Specifically, the device includes transparent picture element electrodes 52 formed in a stripe form on a transparent support 51, an electrolyte layer 55, and second electrodes 54 which are formed in a stripe form on a support 53 facing the transparent picture element electrodes. As shown in FIG. 37, both ends of the second electrodes 54 are connected to second electrode withdrawal portions 71, 72. As shown in FIG. 38, on the second electrodes 54, insulating layers 73 are formed so as to be perpendicular to

the second electrodes 54. FIG. 37 is a plan view of the support 53 as viewed from the counter electrode side, and FIG. 38 is an enlarged view of the essential portion indicated by an arrow L shown in FIG. 37. Hereinbelow, an explanation is made with reference to the plan view of the support 53 on which the second electrodes are formed (hereinafter, frequently referred to as "second electrode substrate"), as viewed from the counter electrode side, and the enlarged view of the essential portion.

[Eighth embodiment]

The eighth embodiment is an example of the arrangement in which a third electrode 74 in a line form is arranged on the second electrode substrate so as to surround the whole of the effective picture elements on the side of the second electrodes 54 as shown in FIG. 39. The third electrode 74 is connected to third electrode withdrawal portions 75, 76, 77, 78. As shown in FIG. 40, on the second electrodes 54, insulating layers 73 are formed so as to be perpendicular to the second electrodes 54. At the portion on which the third electrode 74 is disposed, as shown in FIG. 41, the third electrode 74 is formed on the insulating layer 73.

[Ninth embodiment]

The ninth embodiment is an example of the arrangement in which right and left third electrodes 74 in a line form are formed, on the second electrode substrate, in the direction parallel to the stripe structure of the second electrodes 54 so that the whole of the effective picture elements are disposed between the right and left third electrodes 74 as shown in FIG. 42. The right and left third electrodes 74 are connected, respectively, to third electrode withdrawal portions 75, 78 and third electrode withdrawal portions 76, 77. As shown in FIG. 43, on the second electrodes 54, insulating layers 73 are formed so as to be perpendicular to the second electrodes 54.

[ 10th embodiment]

The 10th embodiment is an example of the arrangement in which top and bottom third electrodes 74 in a line form are arranged, on the second electrode substrate, in the direction perpendicular to the stripe structure of the second electrodes 54 so that the whole of the effective picture elements are disposed between the two third electrodes as shown in FIG. 44. The top and bottom third electrodes 74 are connected, respectively, to third electrode withdrawal portions 75, 76 and third electrode withdrawal portions 77, 78. As shown in FIG. 45, on the second electrodes 54, insulating layers 73 are formed so as to be perpendicular to the second electrodes 54. At the portion on which the third electrode 74 is disposed, as shown in FIG. 46, the third electrode 74 is formed on the insulating layer 73.

[ 11th embodiment]

The 11th embodiment is an example of the arrangement in which third electrodes 74 in a line form in the same number as that of the stripes of the second electrodes 54 are formed, on the second electrode substrate, in the direction parallel to the stripe structure of the second electrodes 54 between the stripes of the second electrodes 54 as shown in FIG. 47. The third electrodes 74 are individually connected to third electrode withdrawal portions 75 and third electrode withdrawal portions 76. As shown in FIG. 48, on the second electrodes 54 and the third electrodes 74, insulating layers 73 are formed so as to be perpendicular to the second electrodes 54 and third electrodes 74.

[ 12th embodiment]

The 12th embodiment is an example of the arrangement in which third electrodes 74 in a line form are formed, on the second electrode substrate, in the direction parallel to the stripe structure of the second electrodes 54 at intervals of the predetermined number of the stripes of the second electrodes 54 as shown in FIG. 49. The third electrodes 74 are individually connected to third electrode withdrawal portions 75 and third electrode withdrawal portions 76. As shown in FIG. 50, on the second electrodes 54 and the third electrodes 74, insulating layers 73 are formed so as to be perpendicular to the second electrodes 54 and third electrodes 74.
Next, an example of the configuration of a passive matrix-electrodeposition type display device in which the third electrode is disposed between the first transparent electrode and the second electrode is described.

[13th embodiment]

In the 13th embodiment, as shown in FIG. 51, the device includes transparent picture element electrodes 52 formed in a stripe form on a transparent support 51, an electrolyte layer 55, and second electrodes 54 which are formed

in a stripe form on a support 53 facing the transparent picture element electrodes. A third electrode 81 is disposed between the transparent picture element electrodes 52 and the second electrodes 54. The first transparent electrode side, i.e., transparent picture element electrode 52 side has the configuration shown in FIG. 19 and FIG. 20, and the second electrode side has the configuration shown in FIG. 37 and FIG. 38. As the third electrode 81, a twill type silver mesh having about 30-μm one side of the mesh structure is used, and the third electrode 81 is sandwiched with nonwoven fabric 82 and disposed between the transparent picture element electrodes 52 and the second electrodes 54 so as to prevent the occurrence of short-circuiting between the third electrode and the other electrodes.

Next, examples of the configuration of an active matrix type, electrodeposition type display device in which the TFT for driving and further the third electrode are arranged on the side of the transparent picture element electrode are described. In the following 14th to 20th embodiments, the basic configuration of the electrodeposition type display device is the configuration of a conventional standard active matrix type, electrodeposition type display device in which no third electrode is provided, i.e., configuration shown in FIG. 52 and FIG. 53. Specifically, the device includes transparent picture element electrodes 92 as first transparent electrodes, which are formed on a transparent support 91 and controlled by TFTs 94 serving as driving devices, an electrolyte layer 95, and a common electrode 96 as a second electrode, which is formed on a support 93 facing the transparent picture element electrodes 92, and which is common to the picture elements. One transparent picture element electrode 92 and one TFT 94 are combined to constitute a picture element 99, and the picture elements are arranged in a matrix form on the transparent support 91. FIG. 52 is a cross-sectional view of the electrodeposition type display device, and FIG. 53 is a plan view of FIG. 52, as viewed from the top.

As shown in FIG. 54, the transparent picture element electrodes 92 are connected to transparent picture element electrode withdrawal portions 97 and transparent picture element electrode withdrawal portions 98. As shown in FIG. 55, an insulating layer 100 is formed between the picture elements. FIG. 54 is a plan view of the transparent support 91, as viewed from the counter electrode side, and FIG. 55 is an enlarged view of the essential portion indicated by an arrow T shown in FIG. 54. Hereinbelow, examples of the configuration of the third electrode are described with reference to the plan view of the transparent support 91 on which the transparent picture element electrodes 92 are formed (hereinafter, frequently referred to as "transparent picture element electrode substrate"), as viewed from the counter electrode side, and the enlarged view of the essential portion with respect to each embodiment.

[ 14th embodiment]

The 14th embodiment is an example of the arrangement in which a third electrode 101 in a line form is arranged on the transparent picture element electrode substrate so as to surround the whole of the effective picture elements on the side of the transparent picture element electrodes 92 as shown in FIG. 56. The third electrode 101 is connected to third electrode withdrawal portions 102, 103, 104, 105. As shown in FIG. 57, an insulating layer 100 is formed between the picture elements. When the third electrode 101 is arranged so as to surround the whole of the effective picture elements as described above, the opening ratio can be increased, making it possible to constitute an electrodeposition type display device having preferable light withdrawal efficiency.

[ 15th embodiment]

The 15th embodiment is an example of the arrangement in which top and bottom third electrodes 101 in a line form are arranged on the transparent picture element electrode substrate so that the whole of the effective picture elements on the side of the transparent picture element electrodes 92 are disposed between the two third electrodes 101 as shown in FIG. 58. The top and bottom third electrodes 101 are connected, respectively, to third electrode withdrawal portions 102, 103 and third electrode withdrawal portions 104, 105. As shown in FIG. 59, an insulating layer 100 is formed between the picture elements. When the top and bottom third electrodes 101 are arranged so that the whole of the effective picture elements are disposed between the two third electrodes as described above, the opening ratio can be increased, making it possible to constitute an electrodeposition type display device having preferable light withdrawal efficiency.

[ 16th embodiment]

The 16th embodiment is an example of the arrangement in which third electrodes 101 in a line form are arranged on the transparent picture element electrode substrate so that the two third electrodes 101 cross at the almost central portion of the whole of the effective picture elements on the side of the transparent picture element electrodes 92 as shown in FIG. 60. The third electrodes 101 are connected to third electrode withdrawal portions 102, 103, 104, 105. As shown in FIG. 61, an insulating layer 100 is formedbetween the picture elements.

[ 17th embodiment]

The 17th embodiment is an example of the arrangement in which third electrodes 101 are formed between all the picture element lines arranged in the fixed direction on the plane of the effective picture elements on the side of the transparent picture element electrodes as shown in FIGs. 62 and 63. The third electrodes 101 are individually connected to third electrode withdrawal portions 102, 103. As shown in FIG. 63, an insulating layer 100 is formedbetween the picture elements.

[ 18th embodiment]

The 18th embodiment is an example of the arrangement in which third electrodes 101 are formed, on the plane of the effective picture elements on the side of the transparent picture element electrodes,. between the picture element lines arranged in the fixed direction at intervals of the predetermined number of lines, namely, a plurality of picture element lines as shown in FIGs. 64 and 65. The third electrodes 101 are individually connected to third electrode withdrawal portions 102, 103. As shown in FIG. 65, an insulating layer 100 is formed between the picture elements.

[ 19th embodiment]

The 19th embodiment is an example of the arrangement in which a third electrode point 106 is formed per one picture element on the plane of the effective picture elements on the side of the transparent picture element electrodes as shown in FIGs. 66 and 67. The third electrode points 106 are connected to third electrode withdrawal portions 102, 103 through not shown wiring. As shown in FIG. 67, an insulating layer 100 is formed between the picture elements.

[20th embodiment]

The 20th embodiment is an example of the arrangement in which a third electrode point 106 is formed per predetermined plurality of picture elements on the plane of the effective picture elements on the side of the transparent picture element electrodes as shown in FIGs. 68 and 69. The third electrode points 106 are connected to third electrode withdrawal portions 102, 103 through not shown wiring. As shown in FIG. 69, an insulating layer 100 is formed between the picture elements.

Next, examples of the configuration of an active matrix type, electrodeposition type display device in which the TFT for driving is disposed on the side of the transparent picture element electrode and the third electrode is arranged on the side of the second electrode as a counter electrode are described. In the following 21st to 25th embodiments, the basic configuration of the electrodeposition type display device is substantially the same as that in the above 14th to 20th embodiments except that the second electrodes are formed in a stripe form and are not a common electrode, i.e., configuration shown in FIG. 70 and FIG. 71. Specifically, the device includes transparent picture element electrodes 112 as first transparent electrodes, which are formed on a transparent support 111 and controlled by TFTs 114 serving as driving devices, an electrolyte layer 115, and second electrodes 116 which are formed on a support 113 facing the transparent picture element electrodes 112. One transparent picture element electrode 112 and one TFT 114 are combined to constitute a picture element, and the picture elements are arranged in a matrix form on the transparent support 111.

Hereinbelow, examples of the configuration of the third electrode are described with reference to the plan view of the third electrode disposed on the support 113 on which the second electrodes 116 are formed (hereinafter, frequently referred to as "second electrode substrate"), as viewed from the counter electrode side, and the enlarged view of the essential portion with respect to each embodiment.

[21st embodiment]

The 21st embodiment is an example of the arrangement in which the second electrode substrate having the similar structure as that of the second electrode substrate in the above eighth embodiment is used, and a third electrode 117 in a line form is arranged on the second electrode substrate so as to surround the whole of the effective picture elements on the side of the second electrodes 116 as shown in FIG. 72. Both ends of the second electrodes 116 are connected to second electrode withdrawal portions 118, 119, and the third electrode 117 is connected to third electrode withdrawal portions 120, 121, 122, 123.

[22nd embodiment]

The 22nd embodiment is an example of the arrangement in which the second electrode substrate having the

similar structure as that of the second electrode substrate in the above ninth embodiment is used, and right and left third electrodes 117 in a line form are arranged on the second electrode substrate so that the whole of the effective picture elements on the side of the second electrodes 116 are disposed between the right and left third electrodes 117 as shown in FIG. 73. Both ends of the second electrodes 116 are connected to second electrode withdrawal portions 118, 119, and the third electrodes 117 are connected to third electrode withdrawal portions 120, 121, 122, 123.

[23rd embodiment]

The 23rd embodiment is an example of the arrangement in which the second electrode substrate having the similar structure as that of the second electrode substrate in the above 10th embodiment is used, and top and bottom third electrodes 117 in a line form are arranged on the second electrode substrate so that the whole of the effective picture elements on the side of the second electrodes 116 are disposed between the top and bottom third electrodes 117 as shown in FIG. 74. Both ends of the second electrodes 116 are connected to second electrode withdrawal portions 118, 119, and the third electrodes 117 are connected to third electrode withdrawal portions 120, 121, 122, 123.

[ 24th embodiment]

The 24th embodiment is an example of the arrangement in which the second electrode substrate in the above 11th embodiment is used as the second electrode substrate, and third electrodes 117 in a line form in the same number as that of the stripes of the second electrodes 116 are formed, on the second electrode substrate, in the direction parallel to the stripe structure of the second electrodes 116 between the stripes of the second electrodes 116 as shown in FIGs. 75 and 76. Both ends of the second electrodes 116 are connected to second electrode withdrawal portions 118, 119, and the third electrodes 117 are connected to third electrode withdrawal portions 120, 121. As shown in FIG. 76, on the second electrodes 116 and the third electrodes 117, insulating layers 124 are formed so as to be perpendicular to the second electrodes 116 and third electrodes 117.

[ 25th embodiment]

The 25th embodiment is an example of the arrangement in which the second electrode substrate in the above 12th embodiment is used as the second electrode substrate, and third electrodes 117 in a line form are formed, on the second electrode substrate, in the direction parallel to the stripe structure of the second electrodes 116 at intervals of the predetermined number of the stripes of the second electrodes 116 as shown in FIGs. 77 and 78. Both ends of the second electrodes 116 are connected to second electrode withdrawal portions 118, 119, and the third electrodes 117 are connected to third electrode withdrawal portions 120, 121. As shown in FIG. 78, on the second electrodes 116 and the third electrodes 117, insulating layers 124 are formed so as to be perpendicular to the second electrodes 116 and third electrodes 117.

Next, examples of the configuration of an active matrix type, electrodeposition type display device in which the third electrode is disposed between the first transparent electrode and the second electrode are described.

[26th embodiment]

In the 26th embodiment, as shown in FIG. 79, the device includes transparent picture element electrodes 132 as first transparent electrodes, which are formed on a transparent support 131 and controlled by TFTs 134 serving as driving devices, an electrolyte layer 135, and a second electrode 136 comprised of an Ag substrate, which is formed on a support 133 facing the transparent picture element electrodes 132. The transparent picture element substrate has the above-described structure shown in FIGs. 54 and 55, and picture elements, each formed by combining one transparent picture element electrode 132 and one TFT 134, are arranged in a matrix form on the transparent support 131.

A third electrode 137 is disposed between the transparent picture element electrodes 132 and the second electrode 136. As the third electrode 137, a twill type Ag mesh having about 30-μm one side of the mesh structure is used, and the third electrode 137 is sandwiched with nonwoven fabric 138 and disposed between the transparent picture element electrodes 132 and the second electrode 136 so as to prevent the occurrence of short-circuiting between the third electrode and the other electrodes.

[ 27th embodiment]

In the 27th embodiment, as shown in FIG. 80, the device includes transparent picture element electrodes 132 as first transparent electrodes formed on a transparent support 131, an electrolyte layer 135, and second electrodes

136, which are formed on a support 133 facing the transparent picture element electrodes 132, and controlled by TFTs 134 serving as driving devices. One second electrode 136 and one TFT 134 are combined to constitute a picture element, and the picture elements are arranged in a matrix form on the support 133.

A third electrode 137 is disposed between the transparent picture element electrodes 132 and the second electrodes 136. As the third electrode 137, a twill type Ag mesh having about 30-µm one side of the mesh structure is used, and the third electrode 137 is sandwiched with nonwoven fabric 138 and disposed between the transparent picture element electrodes 132 and the second electrodes 136 so as to prevent the occurrence of short-circuiting between the third electrode and the other electrodes.

Next, examples of the configuration of an active matrix type, electrodeposition type display device in which the TFT for driving is disposed on the side of the second electrode and the third electrode is arranged on the side of the transparent picture element electrode are described. In the following 28th to 34th embodiments, as shown in FIG. 81, the basic electrodeposition type display device includes second electrodes 146 comprised of a metallic thin film, which are formed on a support 143 and controlled by TFTs 144 serving as driving devices, an electrolyte layer 145, and first transparent picture element electrodes 142 opposite to the second electrodes 146. The first transparent picture element electrodes 142 are formed in a stripe form on a transparent support 141. The electrolyte layer 145 is comprised of an electrolytic solution or a polymer electrolyte, which contain metal ions and a coloring agent, and the gap portion between the first transparent picture element electrodes 142 and the second electrodes 146 is filled with the electrolyte layer 145.

[28th embodiment]

The 28th embodiment is an example of the arrangement in which a third electrode 147 in a line form is formed on the transparent picture element electrode substrate so as to surround the whole of the effective picture elements on the side of the transparent picture element electrodes 142 as shown in FIG. 82. Both ends of the transparent picture element electrodes 142 are connected to transparent picture element electrode withdrawal portions 148, 149, andthethirdelectrode 147 is connected to third electrode withdrawal portions 150, 151, 152, 153. As shown in FIG. 83, on the transparent picture element electrodes 142, insulating layers 154 are formed so as to be perpendicular to the transparent picture element electrodes 142. At the portion on which the third electrode 147 is disposed, as shown in FIG. 84, the third electrode 147 is formed on the insulating layer 154. When the third electrode is arranged so as to surround the whole of the effective picture elements as described above, the opening ratio can be increased, making it possible to constitute an electrodeposition type display device having preferable light withdrawal efficiency.

[29th embodiment]

The 29th embodiment is an example of the arrangement in which right and left third electrodes 147 in a line form are formed, on the transparent picture element electrode substrate, in the direction parallel to the stripe structure of the transparent picture element electrodes 142 so that the whole of the effective picture elements are disposed between the right and left third electrodes 147 as shown in FIG. 85. Both ends of the transparent picture element electrodes 142 are connected to transparent picture element electrode withdrawal portions 148, 149, and the right and left third electrodes 147 are connected, respectively, to third electrode withdrawal portions 150, 153 and third electrode withdrawal portions 151, 152. As shown in FIG. 86, on the transparent picture element electrodes 142, insulating layers 154 are formed so as to be perpendicular to the transparent picture element electrodes 142.

[30th embodiment]

The 30th embodiment is an example of the arrangement in which top and bottom third electrodes 147 in a line form are formed, on the transparent picture element electrode, in the direction perpendicular to the stripe structure of the transparent picture element electrodes 142 so that the whole of the effective picture elements are disposed between the top and bottom third electrodes 147 as shown in FIG. 87. Both ends of the transparent picture element electrodes 142 are connected to transparent picture element electrode withdrawal portions 148, 149, and the top and bottom third electrodes 147 are connected, respectively, to third electrode withdrawal portions 150, 151 and third electrode withdrawal portions 152, 153. As shown in FIG. 88, on the transparent picture element electrodes 142, insulating layers 154 are formed so as to be perpendicular to the transparent picture element electrodes 142. At the portion on which the third electrode 147 is disposed, as shown in FIG. 89, the third electrode 147 is formed on the insulating layer 154.

[ 31st embodiment]

The 31st embodiment is an example of the arrangement in which third electrodes 147 in a line form in the same number as that of the stripes of the transparent picture element electrodes 142 are formed in the direction parallel to the stripe structure of the transparent picture element electrodes 142 between the stripes of the transparent picture element electrodes 142 as shown in FIG. 90. Both ends of the transparent picture element electrodes 142 are connected to transparent picture element electrode withdrawal portions 148, 149, and the third electrodes 147 are individually connected to third electrode withdrawal portions 150 and third electrode withdrawal portions 151. As shown in FIG. 91, on the transparent picture element electrodes 142 and the third electrodes 147, insulating layers 154 are formed so as to be perpendicular to the transparent picture element electrodes 142 and third electrodes 147.

[ 32nd embodiment]

The 32nd embodiment is an example of the arrangement in which third electrodes 147 in a line form are formed in the direction parallel to the stripe structure of the transparent picture element electrodes 142 at intervals of the predetermined number of the stripes of the transparent picture element electrodes 142 as shown in FIG. 92. Both ends of the transparent picture element electrodes 142 are connected to transparent picture element electrode withdrawal portions 148, 149, and the third electrodes 147 are individually connected to third electrode withdrawal portions 150 and third electrode withdrawal portions 151. As shown in FIG. 93, on the transparent picture element electrodes 142 and the third electrodes 147, insulating layers 154 are formed so as to be perpendicular to the transparent picture element electrodes 142 and third electrodes 147.

In the present invention, with respect to the configuration of the transparent picture element electrode, second electrode, and third electrode, a configuration may be employed in which only electrode lines are formed and no insulating layer is provided. Specifically, there may be employed a configuration shown in, for example, FIG. 94 in which only third electrodes 163 are formed in parallel to transparent picture element electrodes 162 on a transparent support 161, and no insulating layer is provided.

Alternatively, a configuration in which insulating layers are provided on electrode lines by patterning in the direction perpendicular to the electrode lines may be employed. Specifically, there can be employed a configuration shown in, for example, FIG. 95 in which third electrodes 163 are formed in parallel to transparent picture element electrodes 162 on a transparent support 161, and further, on the transparent picture element electrodes 162 and the third electrodes 163, insulating layers 164 are formed by patterning in the direction perpendicular to them. By employing this configuration, picture elements can be formed by the insulating layers 164.

Further alternatively, a configuration in which insulating layers are formed by patterning so as to expose only the picture element portion and the third electrode portion may be employed. Specifically, there can be employed a configuration shown in, for example, FIG. 96 in which third electrodes 163 are formed in parallel to transparent picture element electrodes 162 on a transparent support 161, and insulating layers 164 are formed in parallel to the gap between the transparent picture element electrodes 162 and the third electrodes 163, and patterned so as to cover the transparent picture element electrodes 161 excluding corresponding portions of the third electrodes 162. By employing this configuration, picture elements canbe formedbythe insulating layers 164 while protecting the transparent electrodes.

Here, an explanation is made on the transparent picture element electrode substrate, but the similar configuration can be applied to the second electrode substrate.

[ Examples]

Hereinbelow, the present invention will be described in more detail with reference to the following specific Examples. The following Examples should not be construed as limiting the scope of the present invention.

[ Example 1]

(Preparation of display electrode)

First, on a glass substrate having a thickness of 1.5 mm and a size of 10 cm $\times$ 10 cm, as transparent picture element electrodes 201, ITO films arranged in a line form at a pitch of 150 μm were formed by a known method. Then, one third electrode 202 was formed at the central portion of the lines of the ITO films so as to be parallel to the lines. The third electrode 202 was formed using Ag to have a width of 1 μm. Then, effective picture element portions and their periphery portions were coated and patterned to form insulating layers 203 perpendicular to the lines of the ITO films. Subsequently, lead portions connected from the substrate to driving circuits were formed by a known method,

to connect the transparent picture element electrodes 201 to transparent picture element electrode withdrawal portions 204, 205, and connect the third electrode 202 to third electrode withdrawal portions 206, 207, thus preparing display electrodes shown in FIGs. 97 and 98.

(Preparation of counter electrode)

On a glass substrate having a thickness of 1.5 mm and a size of 8 cm × 12 cm, a Cr film was vapor-deposited by a known method, and Ag films having a thickness of 1,000 nm arranged in a line form at a pitch of 150 μm were formed on the Cr film by a known method. Then, effective picture element portions and their periphery portions were patterned to form insulating layers on the ITO films perpendicular to the lines of the ITO films, thus preparing counter electrodes.

(Preparation of polymer electrolyte layer)

1 Part by weight of polyether having a molecular weight of about 350,000, 10 parts by weight of dimethylformamide (DMSO), 1.7 part by weight of sodium iodide, and 1.7 part by weight of silver iodide were mixed with one another, and heated to 120°C to prepare a uniform solution. Then, to the uniform solution were added triethanolamine represented by the chemical formula 5 below, coumarin represented by the chemical formula 6 below, and benzimidazole represented by the chemical formula 7 below so that the respective concentrations became 10 g/l, 5 g/l, and 5 g/l.

Chemical formula 5

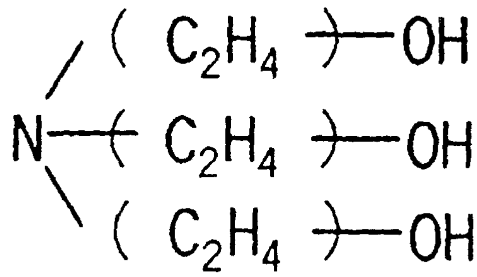

Chemical formula 6

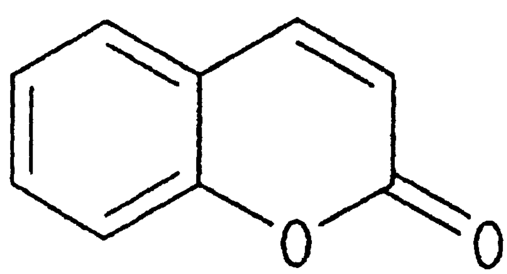

Chemical formula 7

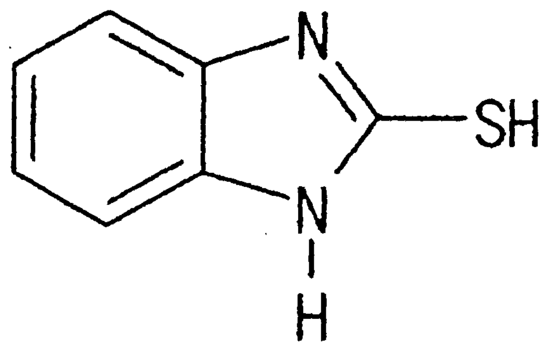

Then, 0.2 part by weight of titanium dioxide having an average particle size of 0.5 μm was added to the resultant mixture, and uniformly dispersed together by means of a homogenizer. The resultant dispersed mixture was applied by means of a doctor blade onto the glass substrate of the above-prepared display electrodes so that the thickness became 100 μm, and then immediately the counter electrodes as the second electrodes were attached on the substrate to form a gelled polymer electrolyte between the two electrodes. Then, the edges of the resultant laminate were sealed with an adhesive, thus preparing a passive matrix-electrodeposition type display apparatus in Example 1.

(Evaluation of driving and display properties)

A reduction reaction was caused on the display electrode side at an electrical quantity of 10 $mC/cm^2$ per one picture element during coloring, and oxidation was caused at the same electrical quantity during decoloring by means of a known passive matrix driving circuit to switch colored display and colorless (white) display. In the driving, the input waveform controlled may be either current or voltage.

For confirming effectiveness of the third electrode as a reference electrode, with respect to the selected transparent picture element electrodes having different distances from the third electrode, cyclic voltammogram measurements were conducted per predetermined picture elements. The cyclic voltammogram measurements were conducted with respect to the counter electrode picture element line A (35 mm from the center of the effective picture element portion) and the counter electrode picture element line B (5 mm from the center of the effective picture element portion), and, in each case, measurements were conducted with respect to the distances from the third electrode of 50 μm, 500 μm, 2 mm, 10 mm, and 40 mm. As the input waveform, a voltage triangular wave at 50 mV/sec was applied in the range of from -1.0 to -1.5 V on the reduction side and in the range of from +1.0 to +1.4 V on the oxidation side, relative to the potential of Ag as a reference electrode of the third electrode. The results with respect to the counter electrode picture element line A are shown in FIG. 99, and the results with respect to the counter electrode picture element line B are shown in FIG. 100.

As can be seen in FIGs. 99 and 100, substantially similar results were obtained with respect to all the transparent picture element electrodes from the transparent picture element electrode immediately adjacent to the third electrode to the farthest one. Generally, it is preferred that the transparent picture element electrode which is a working electrode and the third electrode are as close as possible, but the results of FIGs. 99 and 100 have confirmed that the third electrode effectively operates almost irrespective of the distance between the third electrode and the transparent picture element electrode as a working electrode.

Specifically, for achieving arrangement such that the third electrode more effectively operates to obtain higher reliability, it is preferred that the third electrodes in the same number as that of the stripes of the transparent picture element electrodes are disposed between the stripes of the transparent picture element electrodes. However, considering the opening ratio on the side of the transparent picture element electrodes and the trade-off, the structure in the present Example in which one third electrode in a line form is disposed at the central portion of the effective picture element portion has no problem, and is considered to make it possible to effectively operate the third electrode and effectively utilize the effect.

In addition, from the above results, it is found that, in the driving according to a linear successive method or the like as a method for picture element display, there is no need to provide the third electrode separately, and part of the counter electrodes which are not selected and are inactive as electrical signals can serve as a quasi-third electrode.

[ Example 2]

(Preparation of display electrode)

First, on a glass substrate having a thickness of 1.5 mm and a size of 10 cm × 10 cm, as transparent picture element electrodes, ITO films and TFTs (thinfilmtransistors) arranged in a plane form at a pitch of 150 μm were prepared by a known method to form picture element portions 211. Then, third electrodes 212 were disposed so that the two third electrodes crossed each other at the almost central portion of the effective picture element portions. The third electrodes 212 were formed using silver to have a width of 1 μm. Then, effective picture element portions and their periphery portions, excluding the picture element portions 211 and third electrodes 212, were coated and patterned to form insulating layers 213 perpendicular to the picture element lines of the ITO films. Lead portions connected from the substrate to driving circuits were formed by a known method, to connect the picture element portions 211 to transparent picture element electrode withdrawal portions 214, 215, and connect the third electrodes 212 to third electrode withdrawal portions 216, 217, 218, 219, thus preparing display electrodes shown in FIGs. 101 and 102.

(Preparation of counter electrode)

On a glass substrate having a thickness of 1.5 mm and a size of 8 cm × 12 cm, a Cr film was vapor-deposited by a known method, and an Ag alloy thin film having a thickness of 1,000 nm was formed on the Cr film by a known method, thus preparing counter electrodes.

(Preparation of polymer electrolyte layer)

A polymer electrolyte was prepared in the same manner as in Example 1 above, and applied by means of a doctor blade onto the glass substrate of the above-prepared display electrodes so that the thickness became 100 μm, and then immediately the counter electrodes as the second electrodes were attached on the glass substrate to form a gelled polymer electrolyte between the two electrodes. Then, the edges of the resultant laminate were sealed with an adhesive, thus preparing an active matrix type, electrodeposition type display apparatus in Example 2.

(Evaluation of driving and display properties)

With respect to the counter electrode picture element line A (35 mm from the center of the effective picture element portion) and the counter electrode picture element line B (5 mm from the center of the effective picture element portion) , cyclic voltammogram measurements were conducted per predetermined picture elements with respect to the selected transparent picture element electrodes having different distances from the third electrode in the same manner as in Example 1. The results with respect to the counter electrode picture element line A are shown in FIG. 103, and the results with respect to the counter electrode picture element line B are shown in FIG. 104.

As can be seen in FIGs. 103 and 104, substantially similar results were obtained with respect to all the transparent picture element electrodes from the transparent picture element electrode immediately adjacent to the third electrode to the farthest one. Generally, it is preferred that the transparent picture element electrode which is a working electrode and the third electrode are as close as possible, but, from the results of FIGs. 103 and 104, it has been found that the third electrode effectively operates almost irrespective of the distance between the third electrode and the transparent picture element electrode as a working electrode.

Specifically, for achieving arrangement such that the third electrode more effectively operates to obtain higher reliability, it is preferred that the third electrode is disposed per picture element portion. However, considering the opening ratio on the side of the transparent picture element electrodes and the trade-off, the structure in the present Example in which the two third electrodes cross at the almost central portion of the effective picture element portions has no problem, and is considered to make it possible to effectively operate the third electrode and effectively utilize the effect.

[ Example 3]

(Preparation of display electrode)

Display electrodes were prepared in substantially the same manner as in Example 1 except that no third electrode was formed.

(Preparation of counter electrode)

Counter electrodes shown in FIGs. 105 and 106 were prepared in substantially the same manner as in Example 1 above except that the third electrode was formed from Ag to have a width of 1 μm only at the central portion of the effective picture element portions. Specifically, one third electrode 222 was disposed in parallel to the second electrodes 221 arranged in a line form at the central portion of the effective picture element portions, and the second electrodes 221 were connected to second electrode withdrawal portions 224, 225 and the third electrode 222 was connected to third electrode withdrawal portions 226, 227. The effective picture element portions and their periphery portions were patterned to form insulating layers 223 on the ITO films perpendicular to the lines of the ITO films.

(Preparation of polymer electrolyte layer)

A polymer electrolyte was prepared in the same manner as in Example 1 above, and applied by means of a doctor blade onto the glass substrate of the above-prepared display electrodes so that the thickness became 100 μm, and then immediately the counter electrodes as the second electrodes were attached on the substrate to form a gelled polymer electrolyte between the two electrodes. Then, the edges of the resultant laminate were sealed with an adhesive, thus preparing a passive matrix-electrodeposition type display apparatus in Example 3.

(Evaluation of driving and display properties)

With respect to the counter electrode picture element line A (35 mm from the center of the effective picture element portion) and the counter electrode picture element line B (5 mm from the center of the effective picture element portion) , cyclic voltammogram measurements were conducted per predetermined picture elements with respect to the selected transparent picture element electrodes having different distances from the third electrode in the same manner as in Example 1. The results with respect to the counter electrode picture element line A are shown in FIG. 107, and the results with respect to the counter electrode picture element line B are shown in FIG. 108.

As can be seen in FIGs. 107 and 108, substantially similar results were obtained with respect to all the transparent picture element electrodes from the transparent picture element electrode immediately adjacent to the third electrode to the farthest one. Generally, it is preferred that the transparent picture element electrode which is a working electrode and the third electrode are as close as possible, and they are close in respect of the width direction and on the same plane if possible. However, from the results of FIGs. 107 and 108, it has been found that the third electrode effectively operates, almost irrespective of the distance between the third electrode and the transparent picture element electrode as a working electrode, even when the third electrode is disposed on the counter electrode side.

Specifically, for achieving arrangement such that the third electrode more effectively operates to obtain higher reliability, the structure in Example 1 above is preferred, but the structure in the present Example in which the third electrode is not disposed on the side of the transparent picture element electrodes has no particular problem, and the highest opening ratio on the side of the transparent picture element electrodes can be advantageously secured.

[ Example 4]

(Preparation of electrodeposition type display apparatus)

A passive matrix-electrodeposition type display apparatus was prepared in substantially the same manner as in Example 1 except that the third electrode was formed from an ITO instead of Ag.

(Evaluation of driving and display properties)

With respect to the counter electrode picture element line A (35 mm from the center of the effective picture element portion) , cyclic voltammogram measurements were conducted per predetermined picture elements with respect to the selected transparent picture element electrodes having different distances from the third electrode in the same manner as in Example 1. The results are shown in FIG. 109.

As can be seen in FIG. 109, results were obtained such that the whole of the measurements shifted according to the distance between the third electrode and the transparent picture element electrode immediately adjacent to the third electrode to the farthest transparent picture element electrode. From this, it has been found that the effect of the third electrode depends on the distance between the third electrode and the transparent picture element electrode which is a working electrode, and the third electrode does not effectively operate. However, by correcting the shifted amount at the individual distance per each picture element line, the third electrode can effectively operate like in Example 1 above. Alternatively, by increasing the number of the third electrodes, the third electrode can effectively operate

like in Example 1 above. For simplifying the configuration of the driving circuit, however, the configuration in Example 1 is preferred.

[ Example 5]

With respect to the active matrix type, electrodeposition type display apparatus prepared in Example 2, an actual display waveform was applied in the same manner as in Example 1 to repeat a cycle of coloring and decoloring. In addition, with respect to the apparatus in which the third electrode was not effective, namely, no third electrode was provided, a waveform was applied to two electrodes, i.e., the display electrode and the counter electrode to repeat a cycle of coloring and decoloring in the same manner'. The results of above two were compared to each other. The electrodeposition type display apparatus had initial properties such that the reflectance during colorless (white) was 70% and the optical density (OD) of the display portion during coloring (black) was about 0.8 (reflectance: 13%). Accordingly, the contrast of reflectance obtained was 1:5.

In the apparatus for comparison which had no effective third electrode and operated in a dual electrode mode, the repetition of the cycles until the black density during coloring became 1.0 or less was about 80,000,000, whereas, in the apparatus in which the third electrode was effective, the black density was not lowered to be 1. 0 or less even after repetition of the double cycles of the above, and further a phenomenon in which the color remained upon decoloring did not occur. This result indicates that the use of the third electrode can considerably improve the cycle properties, as compared to a conventional apparatus having no third electrode. Further, the use of the third electrode can appropriately control the display switching, as compared to a conventional apparatus having no third electrode. That is, the use of the third electrode can realize an electrodeposition type display apparatus having preferable cycle properties and preferable display quality.

[Example 6]

Using the display electrodes prepared in Example 3 in which no third electrode was formed and the counter electrodes prepared in Example 1 in which no third electrode was formed, and using a twill type silver mesh having about 30-µm one side of the mesh structure as a third electrode, the third electrode was sandwiched with nonwoven fabric and disposed between the display electrodes and the counter electrodes so as to prevent the occurrence of short-circuiting between the third electrode and the other electrodes, thereby preparing an electrodeposition type display apparatus. A polymer electrolyte layer was formed in the same manner as in Example 1.

With respect to the thus-prepared passive matrix-electrodeposition type display apparatus in Example 6, cyclic voltammogram measurements were conducted in the same manner as in Example 1. As a result, there were obtained results substantially similar to those obtained in Example 1. This has confirmed that, in the passive matrix-electrodeposition type display apparatus in which the third electrode having a mesh structure is disposed between the display electrodes and the counter electrodes, the third electrode effectively operates, and thus effectiveness of the use of the third electrode is confirmed.

[ Example 7]

Display electrodes were prepared in substantially the same manner as in Example 2 except that no third electrode was formed, and, on a glass substrate having a thickness of 1.5 mm and a size of 8 cm × 12 cm, no third electrode was formed, and second electrodes having a stripe structure were formed from an Ag thin film by a known method to prepare counter electrodes. Lead portions connected from these substrates to driving circuits were formed by a known method. Then, as a third electrode, a twill type silver mesh having about 30-µm one side of the mesh structure was used, and the third electrode was sandwiched with nonwoven fabric and disposed between the display electrodes and the counter electrodes so as to prevent the occurrence of short-circuiting between the third electrode and the other electrodes, thereby preparing an active matrix type, electrodeposition type display apparatus. A polymer electrolyte layer was formed in the same manner as in Example 1.

With respect to the thus-prepared electrodeposition type display apparatus in Example 7, cyclic voltammogram measurements were conducted in the same manner as in Example 2. As a result, there were obtained results substantially similar to those obtained in Example 2. This has confirmed that, intheactivematrixtype, electrodeposition type display apparatus in which the third electrode having a mesh structure is disposed between the display electrodes and the counter electrodes, the third electrode effectively operates, and thus effectiveness of the use of the third electrode is confirmed.

[Example 8]

(Preparation of display electrode)

First, on a glass substrate having a thickness of 1.5 mm and a size of 10 cm × 10 cm, as transparent picture element electrodes, ITO films were formed by a known method to prepare display electrodes.

(Preparation of counter electrode)

On a glass substrate having a thickness of 1.5 mm and a size of 8 cm × 12 cm, Ag alloy films and TFTs (thin film transistors) arranged in a plane form at a pitch of 150 μm were preparedby a knownmethodtoformpicture elements. Then, third electrodes were disposed so that the two third electrodes crossed each other at the almost central portion of the effective picture element portions to prepare counter electrodes. The third electrodes were formed using silver to have a width of 1 μm. Then, an active matrix type, electrodeposition type display apparatus was prepared in the same manner as in Example 2.

With respect to the thus-prepared electrodeposition type display apparatus in Example 8, cyclic voltammogram measurements were conducted in the same manner as in Example 2. As a result, there were obtained results substantially similar to those obtained in Example 2, and substantially similar results were obtained with respect to all the device electrodes from the device electrode immediately adjacent to the third electrode to the farthest one. Generally, it is preferred that the transparent picture element electrode which is a working electrode and the third electrode are as close as possible, but, from the above results, it has been found that the third electrode effectively operates, almost irrespective of the distance between the third electrode and the transparent picture element electrode as a working electrode, even when the third electrode is disposed on the counter electrode side as in the present Example.

[Example 9]

(Preparation of display electrode)

Fist, on a glass substrate having a thickness of 1.5 mm and a size of 10 cm × 10 cm, as transparent picture element electrodes, ITO films arranged in a line form at a pitch of 150 μm were formed by a known method. Then, one third electrode was formed at the central portion of the lines of the ITO films so as to be parallel to the lines. The third electrode was formed using Ag to have a width of 1 μm. Then, effective picture element portions and their periphery portions were coated and patterned to form insulating layers perpendicular to the lines of the ITO films. Subsequently, lead portions connected from the substrate to driving circuits were formed by a known method, thus preparing display electrodes.

(Preparation of counter electrode)

Counter electrodes were prepared in substantially the same manner as in Example 8 except that no third electrode was formed. Then, an active matrix type, electrodeposition type display apparatus was prepared in the same manner as in Example 2.

With respect to the thus-prepared electrodeposition type display apparatus in Example 9, cyclic voltammogram measurements were conducted in the same manner as in Example 2. As a result, there were obtained results substantially similar to those obtained in Example 2, and substantially similar results were obtained with respect to all the device electrodes from the device electrode immediately adjacent to the third electrode to the farthest one. Generally, it is preferred that the transparent picture element electrode which is a working electrode and the third electrode are as close as possible, but the above results have confirmed that the third electrode effectively operates almost irrespective of the distance between the third electrode and the transparent picture element electrode serving as a working electrode.

## INDUSTRIAL APPLICABILITY

The electrochemical display device and electrochemical display apparatus according to the present invention can achieve matrix driving per picture element, and utilize the coloring material and coloring means contained in the electrolyte layer, and further have a third electrode independent of the first transparent electrode and the second electrode.

Therefore, according to the electrochemical display device and electrochemical display apparatus of the present invention, there can be provided an electrodeposition type display device and an electrodeposition type display

apparatus having preferable cycle properties and preferable display quality such that display with high contrast and high black density can be achieved.

In addition, by the method for producing an electrochemical display device and the method for producing an electrochemical display apparatus according to the present invention, an electrochemical display device and an electrochemical display apparatus having the above-described structure can be easily produced.

## Claims

1. An electrochemical display device **characterized by** comprising:

    a first transparent electrode;
    an electrolyte layer containing a coloring material which colors by a coloring means and electrochemical reduction or oxidation, accompanied by deposition or dissolution;
    a second electrode having said electrolyte layer disposed between said first transparent electrode and said second electrode; and
    a third electrode independent of said first transparent electrode and said second electrode.

2. The electrochemical display device according to claim 1, **characterized in that** said third electrode is provided as an electrically insulated member on a substrate on which said first transparent electrode is formed.

3. The electrochemical display device according to claim 1, **characterized in that** said third electrode is provided as an electrically insulated member on a substrate on which said second electrode is formed.

4. The electrochemical display device according to claim 1, **characterized in that** said third electrode is provided as an electrically insulated member between said first transparent electrode and said second electrode.

5. The electrochemical display device according to claim 4, **characterized in that** said third electrode is comprised of a metal wire or a mesh structure obtained by weaving said metal wire.

6. The electrochemical display device according to claim 5, **characterized in that** said third electrode is disposed between insulating materials.

7. The electrochemical display device according to claim 1, **characterized in that** said third electrode is provided in a state in which said third electrode surrounds an effective picture element portion of said first transparent electrode or said second electrode.

8. The electrochemical display device according to claim 1, **characterized in that** said third electrode is provided in a state in which said third electrode sandwiches an effective picture element portion of said first transparent electrode or said second electrode.

9. The electrochemical display device according to claim 1, **characterized in that** a plurality of said third electrodes are provided in a state in which a plurality of said third electrodes cross one another in an effective picture element portion of said first transparent electrode or said second electrode.

10. The electrochemical display device according to claim 1, **characterized in that** said first transparent electrode is included mainly of $SnO_2$, $In_2O_3$, or a mixture thereof.

11. The electrochemical display device according to claim 1, **characterized in that** said second electrode is a metallic thin film.

12. The electrochemical display device according to claim 1, **characterized in that** said third electrode is a metallic thin film.

13. The electrochemical display device according to claim 1, **characterized in that** said third electrode is a transparent electrode included mainly of $SnO_2$, $In_2O_3$, or a mixture thereof.

14. The electrochemical display device according to claim 1, **characterized in that** said third electrode is part of said

first transparent electrode or said second electrode, which is in a display inactive state.

**15.** The electrochemical display device according to claim 1, **characterized in that** said electrolyte layer is d of an electrolytic solution or a polymer electrolyte layer.

**16.** The electrochemical display device according to claim 15, **characterized in that** said electrolytic solution or polymer electrolyte layer contains a metal salt or a quaternary alkylammonium salt.

**17.** The electrochemical display device according to claim 15, **characterized in that** a solvent for said electrolytic solution is comprised of water, ethyl alcohol, isopropyl alcohol, propylene carbonate, dimethyl carbonate, ethylene carbonate, γ-butyrolactone, acetonitrile, sulfolane, dimethoxyethane, dimethylformamide, dimethyl sulfoxide, or a mixture thereof.

**18.** The electrochemical display device according to claim 15, **characterized in that** a matrix polymer constituting said polymer electrolyte layer is a polymer material having a repeating unit of alkylene oxide, alkylenimine, or alkylene sulfide in a main skeleton unit or a side chain unit, or both of them; a copolymer including a plurality of these different units; or a polymethyl methacrylate derivative; polyvinylidene fluoride; polyvinylidene chloride; polyacrylonitrile; a polycarbonate derivative; or a mixture or laminate thereof.

**19.** The electrochemical display device according to claim 18, **characterized in that** said polymer electrolyte layer includes said matrix polymer containing a solvent which is comprised of water, ethyl alcohol, isopropyl alcohol, propylene carbonate, dimethyl carbonate, ethylene carbonate, γ-butyrolactone, acetonitrile, sulfolane, dimethoxyethane, dimethylformamide, dimethyl sulfoxide, or a mixture thereof.

**20.** The electrochemical display device according to claim 15, **characterized in that** said polymer electrolyte layer is comprised of a plurality of layers, wherein said coloring means is contained in part of the layers.

**21.** The electrochemical display device according to claim 1, **characterized in that** said electrolyte layer contains at least one member selected from a growth inhibitor, a stress relaxing agent, and a brightener for the deposition of said coloring material.

**22.** The electrochemical display device according to claim 21, **characterized in that** said growth inhibitor, stress relaxing agent, or brightener is an organic compound having a group having an oxygen atom or a sulfur atom.

**23.** The electrochemical display device according to claim 1, **characterized in that** said electrolyte layer contains a reducing agent or an oxidizing agent for suppressing a side reaction which is possibly caused in any of said first transparent electrode and said second electrode mainly due to an anion species during the deposition of said coloring material.

**24.** The electrochemical display device according to claim 1, **characterized in that** said coloring material is ions of bismuth, copper, silver, sodium, lithium, iron, chromium, nickel, or cadmium, or ions comprised of a combination thereof.

**25.** The electrochemical display device according to claim 1, **characterized in that** said coloring means is an inorganic pigment or an organic pigment, or a dye.

**26.** The electrochemical display device according to claim 25, **characterized in that** said inorganic pigment is comprised of powder of titanium dioxide, calcium carbonate, magnesium oxide, or aluminum oxide.

**27.** The electrochemical display device according to claim 1, **characterized in that** said electrochemical display device is driven by detecting or sweeping a potential between said third electrode and said first transparent electrode.

**28.** The electrochemical display device according to claim 1, **characterized in that** said electrochemical display device has a driving device in said first transparent electrode or said second electrode and said driving device is driven in an active matrix mode.

**29.** The electrochemical display device according to claim 1, **characterized in that** said first transparent electrode and said second electrode are arranged in a matrix form, and said device is driven in a passive matrix mode.

**30.** An electrochemical display apparatus **characterized by** comprising a plurality of electrochemical display devices arranged in a plane form, each electrochemical display device having: a first transparent electrode; an electrolyte layer containing a coloring material which colors by a coloring means and electrochemical reduction or oxidation, accompanied by deposition or dissolution; a second electrode having said electrolyte layer disposed between said first transparent electrode and said second electrode; and a third electrode independent of said first transparent electrode and said second electrode.

**31.** A method for producing an electrochemical display device, **characterized by** comprising the steps of:

forming a first transparent electrode on a transparent support;
forming an electrolyte layer containing a coloring material which colors by a coloring means and electrochemical reduction or oxidation, accompanied by deposition or dissolution;
forming a second electrode having said electrolyte layer disposed between said first transparent electrode and said second electrode; and
forming a third electrode independent of said first transparent electrode and said second electrode.

**32.** A method for producing an electrochemical display apparatus, **characterized by** comprising the steps of:

forming a first transparent electrode on a transparent support;
forming an electrolyte layer containing a coloring material which colors by a coloring means and electrochemical reduction or oxidation, accompanied by deposition or dissolution;
forming a second electrode having said electrolyte layer disposed between said first transparent electrode and said second electrode; and
forming a third electrode independent of said first transparent electrode and said second electrode.

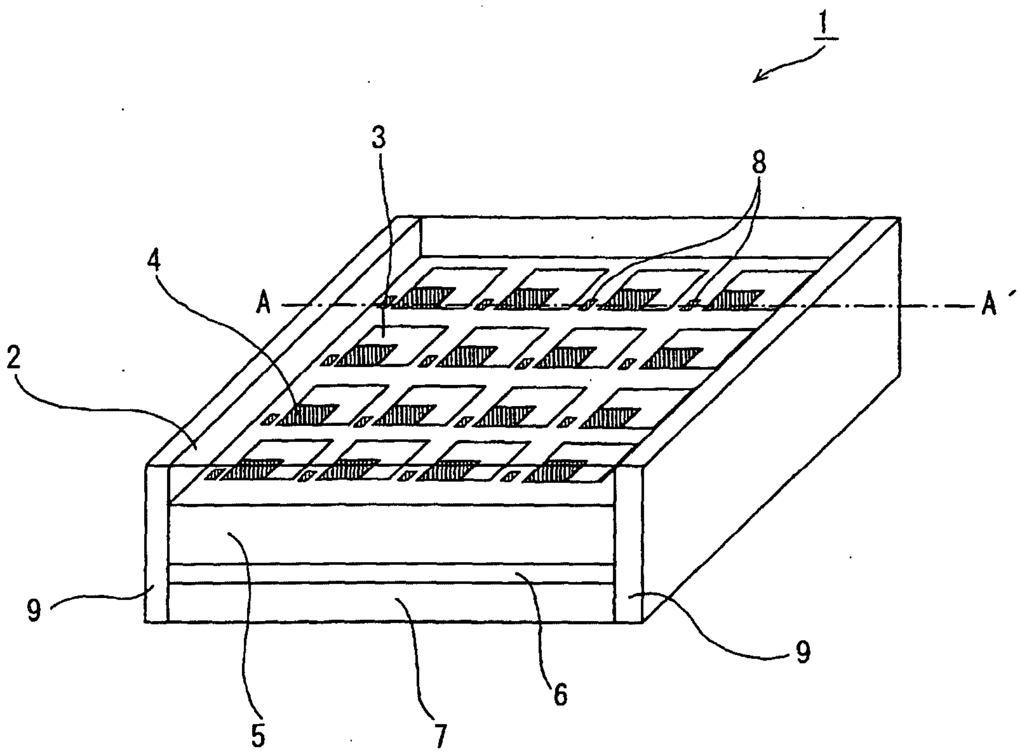


Fig.1

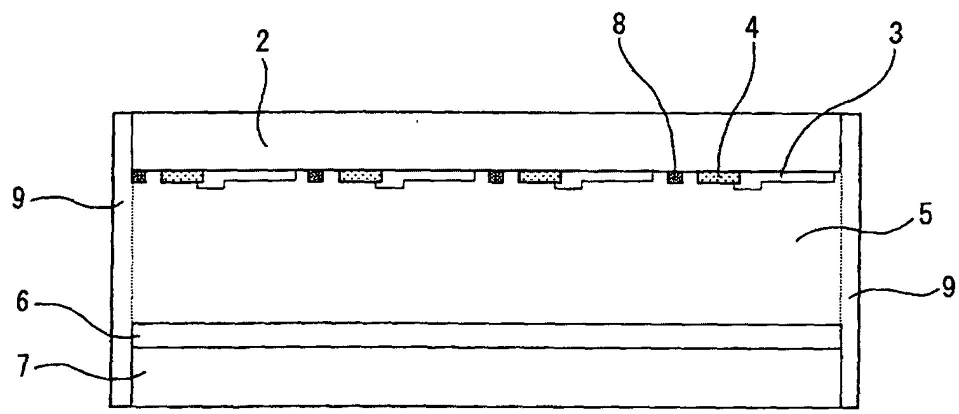


Fig.2

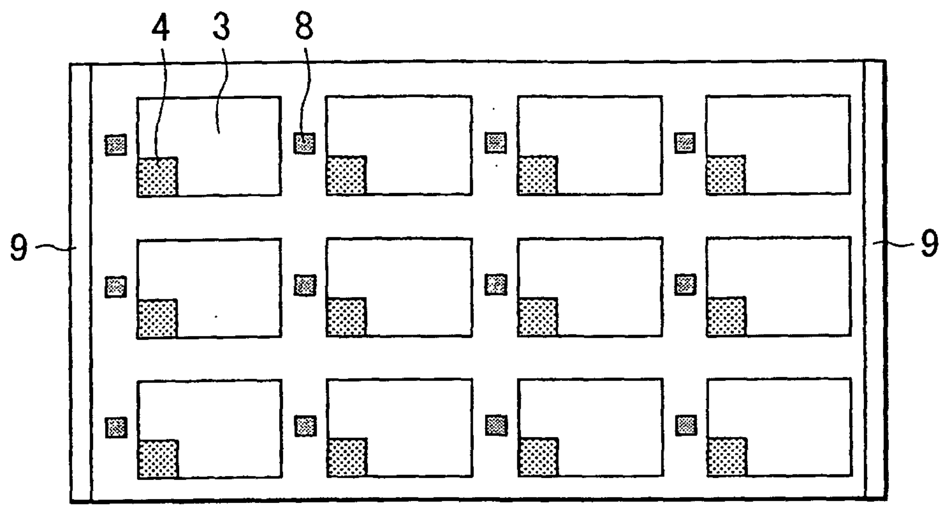
4
3
8
9
9

Fig.3

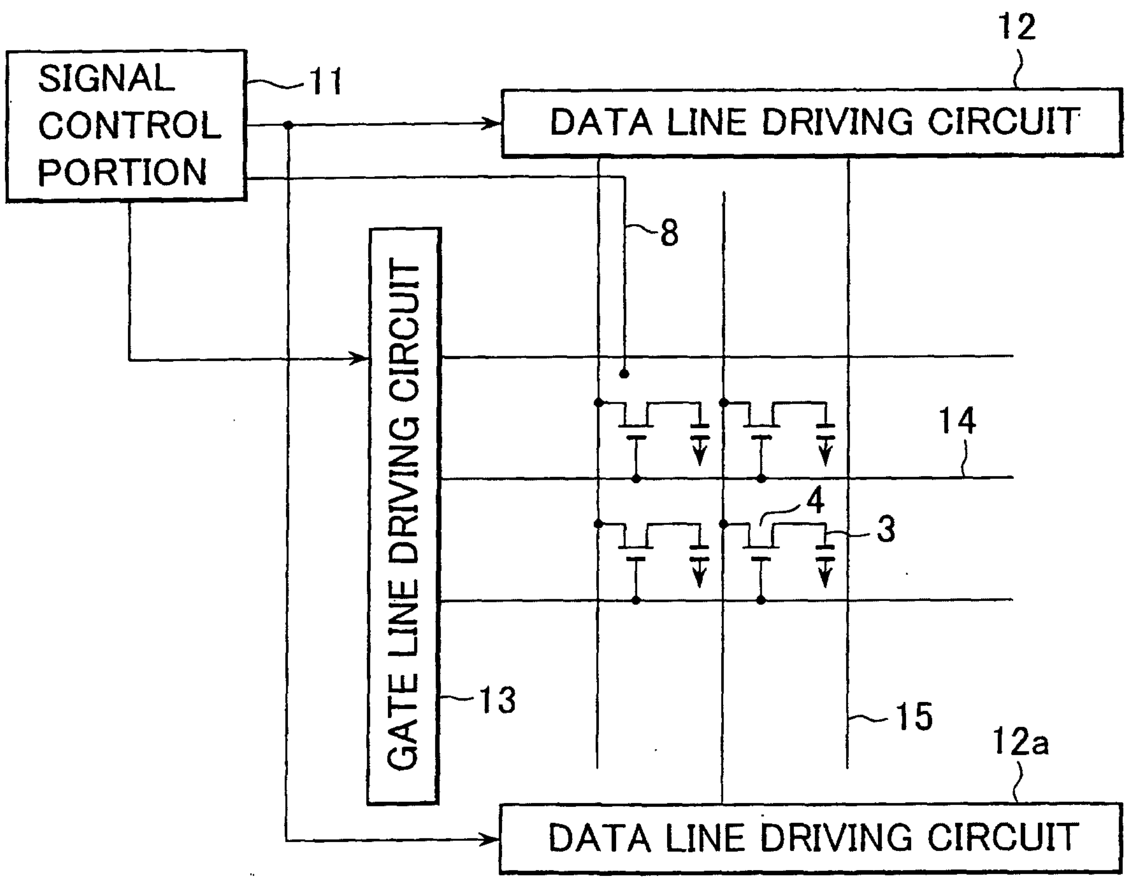
SIGNAL CONTROL PORTION
11
12
DATA LINE DRIVING CIRCUIT
8
GATE LINE DRIVING CIRCUIT
14
4
3
13
15
12a
DATA LINE DRIVING CIRCUIT

Fig.4

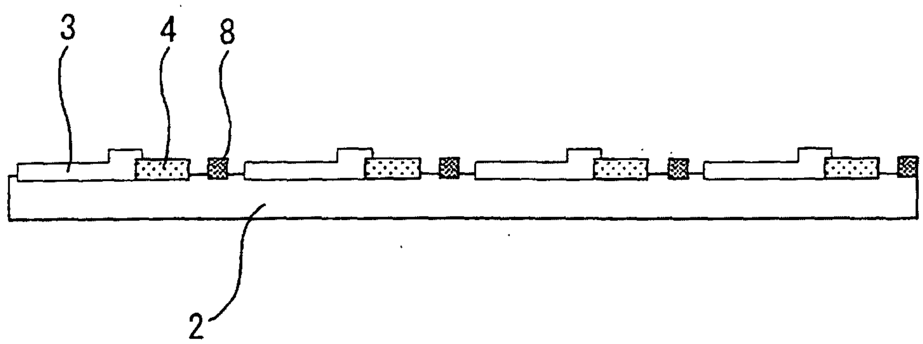


Fig.5

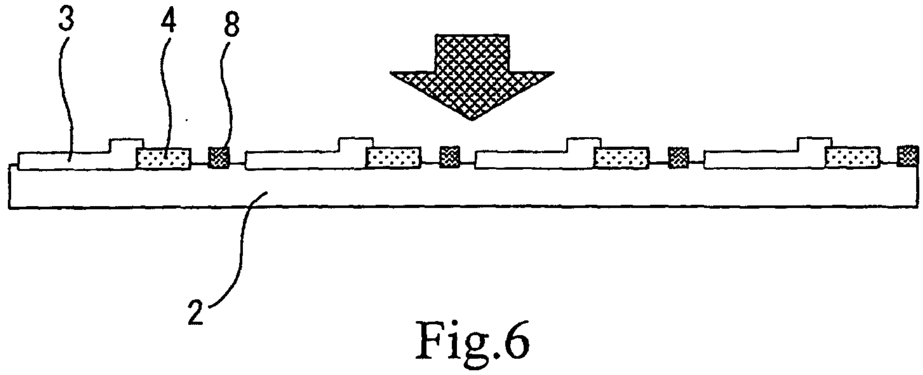


Fig.6

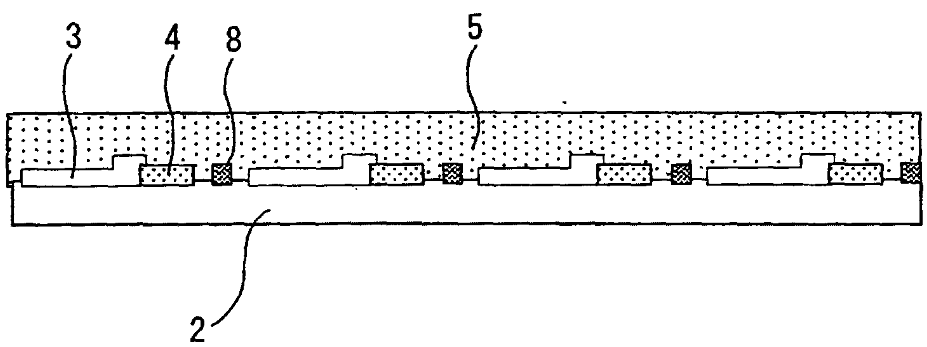


Fig.7

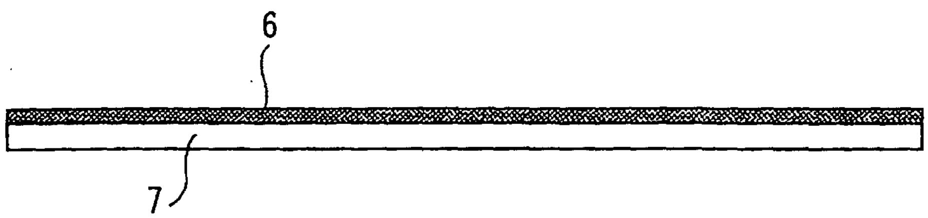


Fig.8

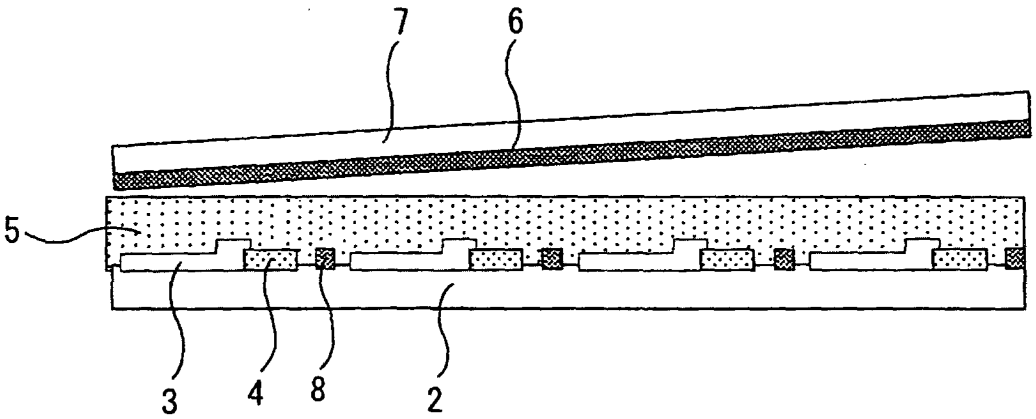


Fig.9

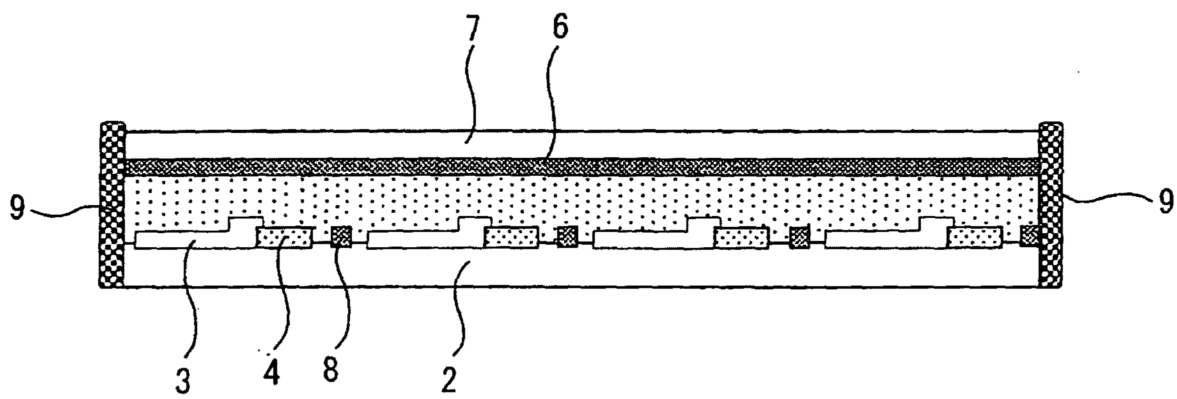


Fig.10

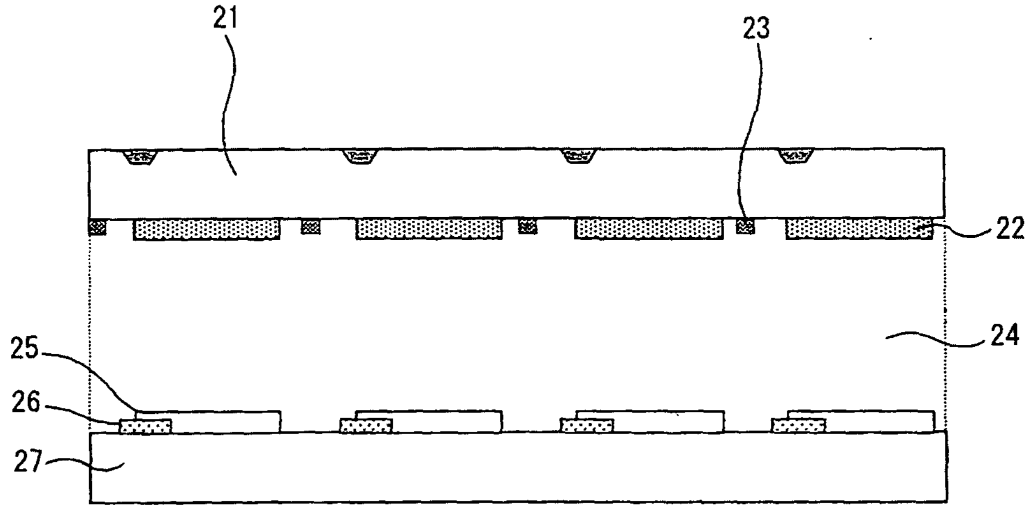


Fig.11

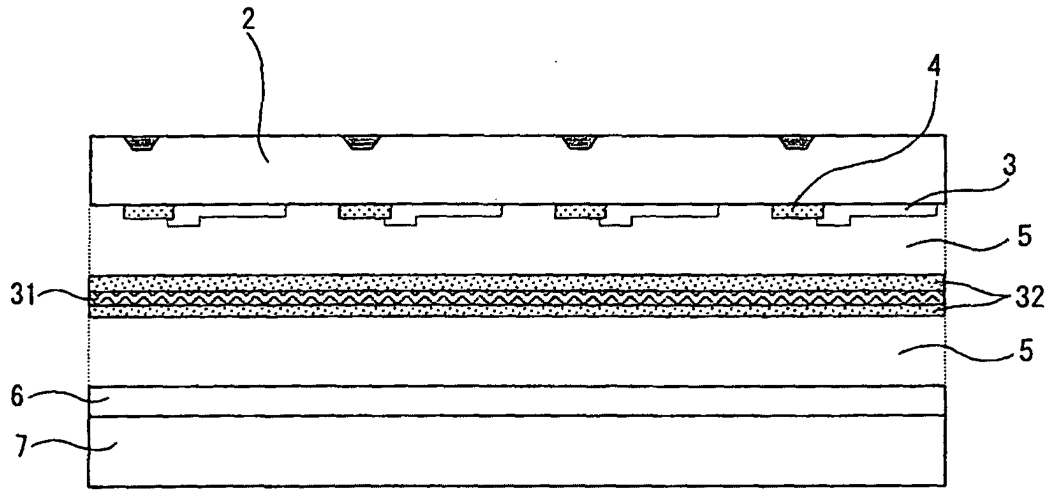


Fig.12

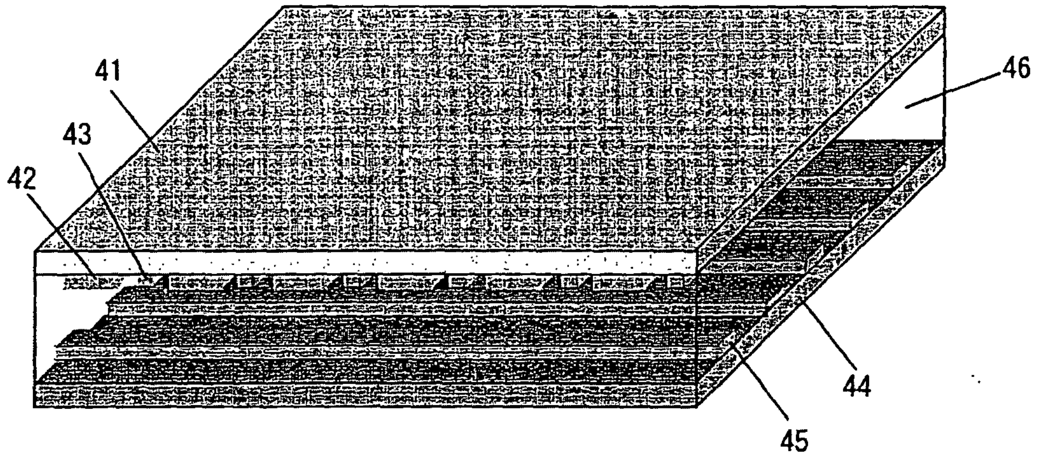


Fig.13

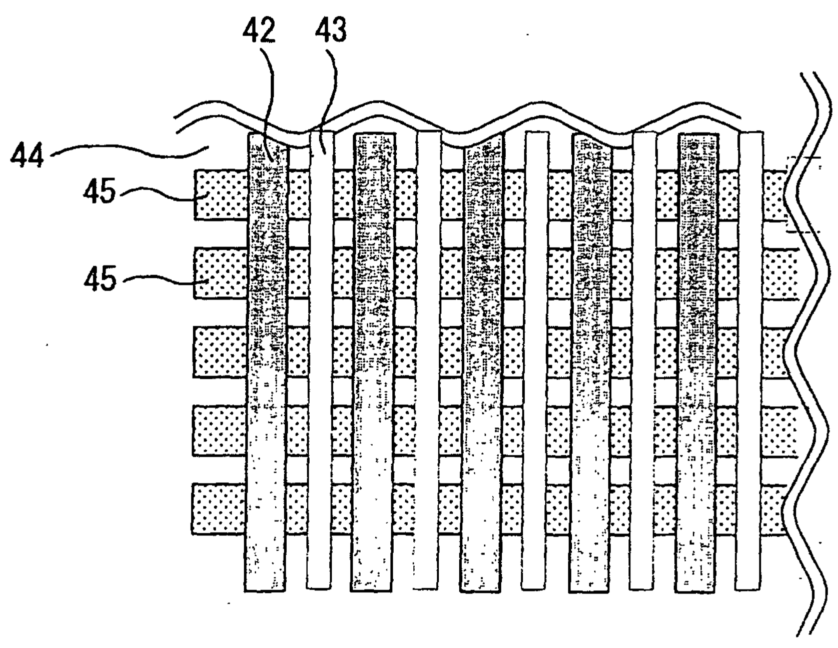


Fig.14

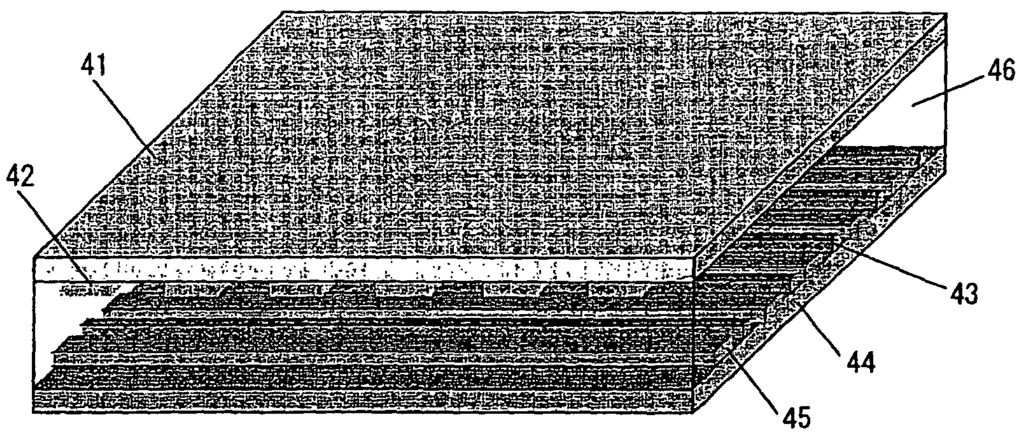


Fig.15

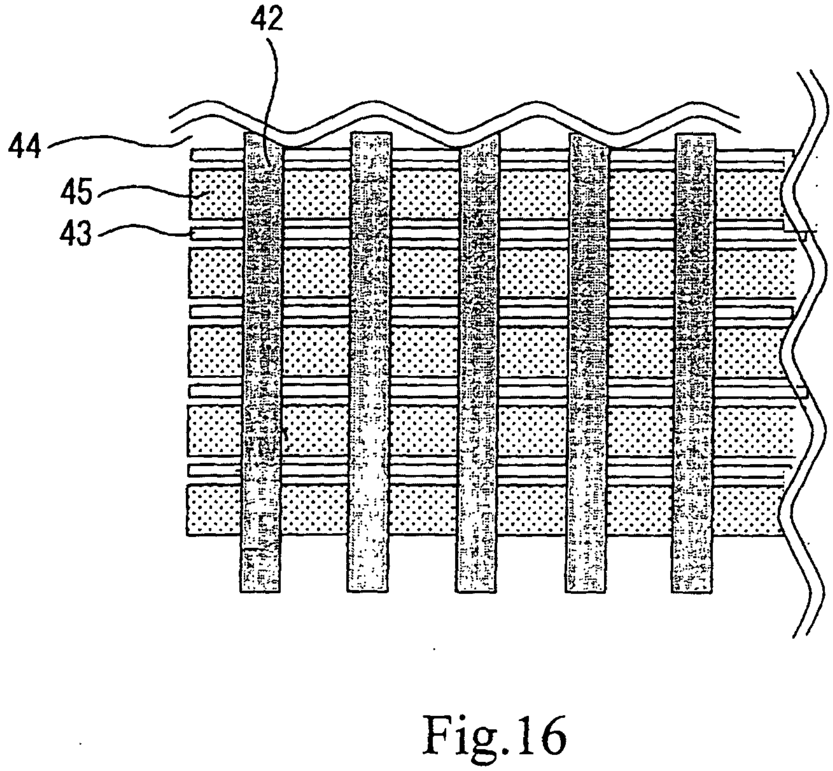


Fig.16

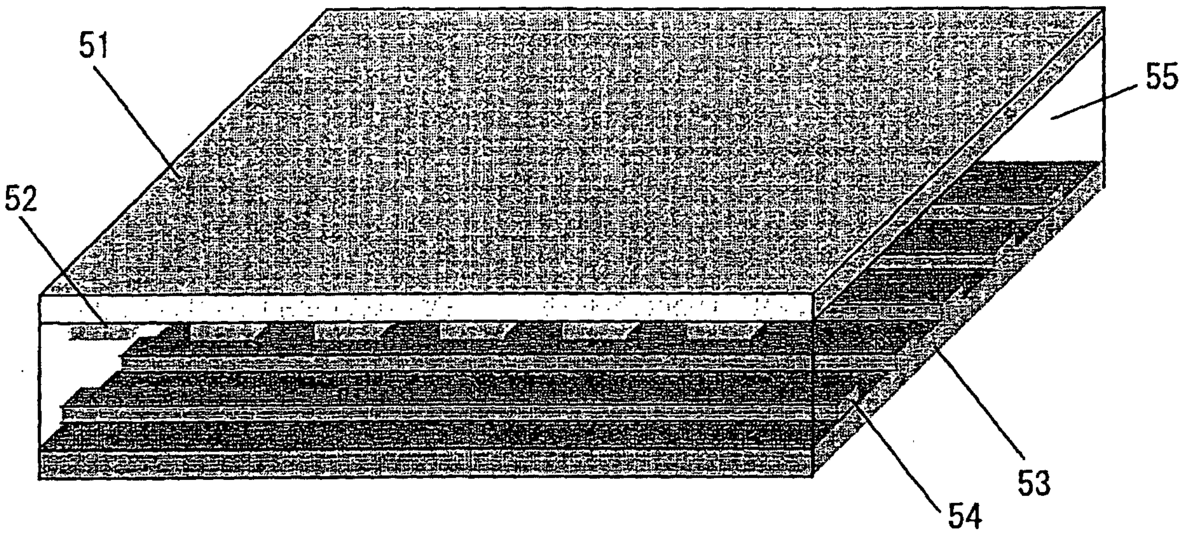


Fig.17

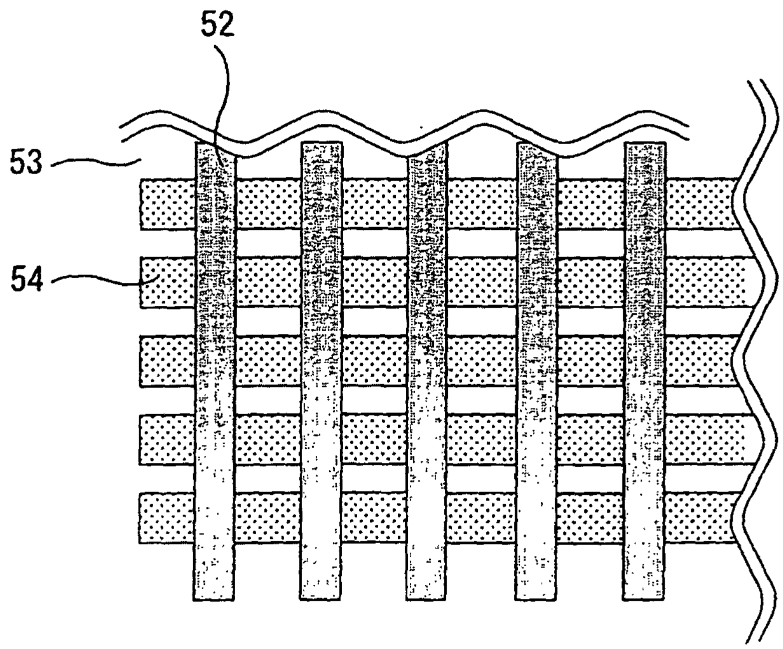


Fig.18

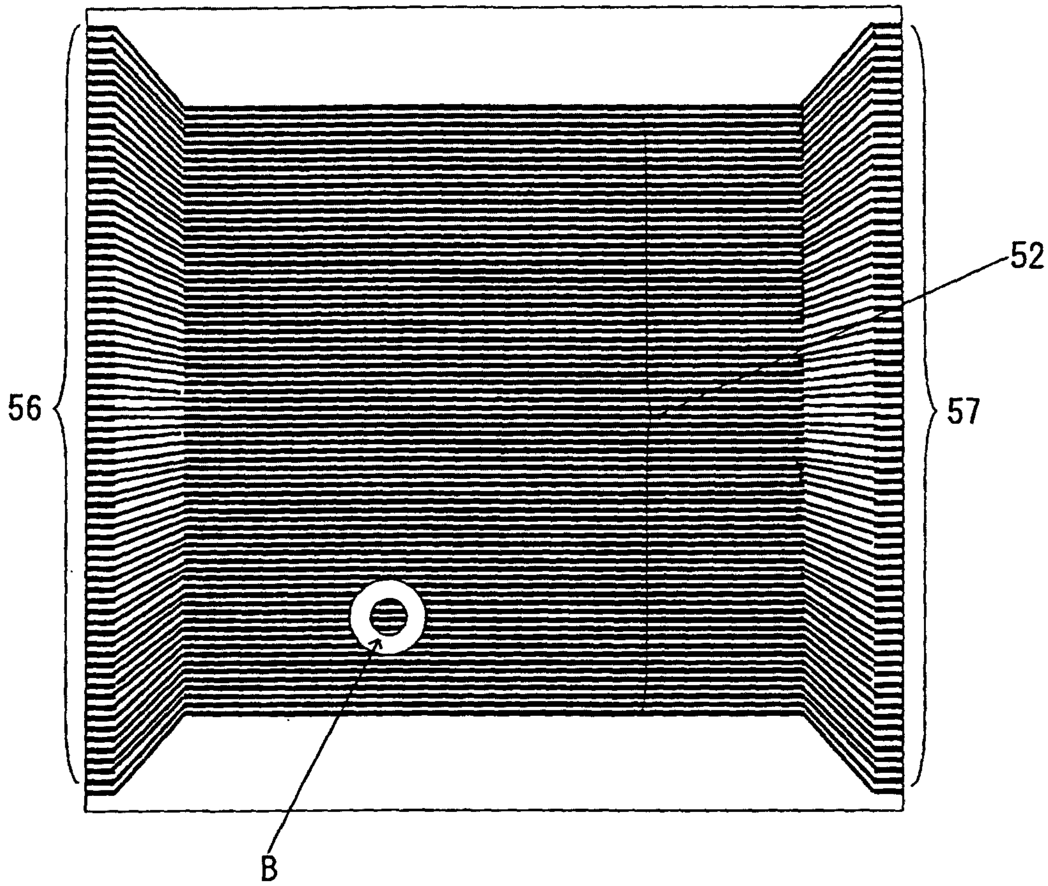


Fig.19

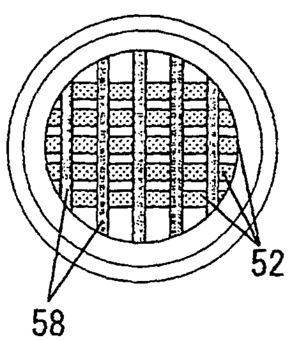


Fig.20

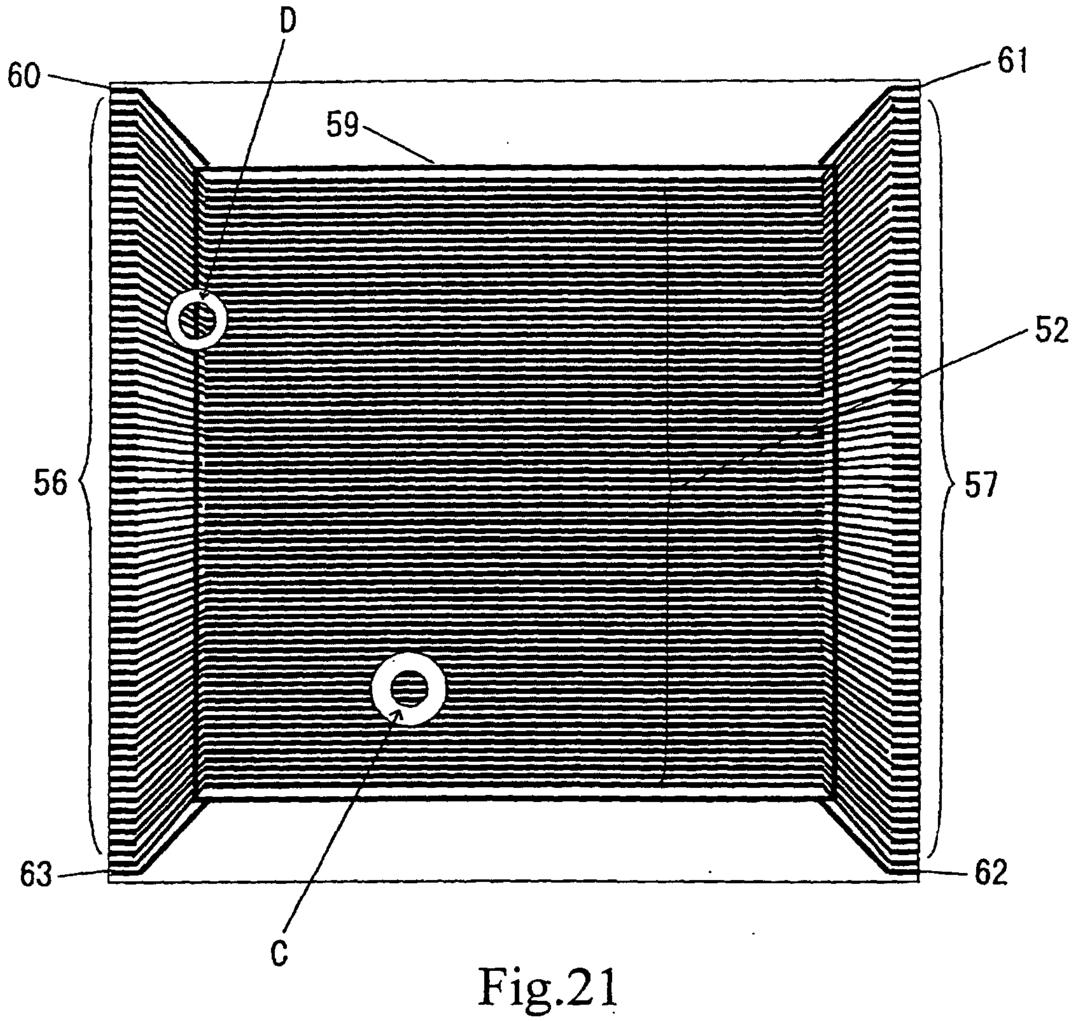


Fig.21

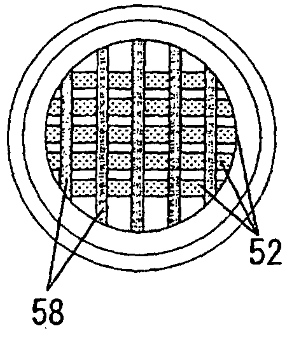


Fig.22

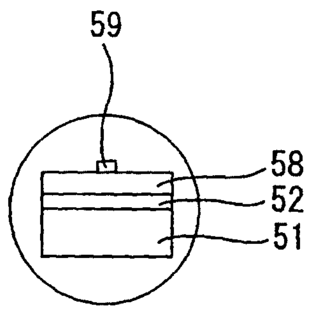


Fig.23

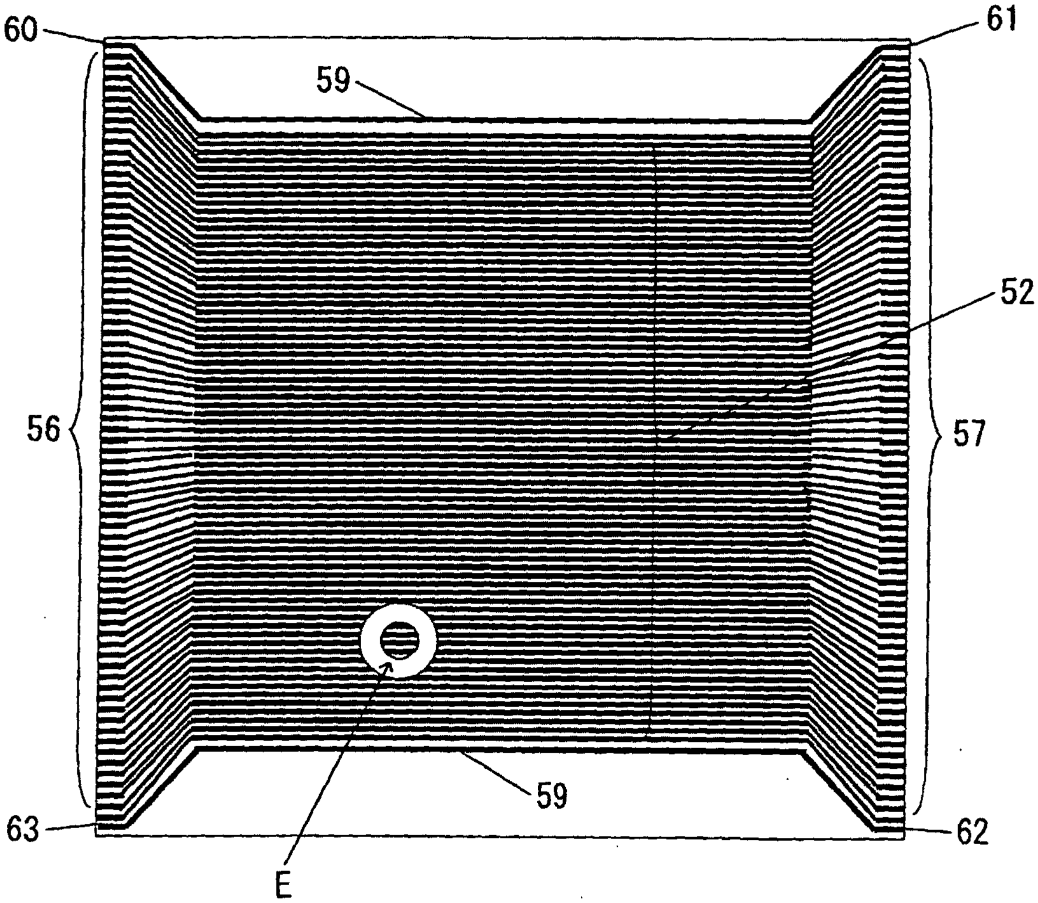


Fig.24

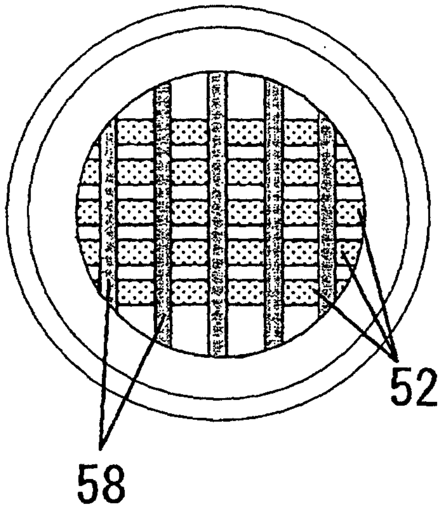


Fig.25

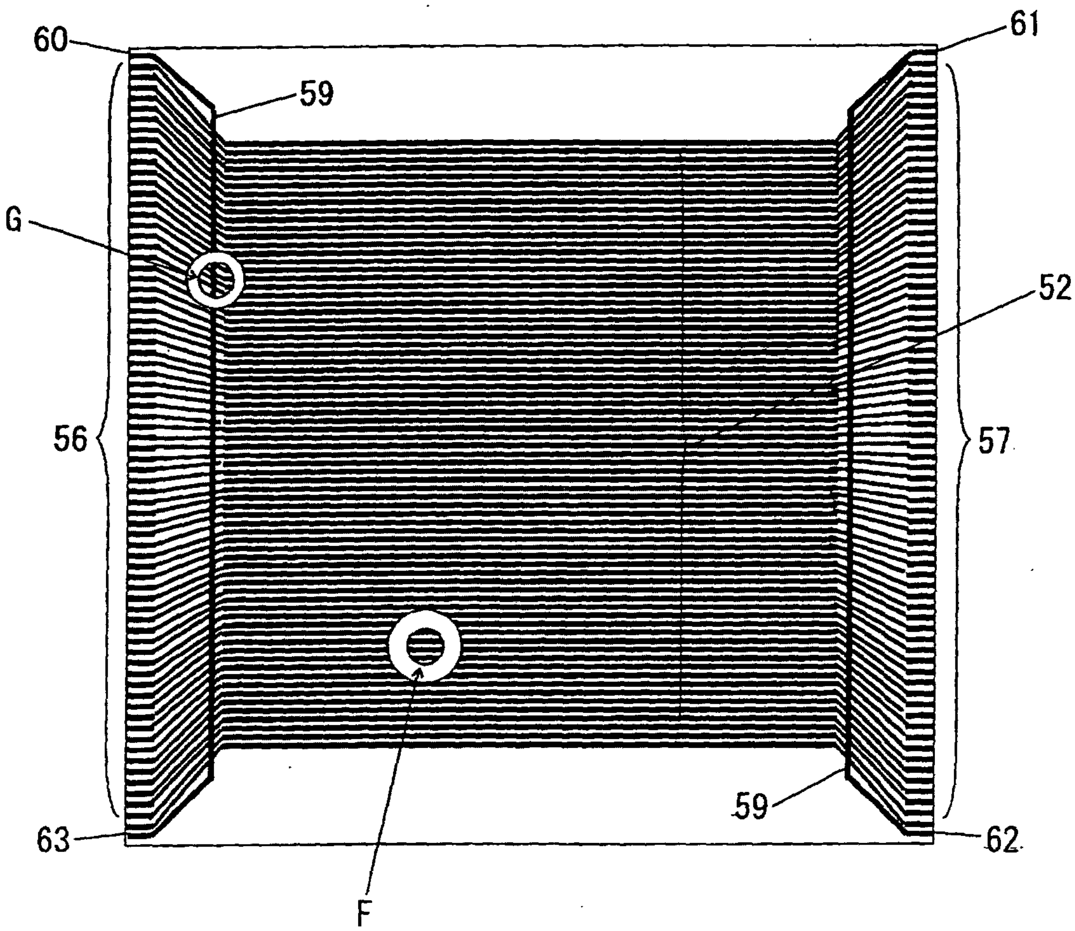


Fig.26

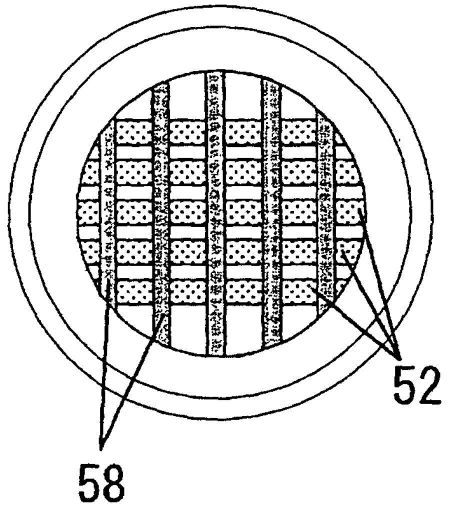


Fig.27

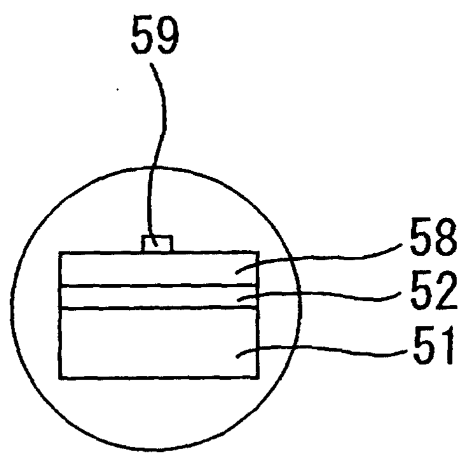


Fig.28

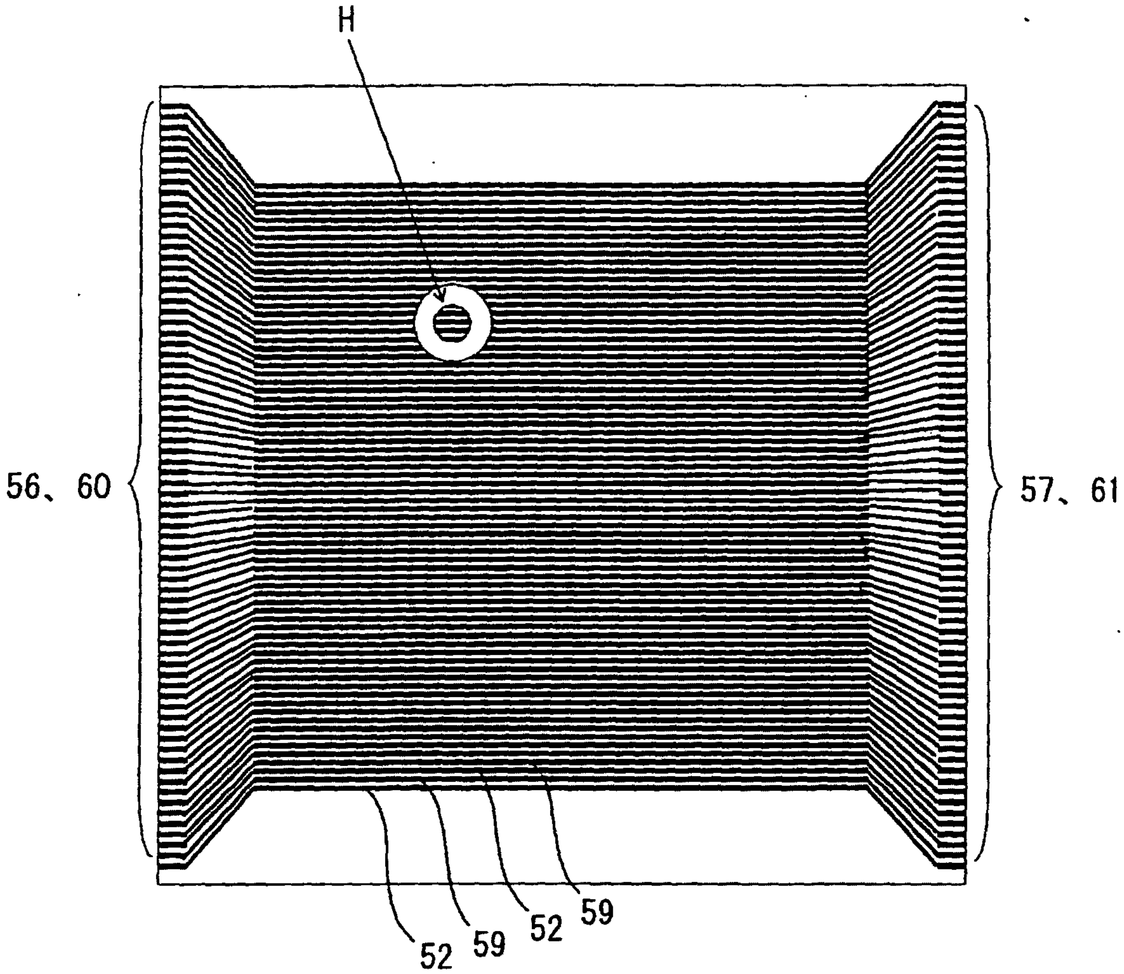


Fig.29

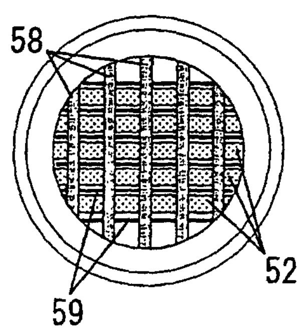


Fig.30

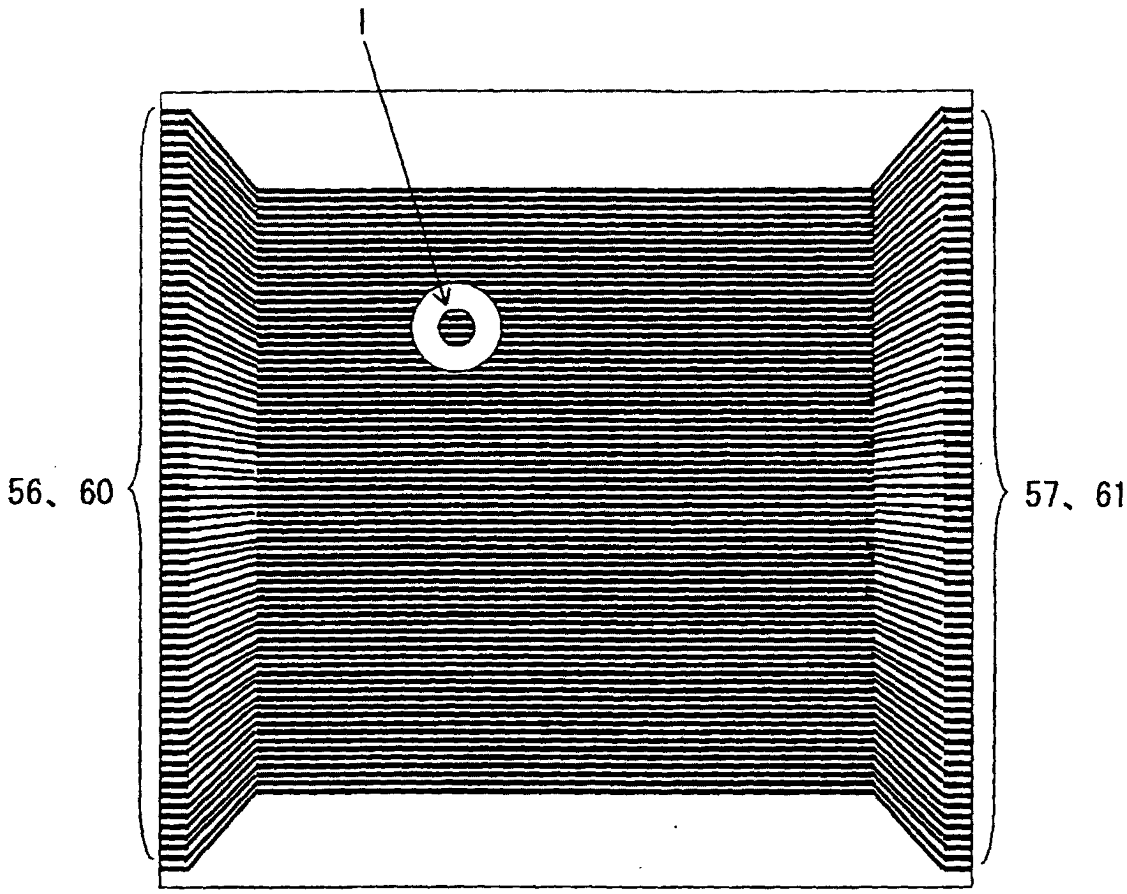


Fig.31

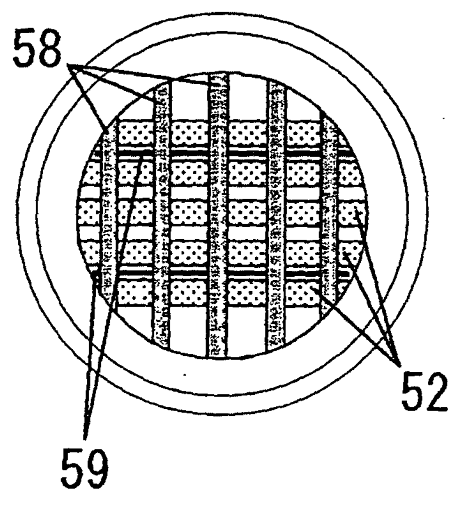


Fig.32

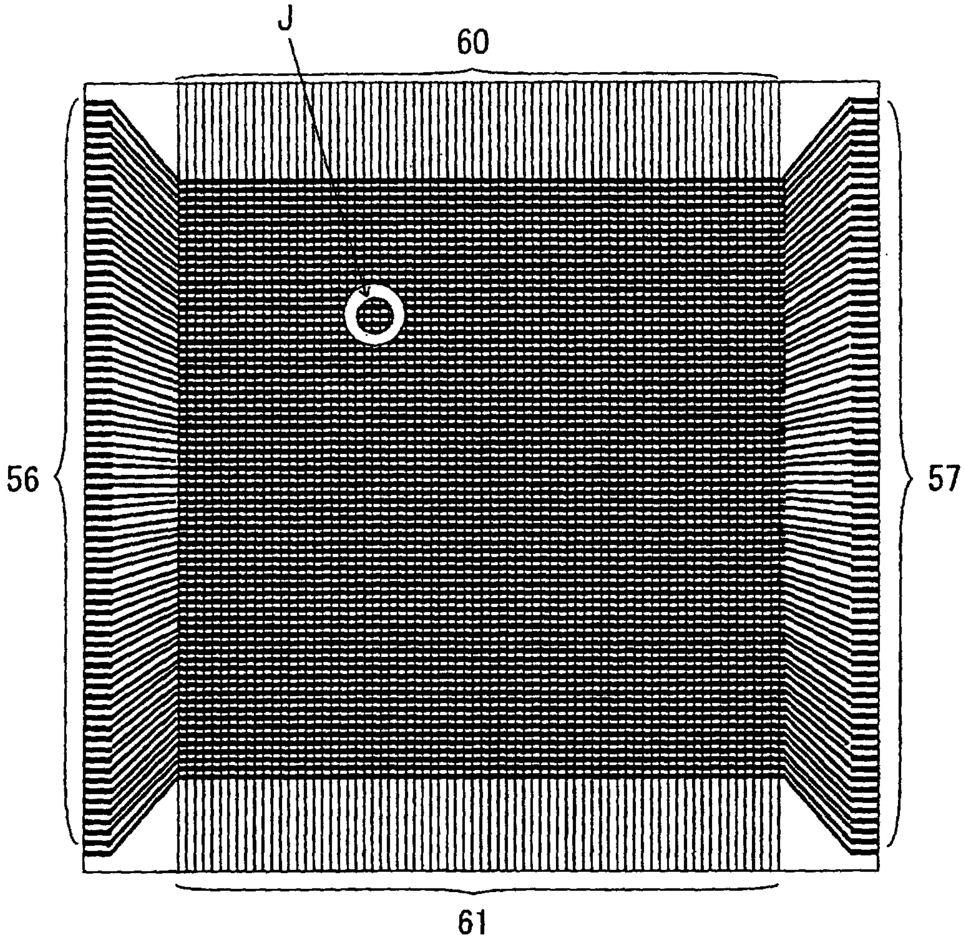


Fig.33

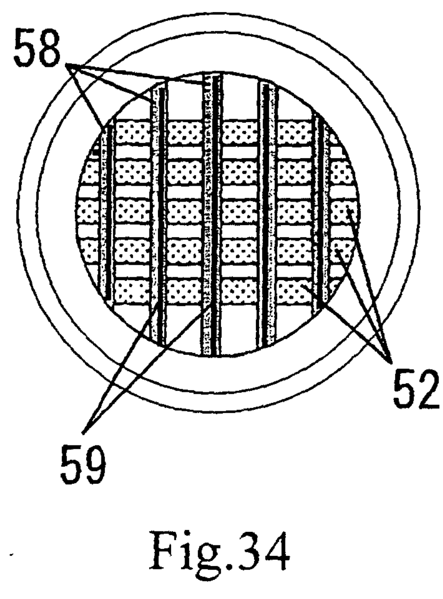


Fig.34

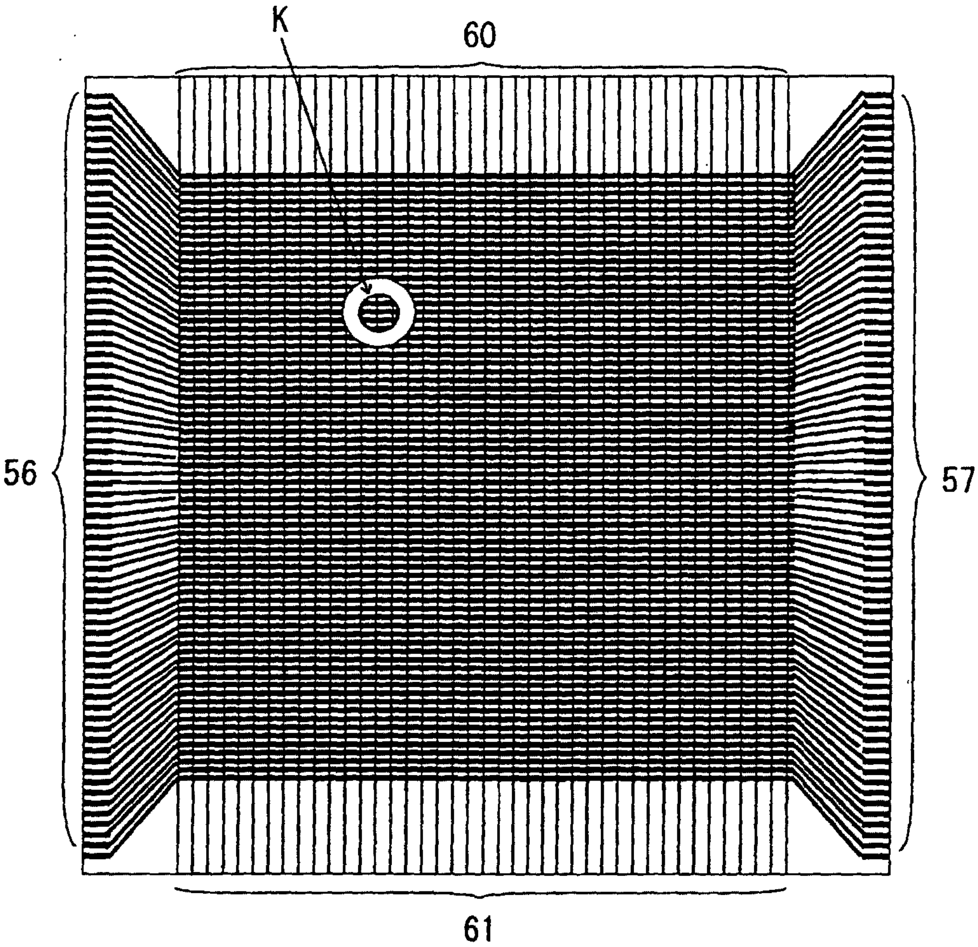


Fig.35

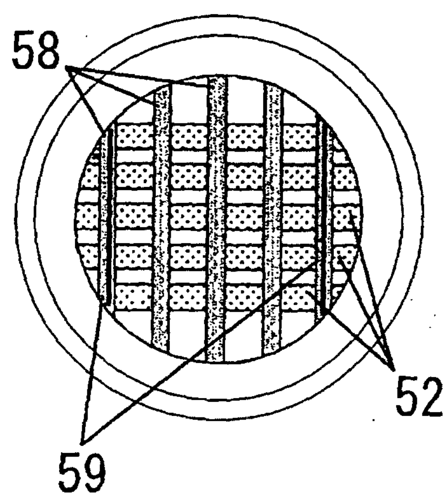


Fig.36

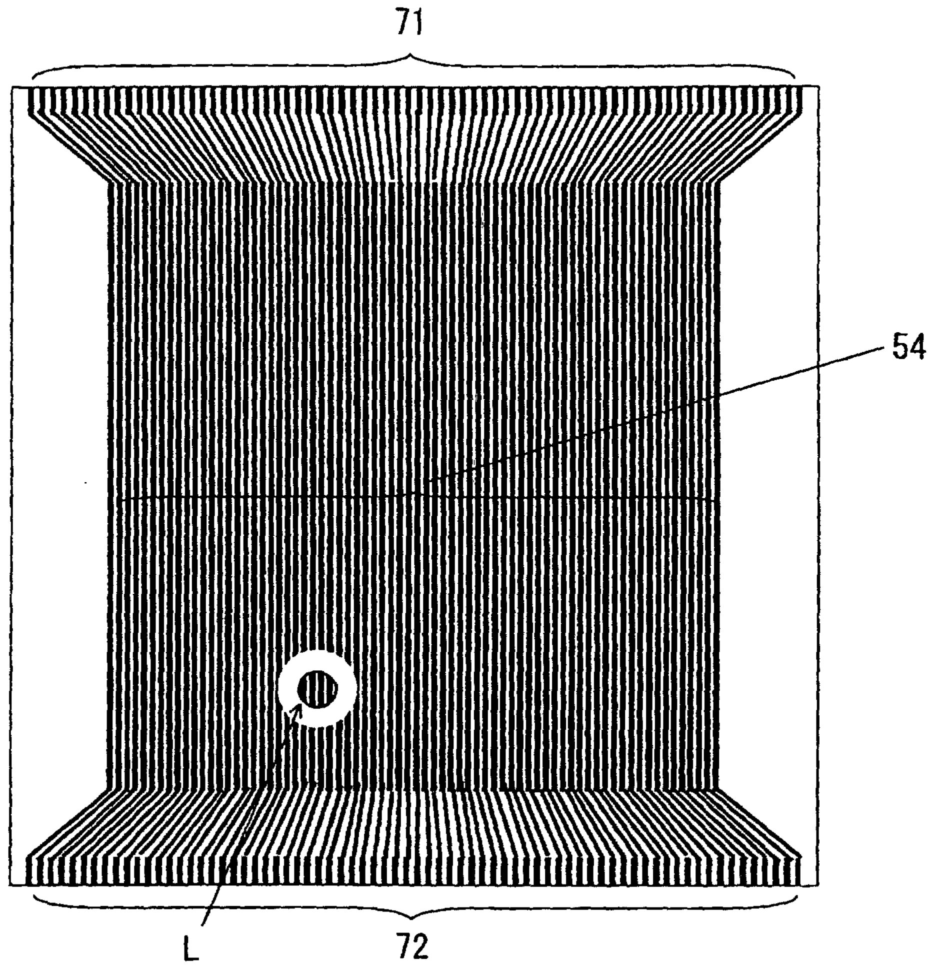


Fig.37

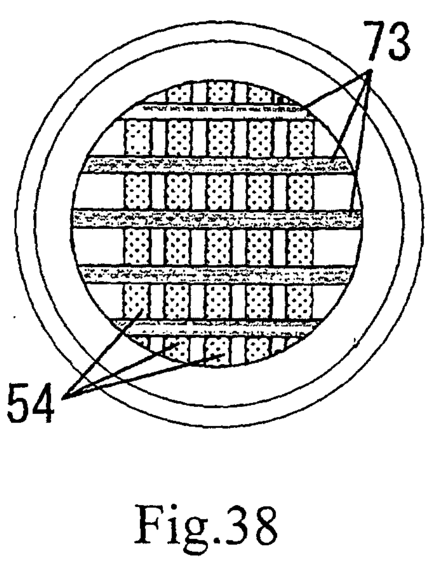


Fig.38

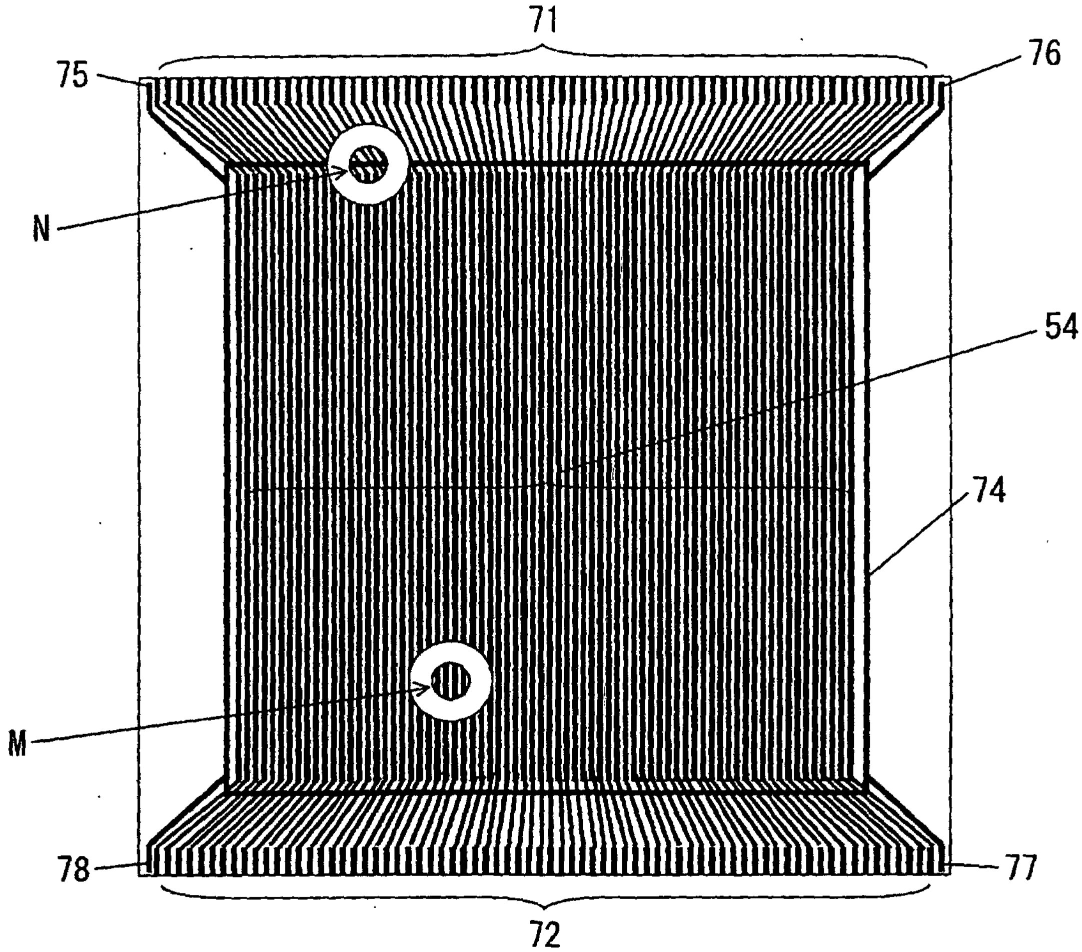


Fig.39

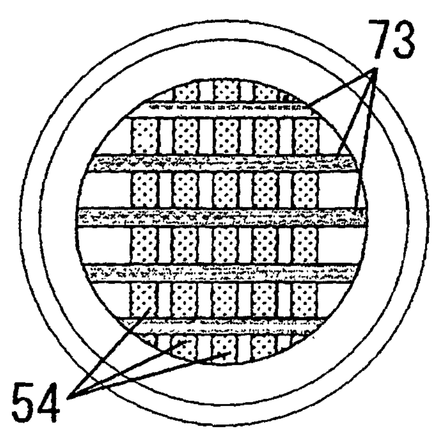


Fig.40

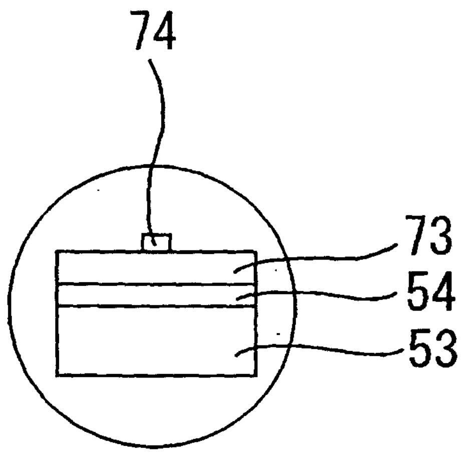


Fig.41

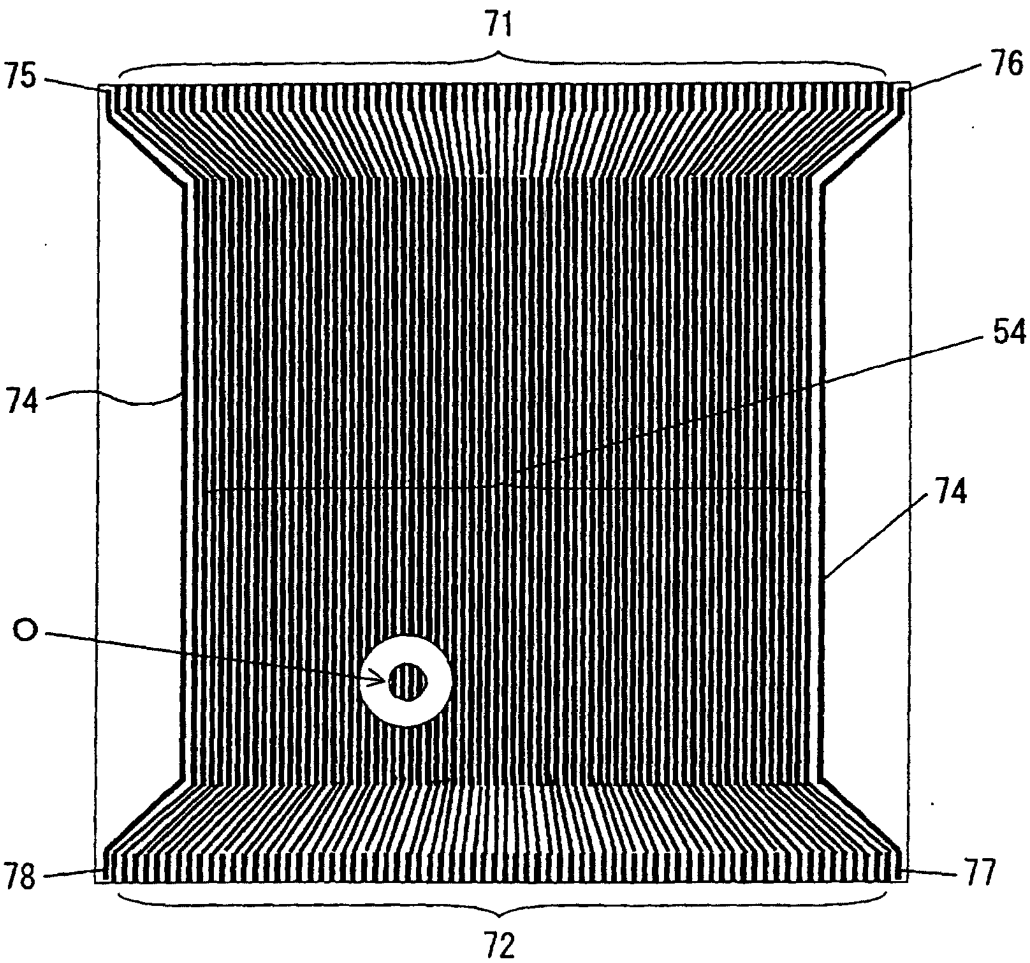


Fig.42

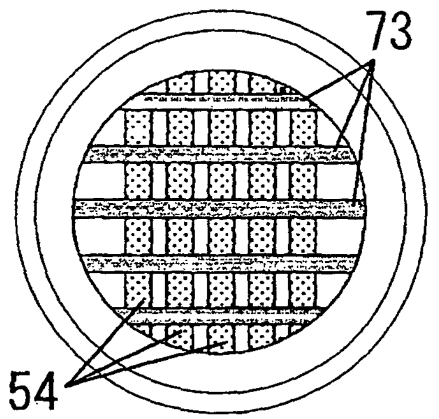


Fig.43

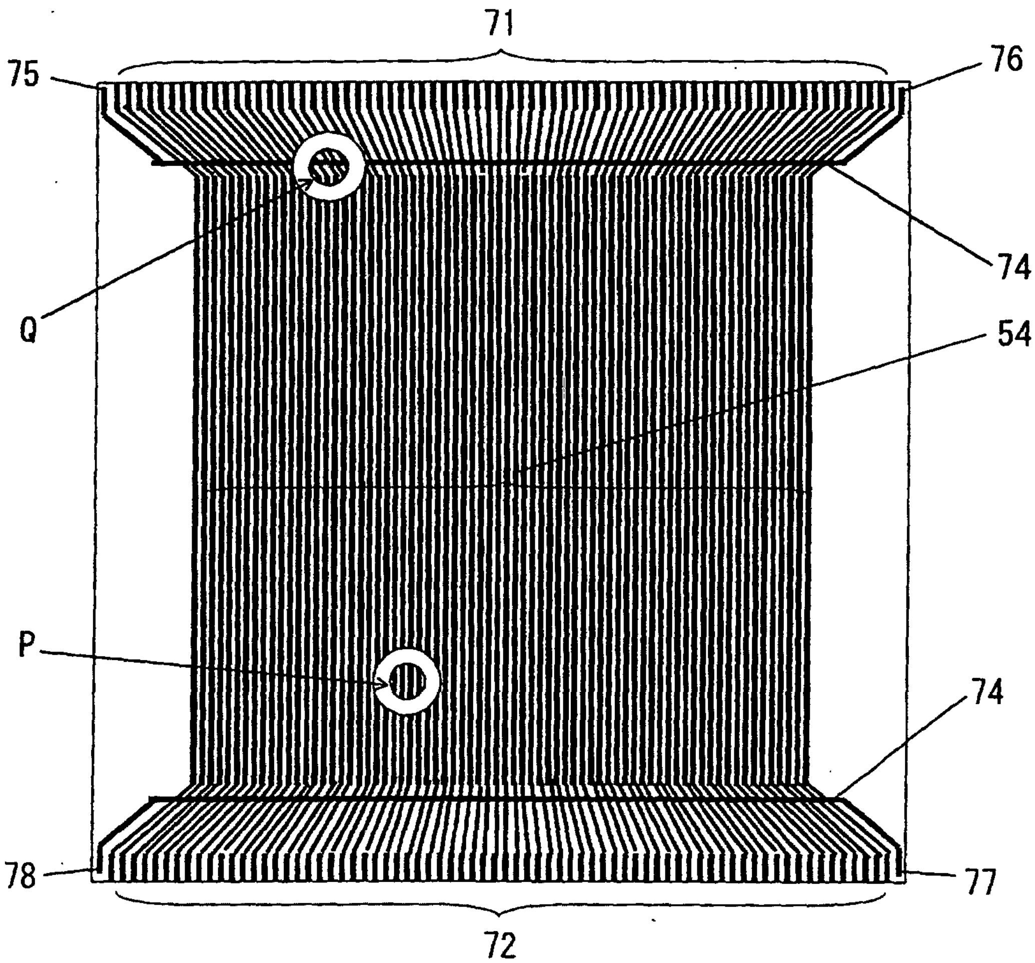


Fig.44

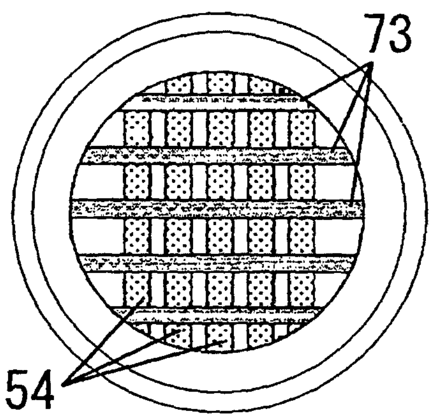


Fig.45

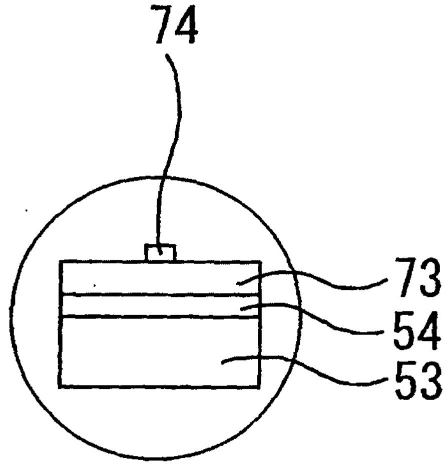


Fig.46

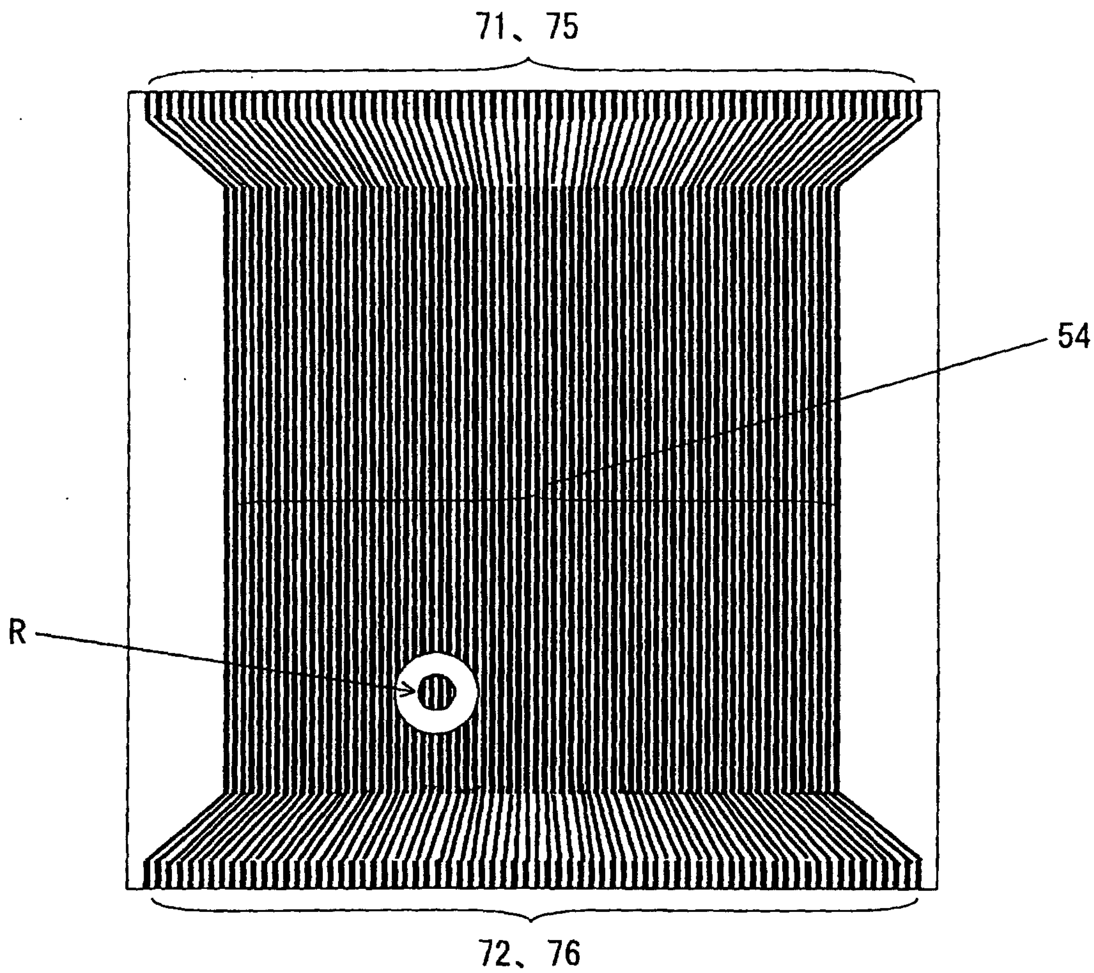


Fig.47

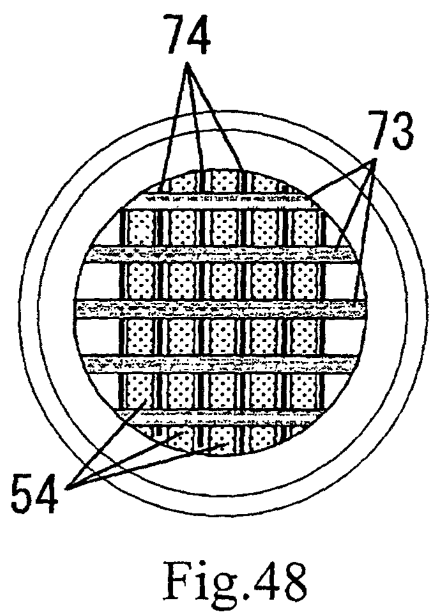


Fig.48

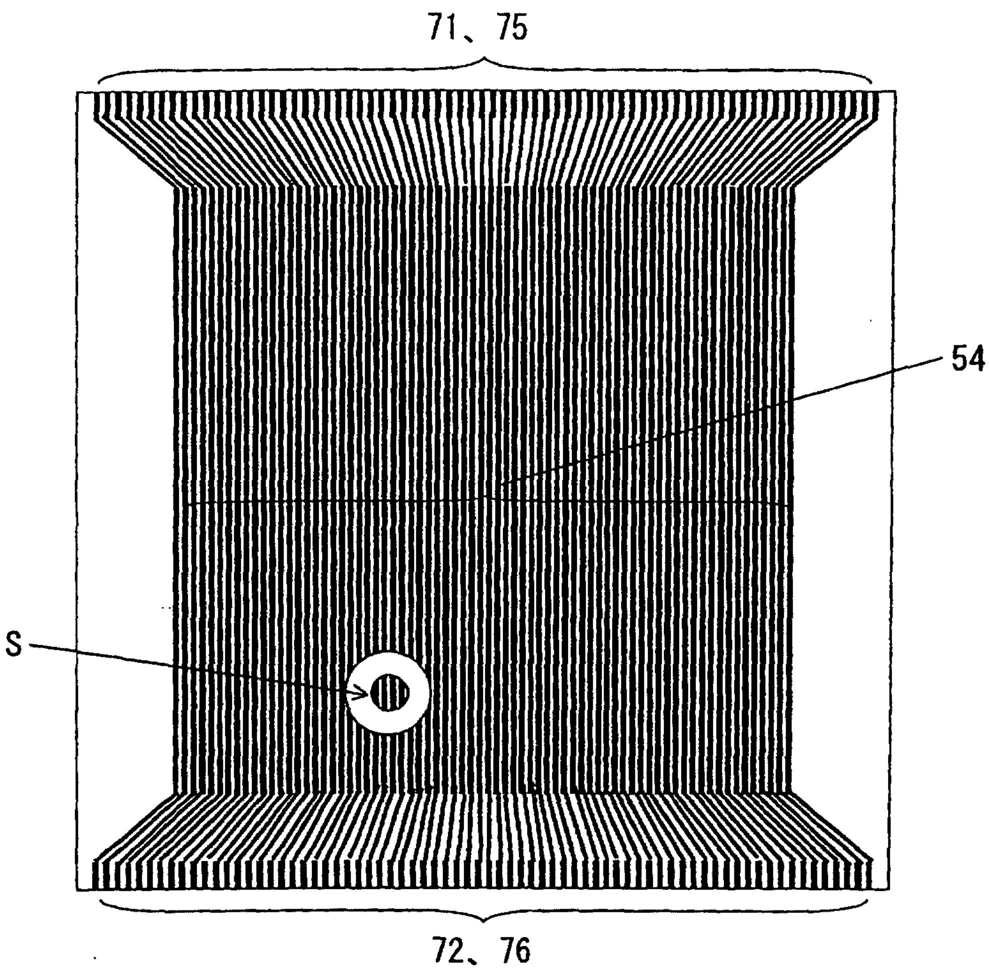


Fig.49

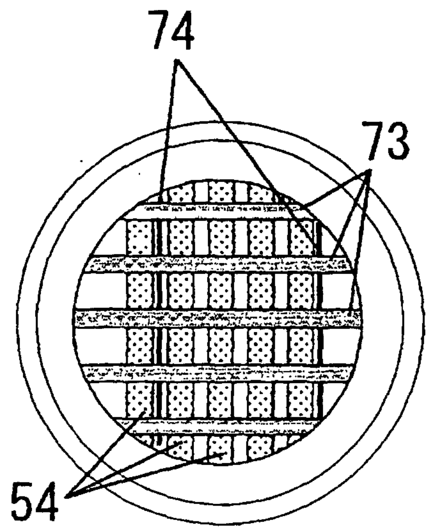


Fig.50

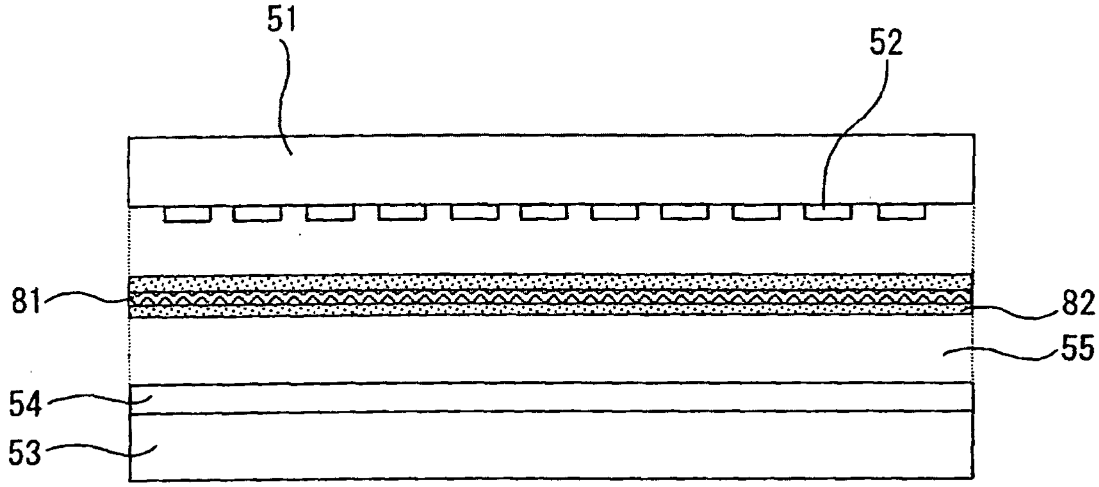


Fig.51

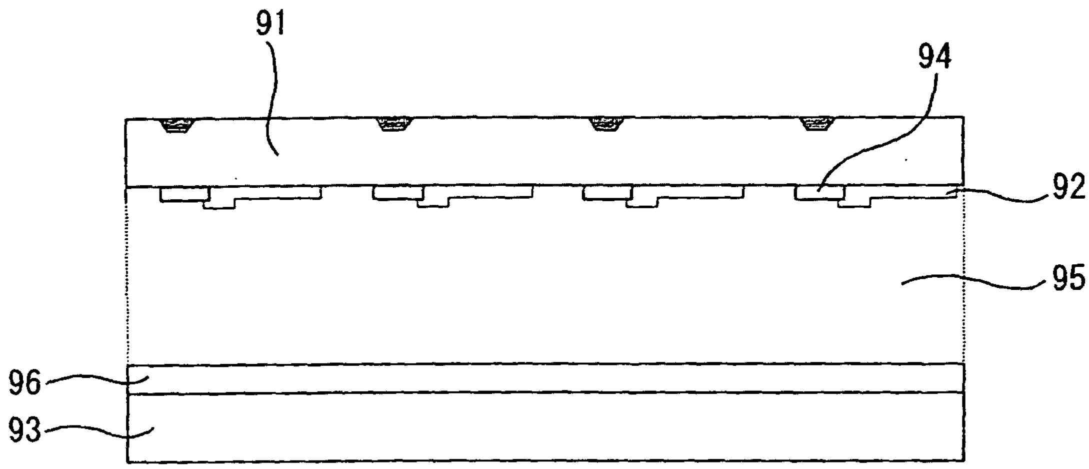


Fig.52

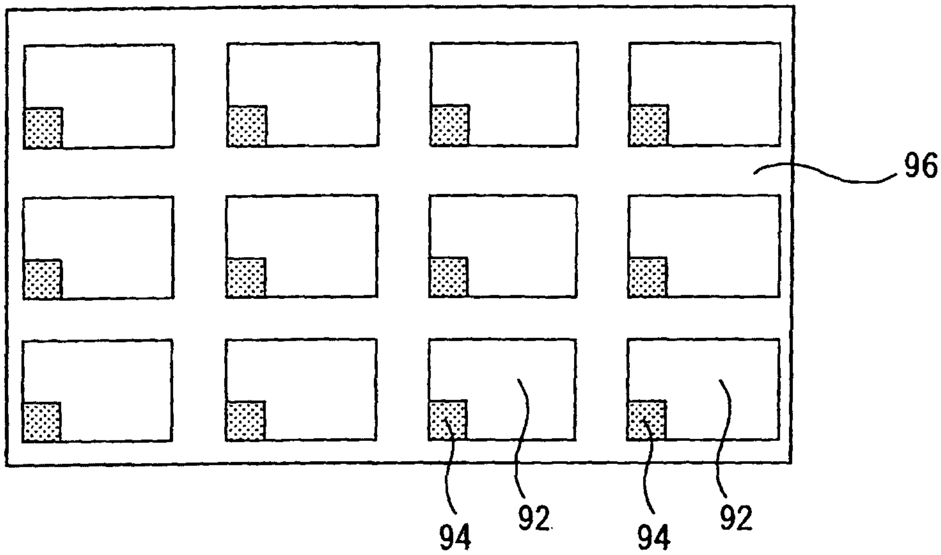


Fig.53

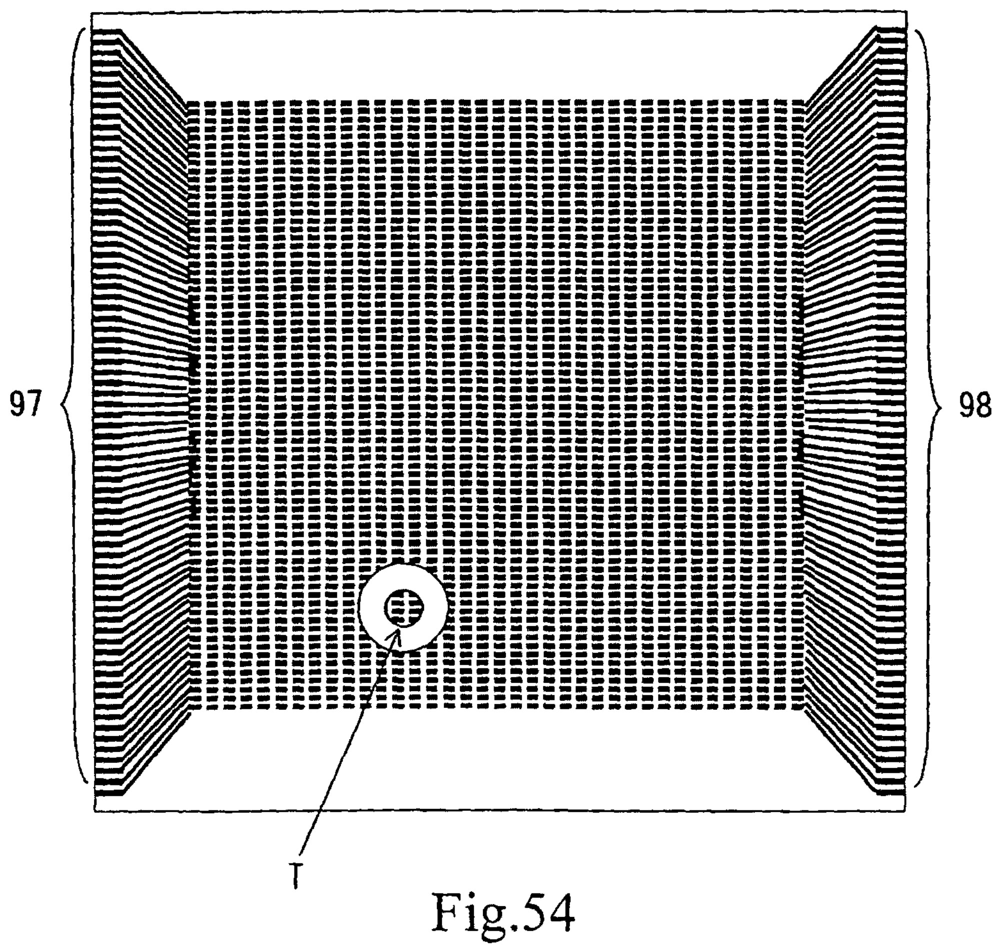


Fig.54

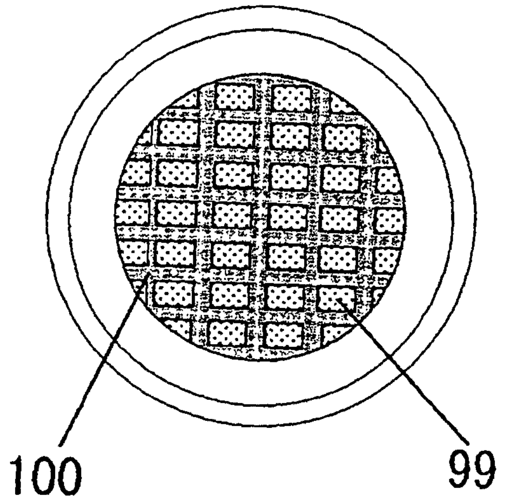


Fig.55

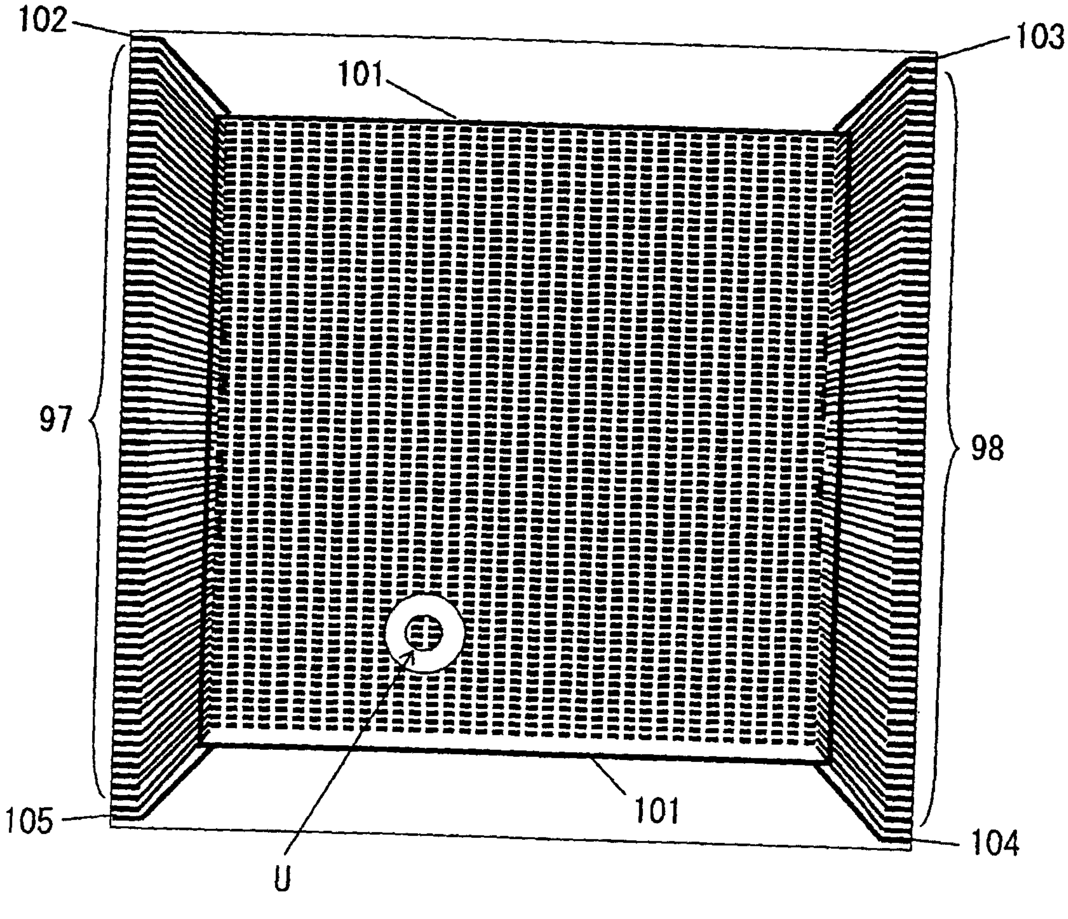


Fig.56

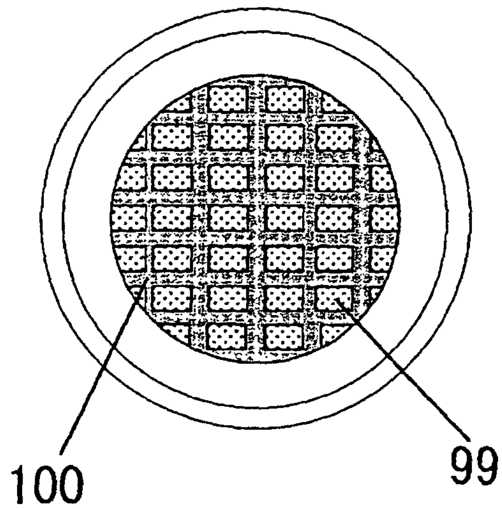


Fig.57

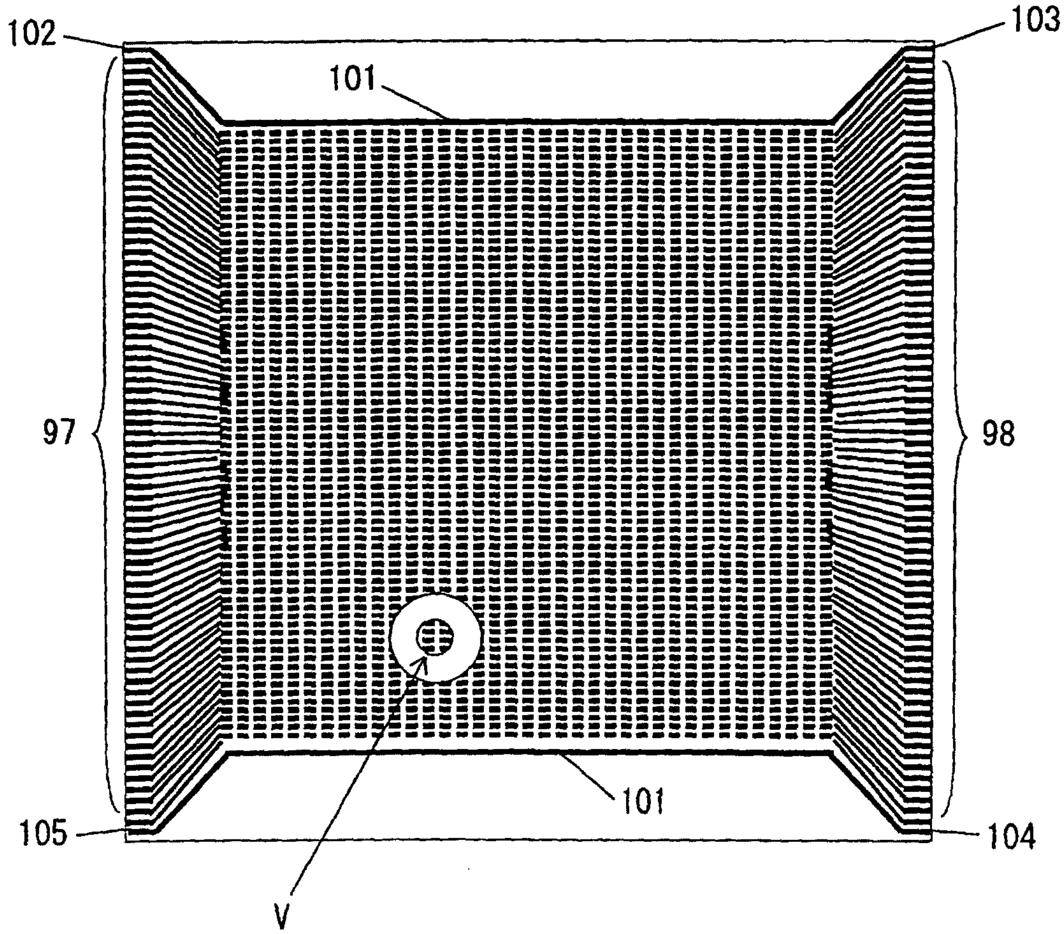


Fig.58

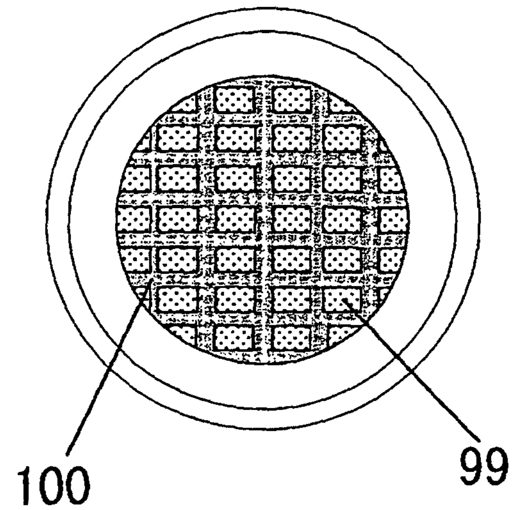


Fig.59

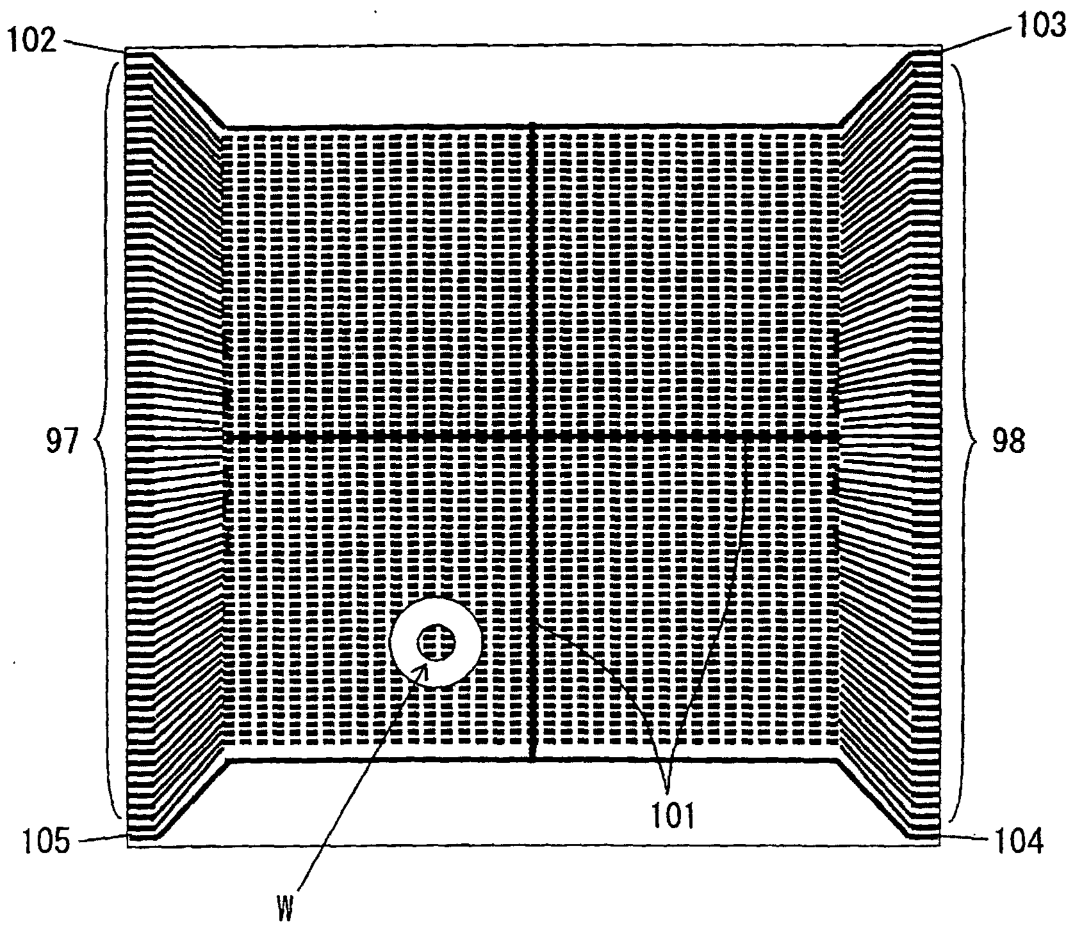


Fig.60

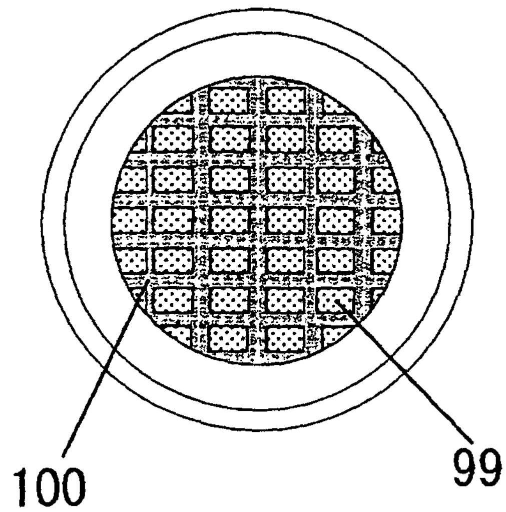


Fig.61

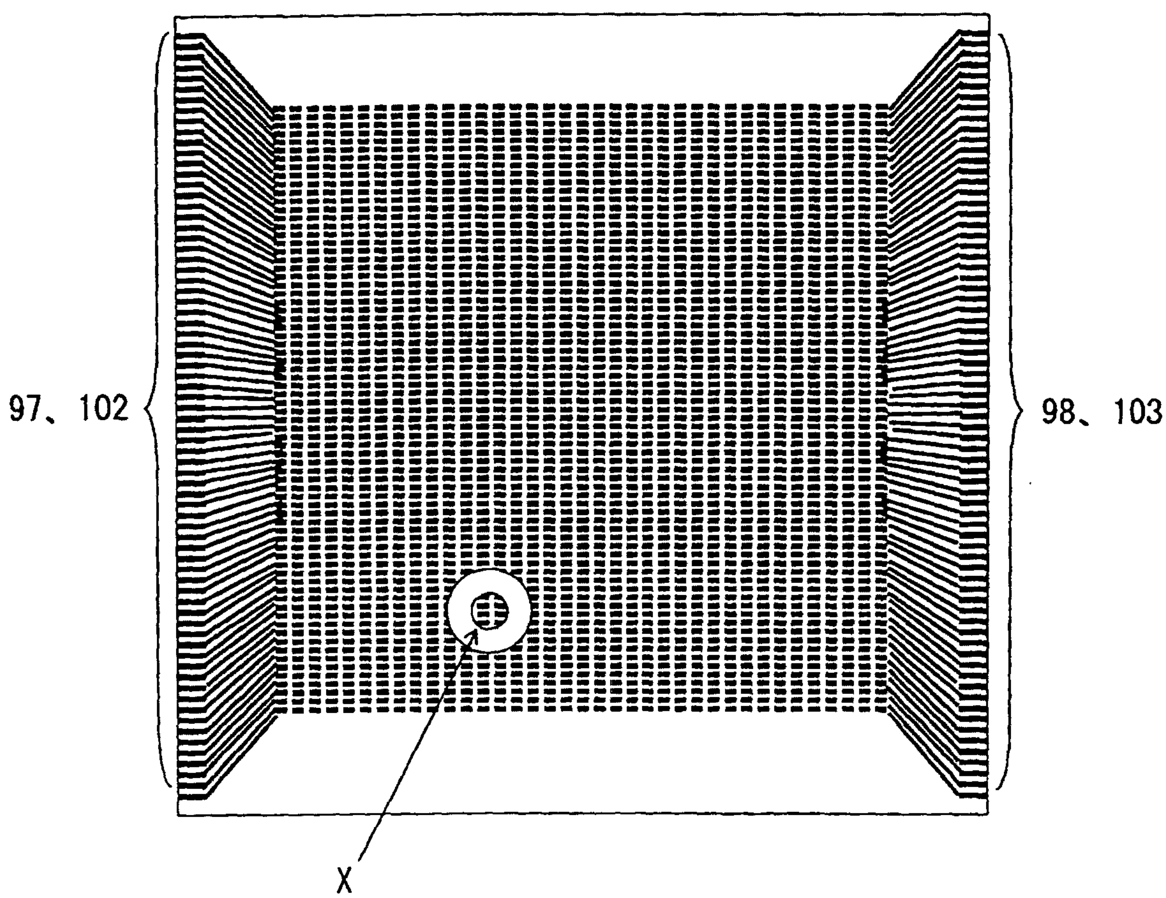


Fig.62

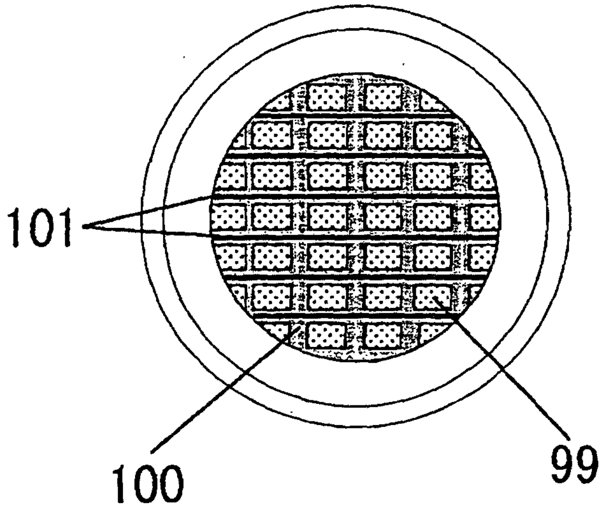


Fig.63

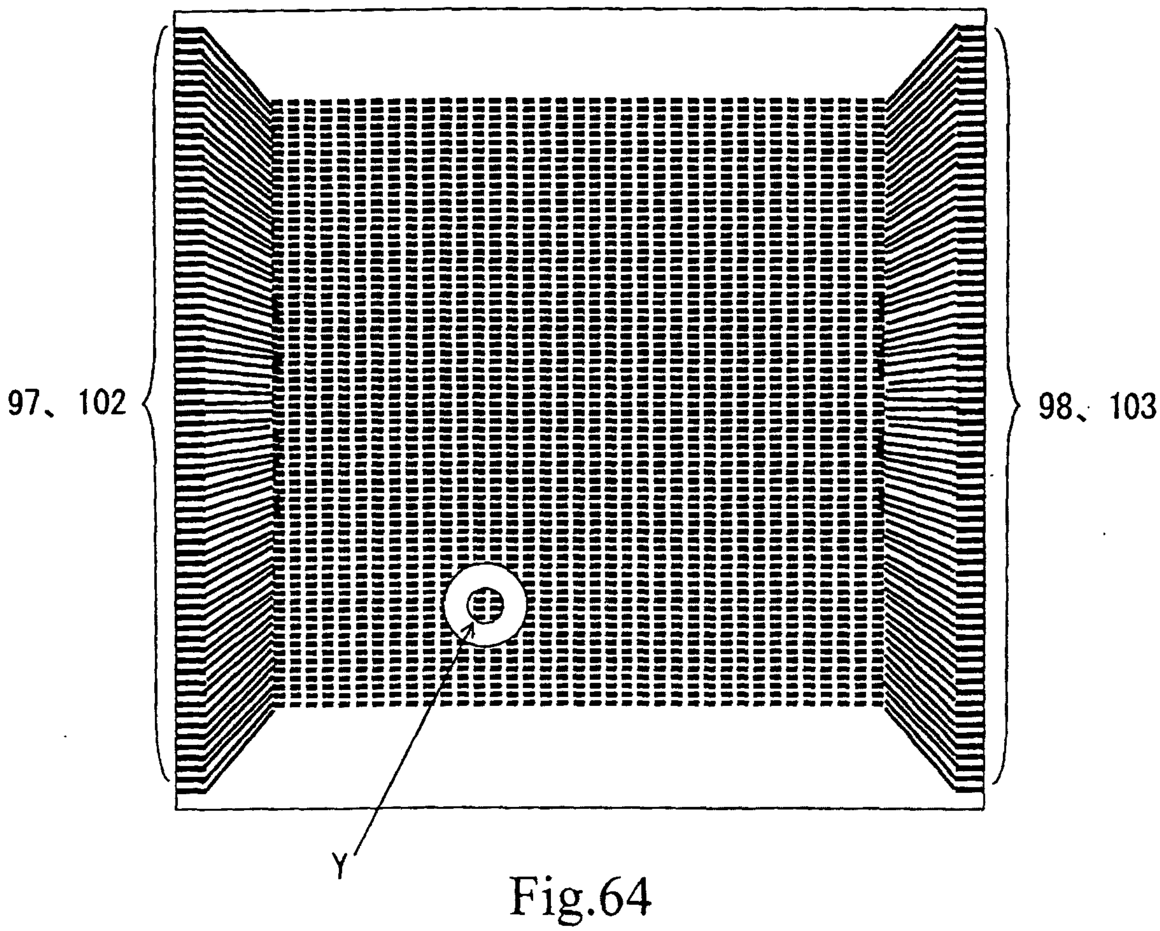


Fig.64

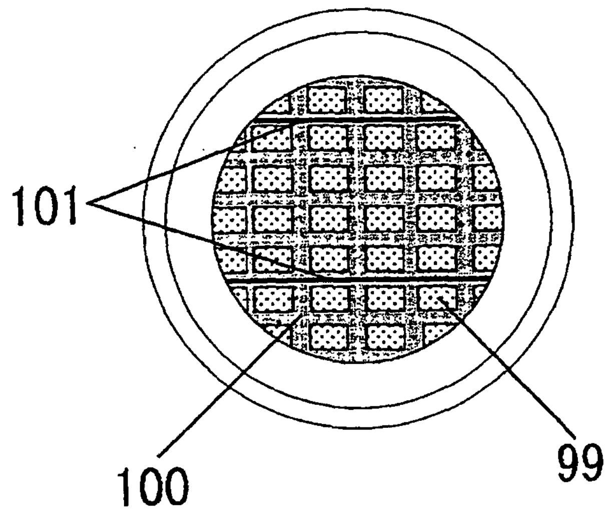


Fig.65

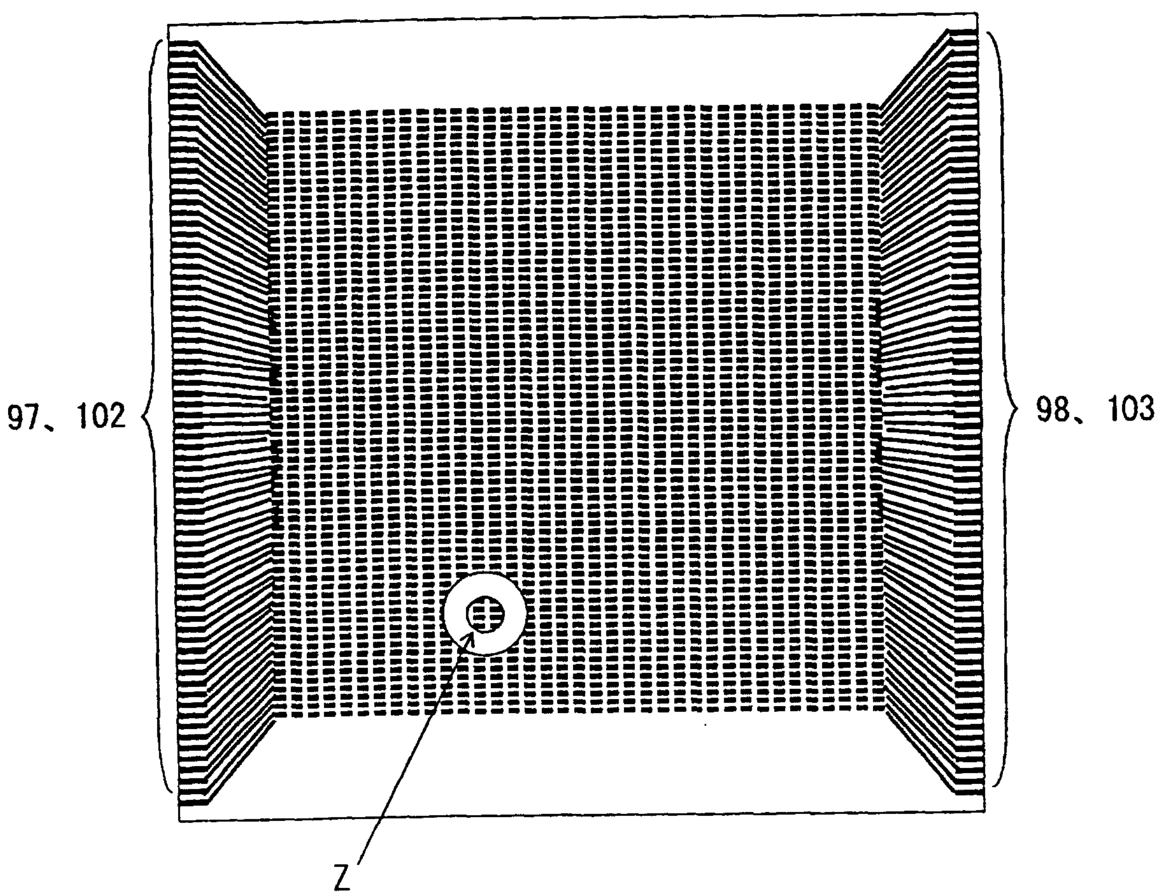


Fig.66

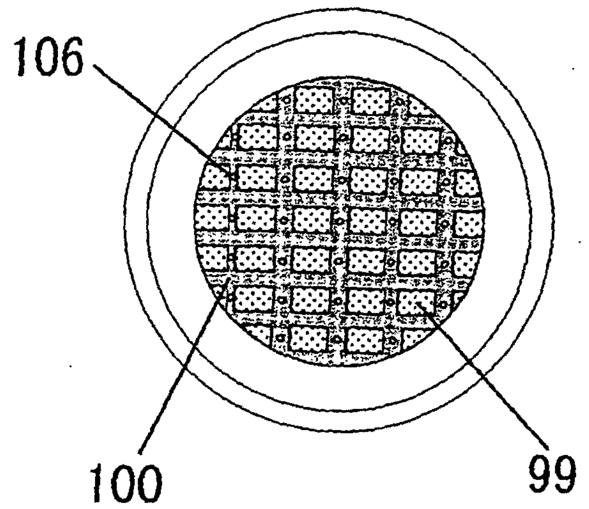


Fig.67

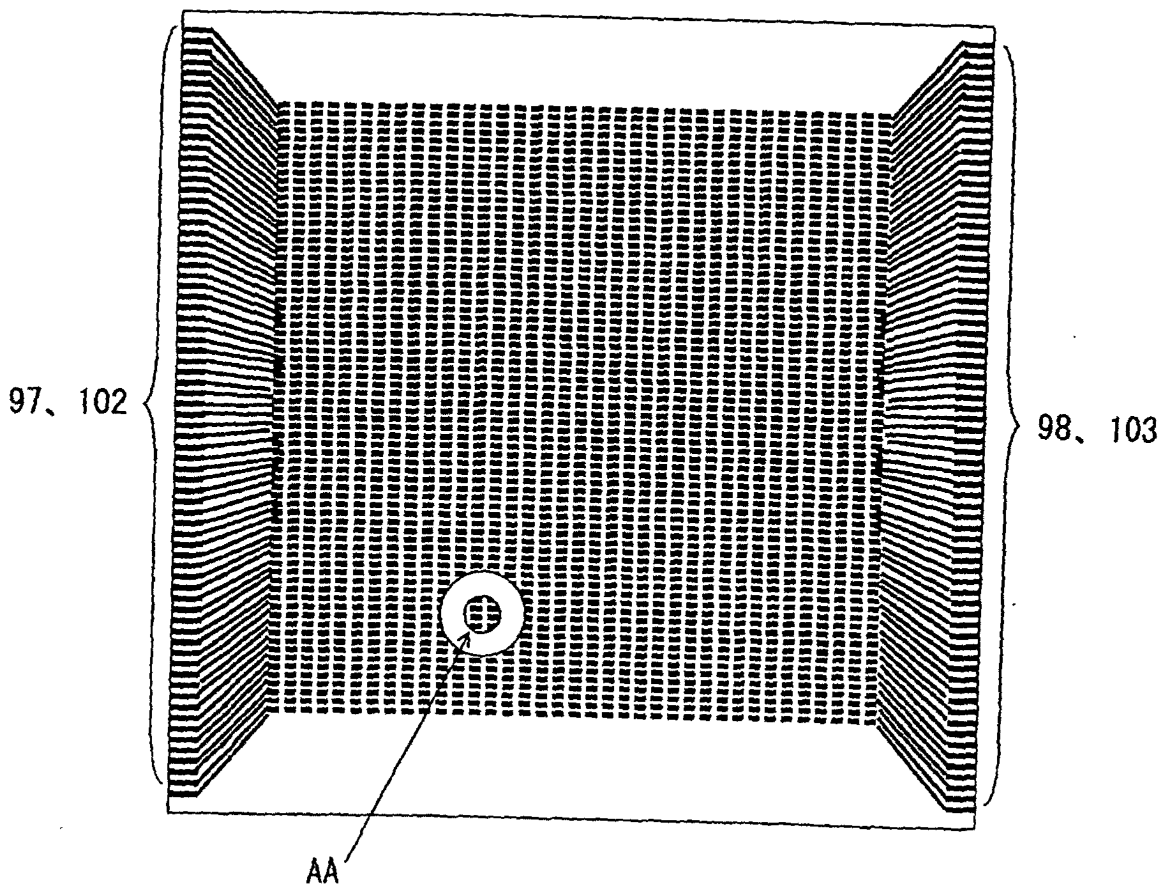


Fig.68

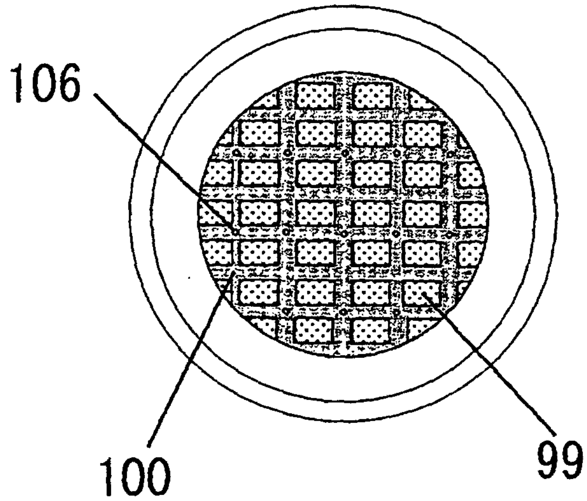


Fig.69

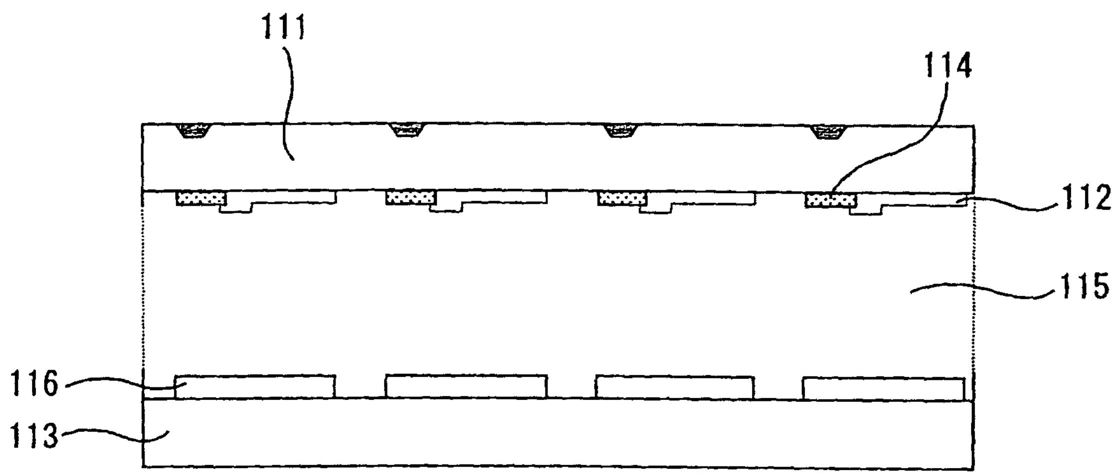


Fig.70

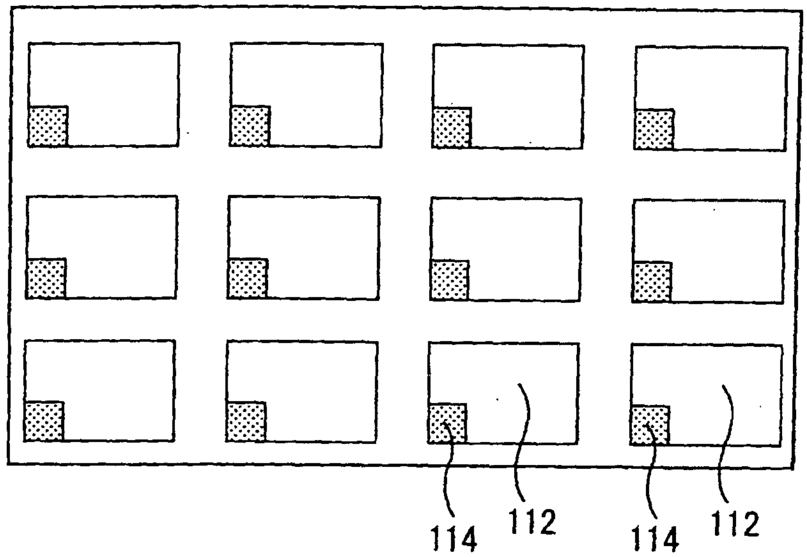


Fig.71

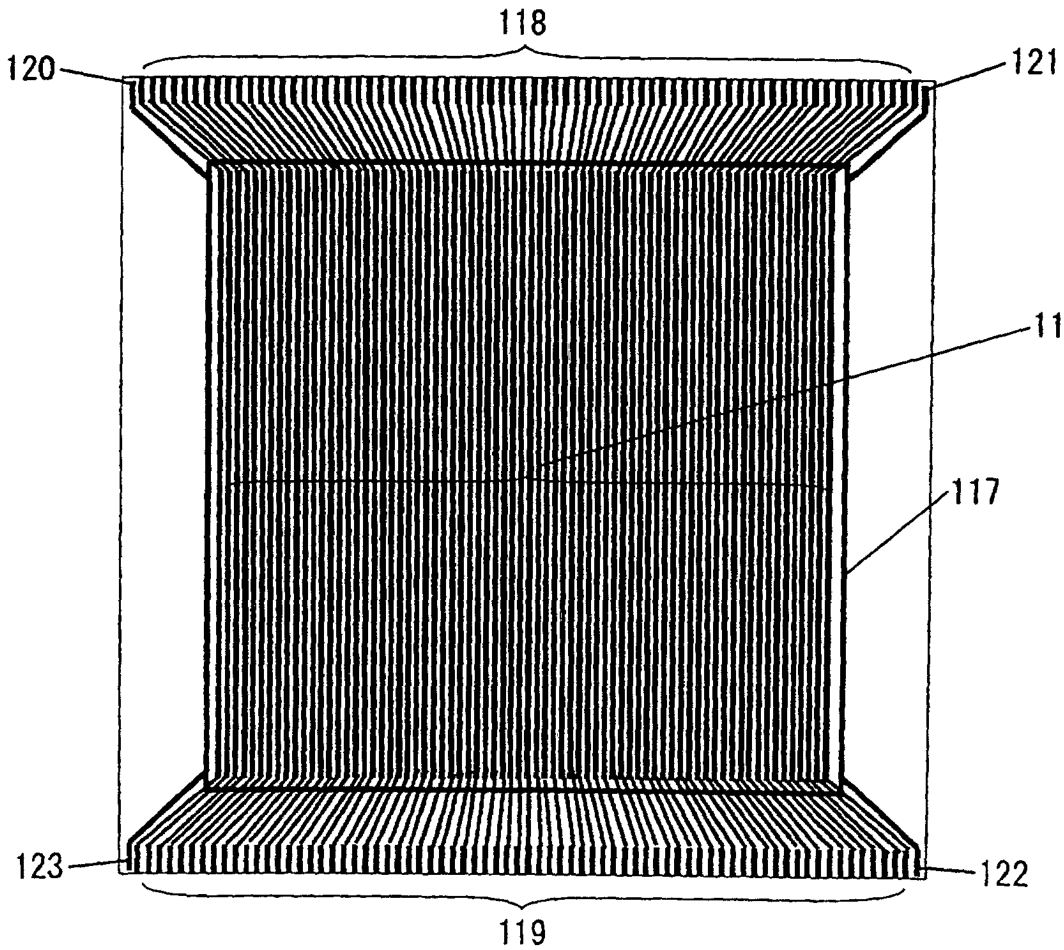


Fig.72

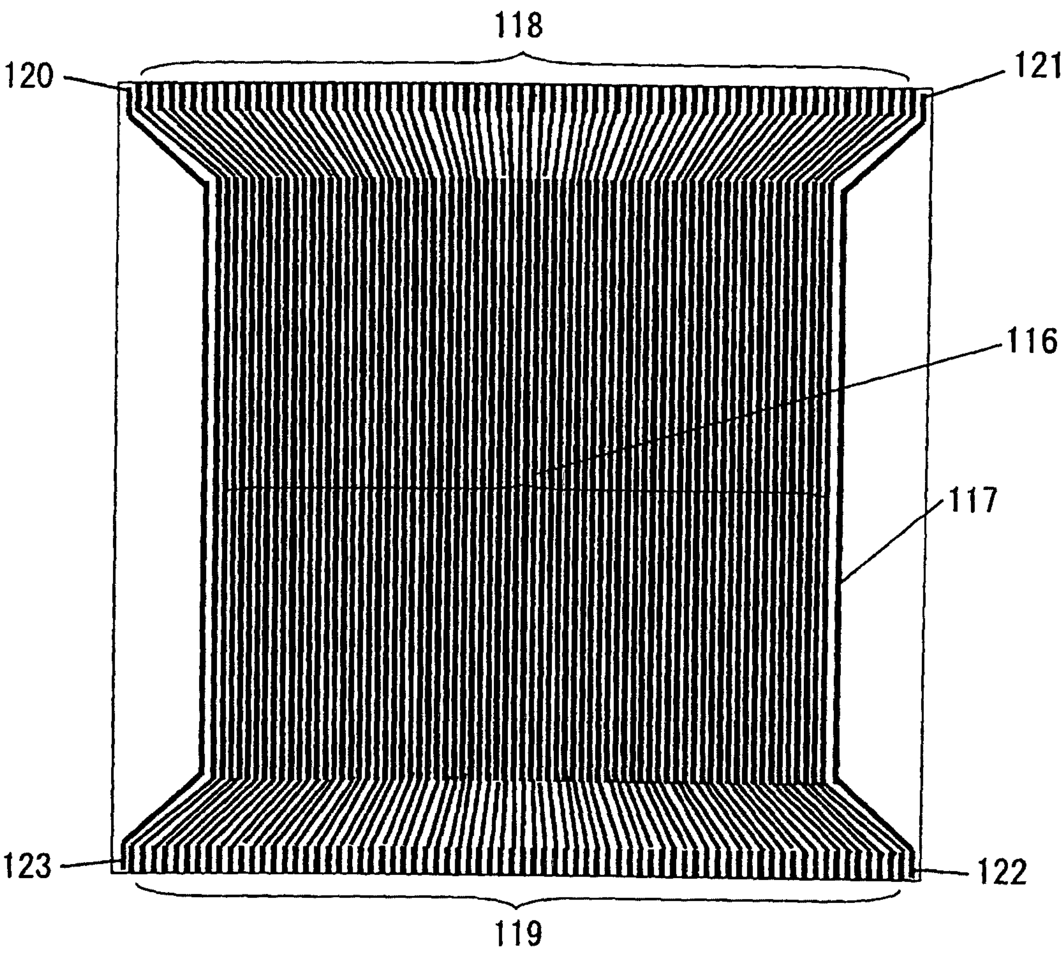


Fig.73

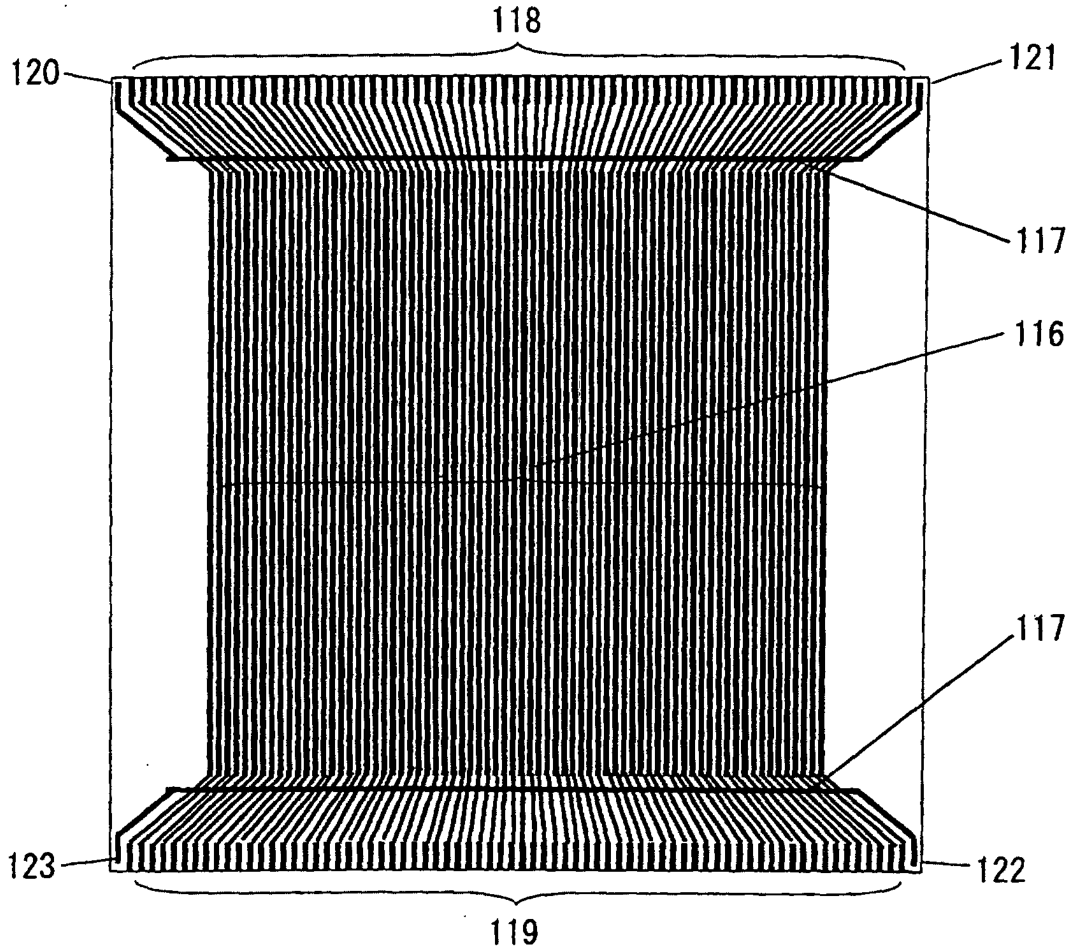


Fig.74

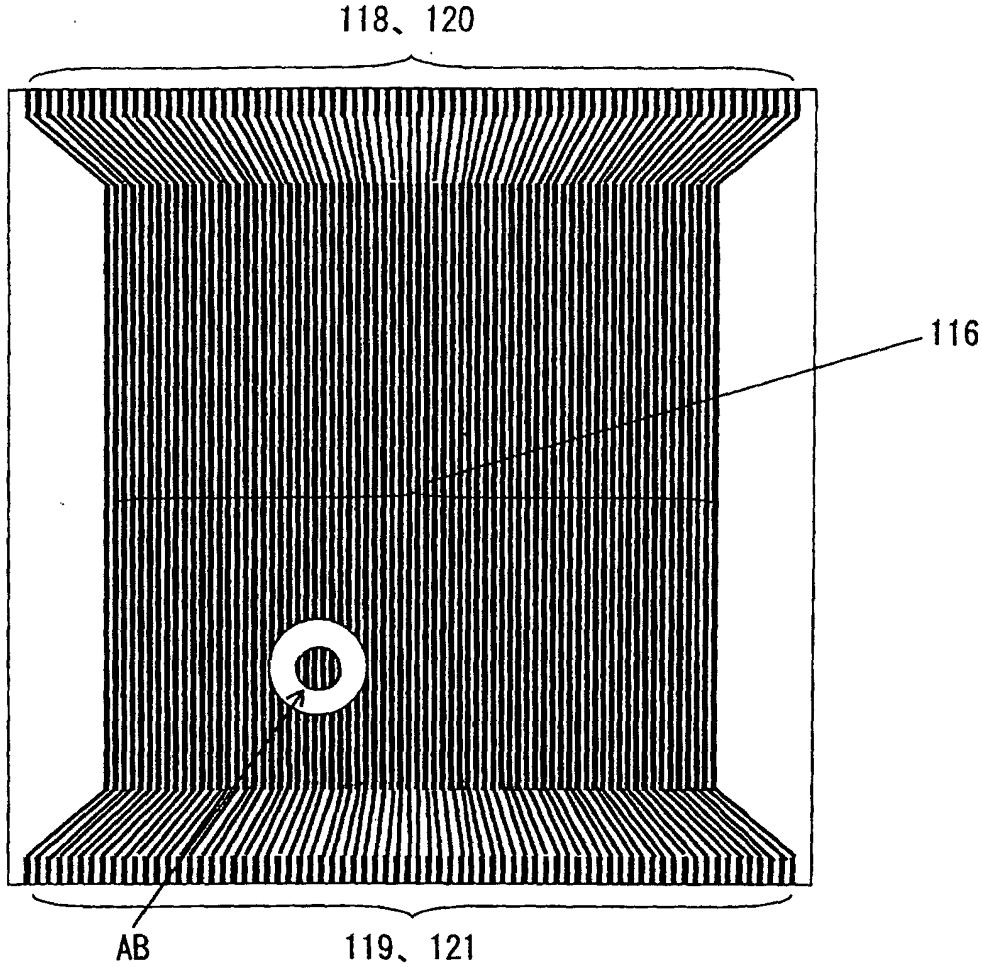


Fig.75

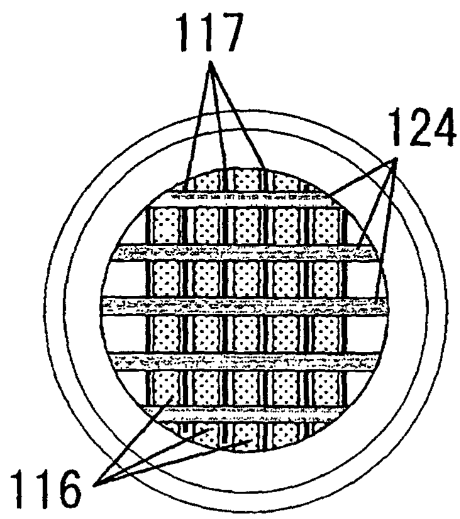


Fig.76

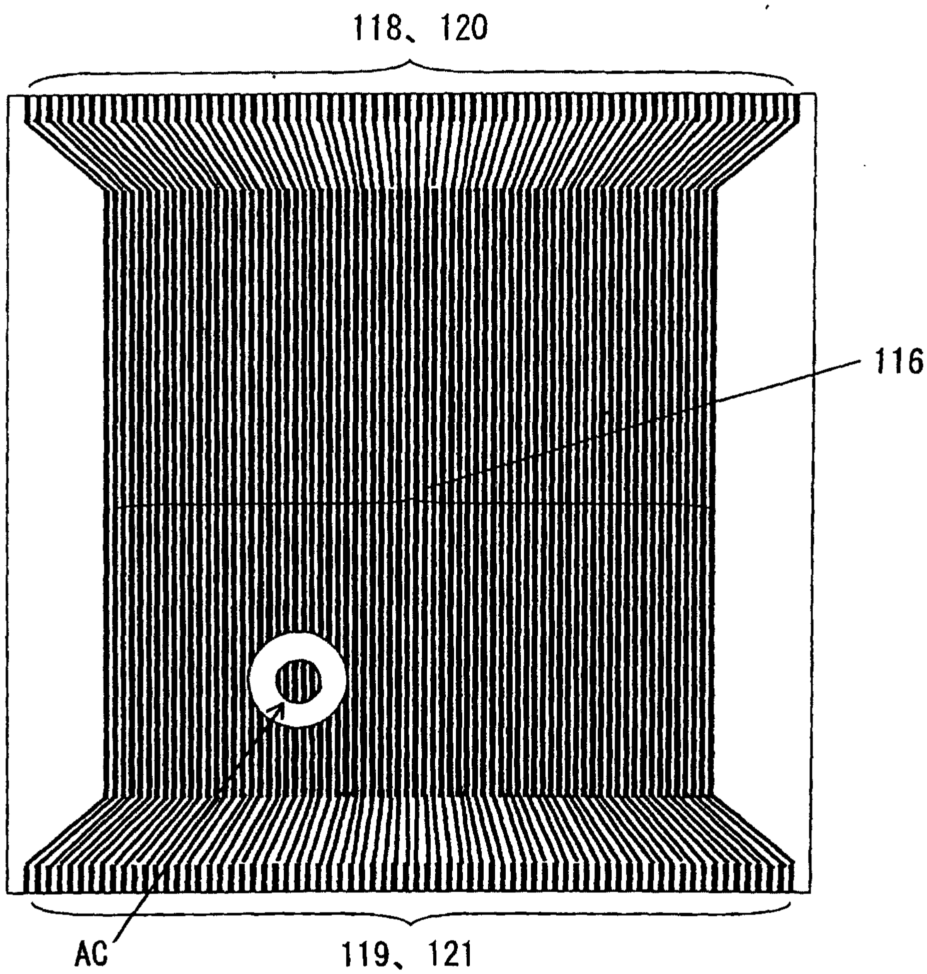


Fig.77

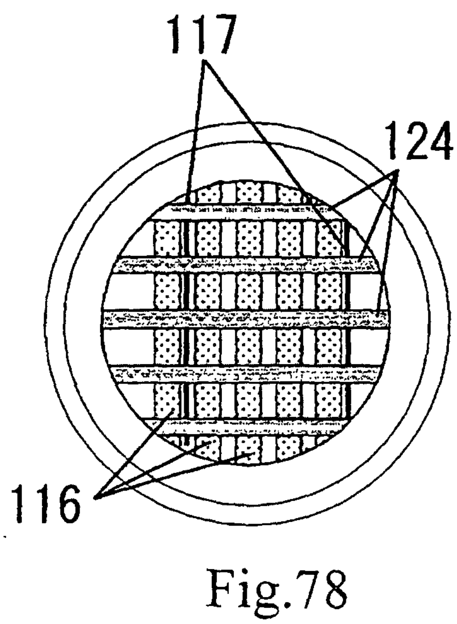


Fig.78

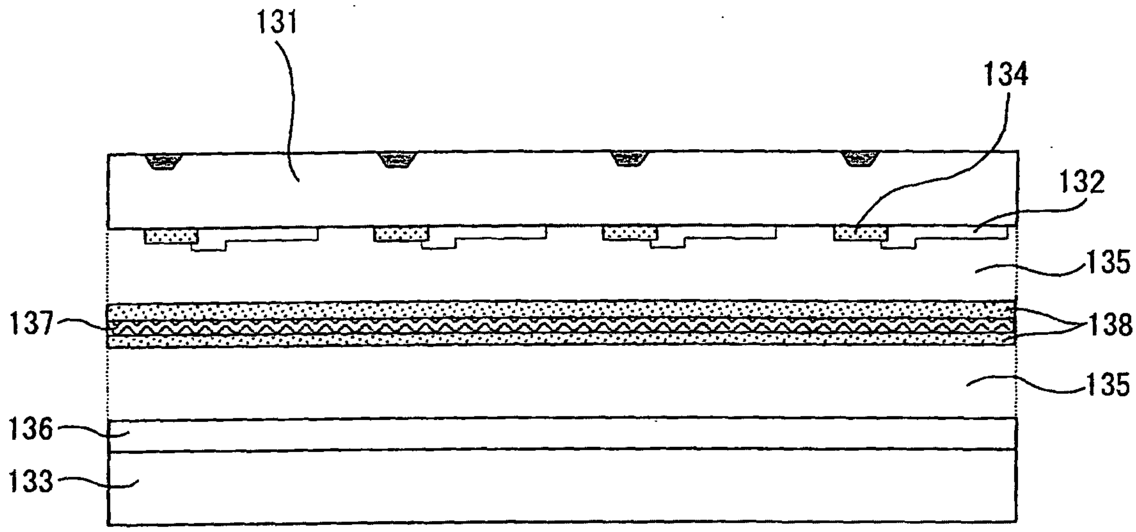
131
134
132
135
137
138
135
136
133

Fig.79

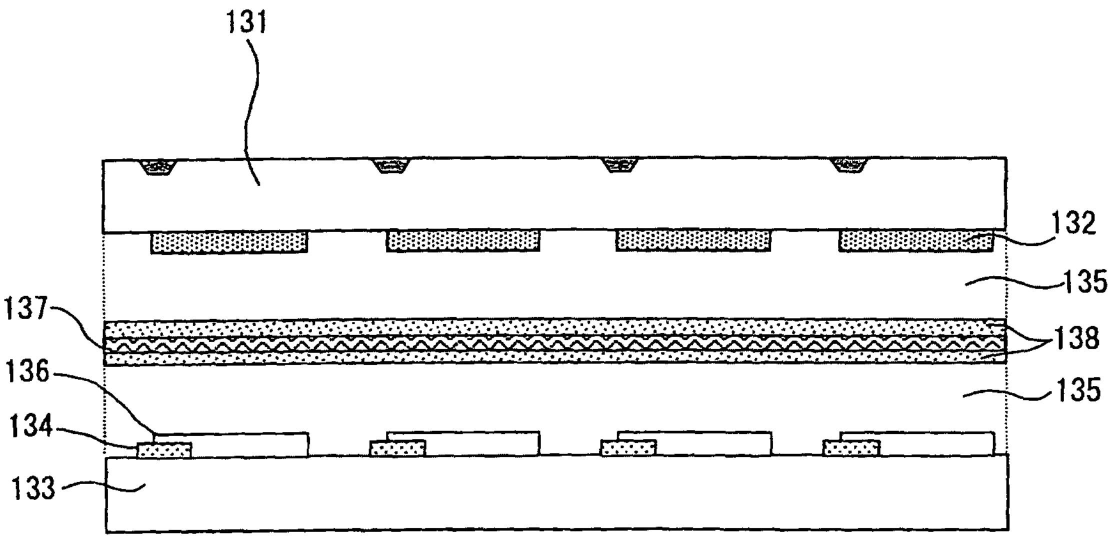
131
132
135
137
138
136
135
134
133

Fig.80

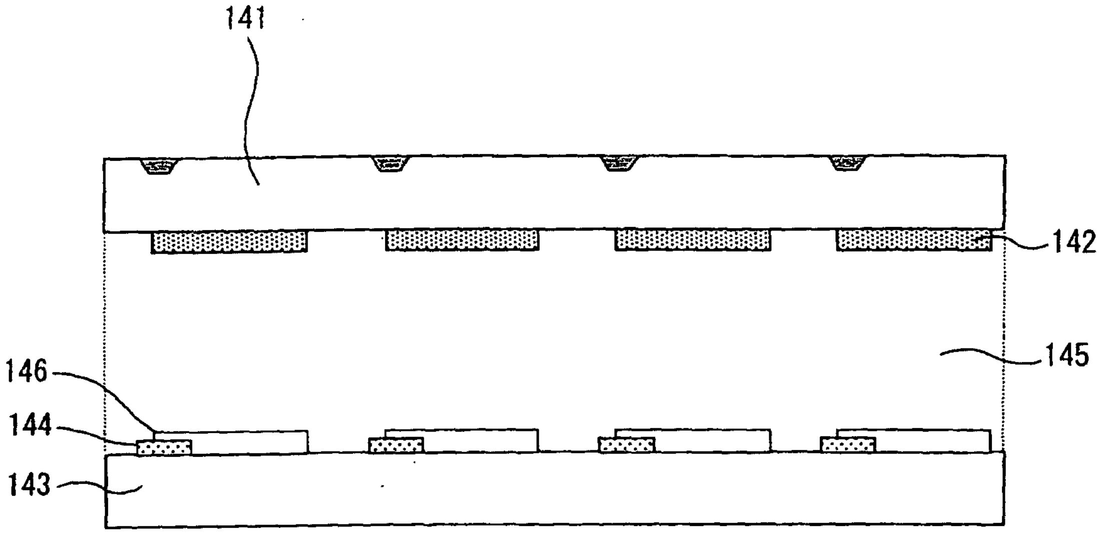


Fig.81

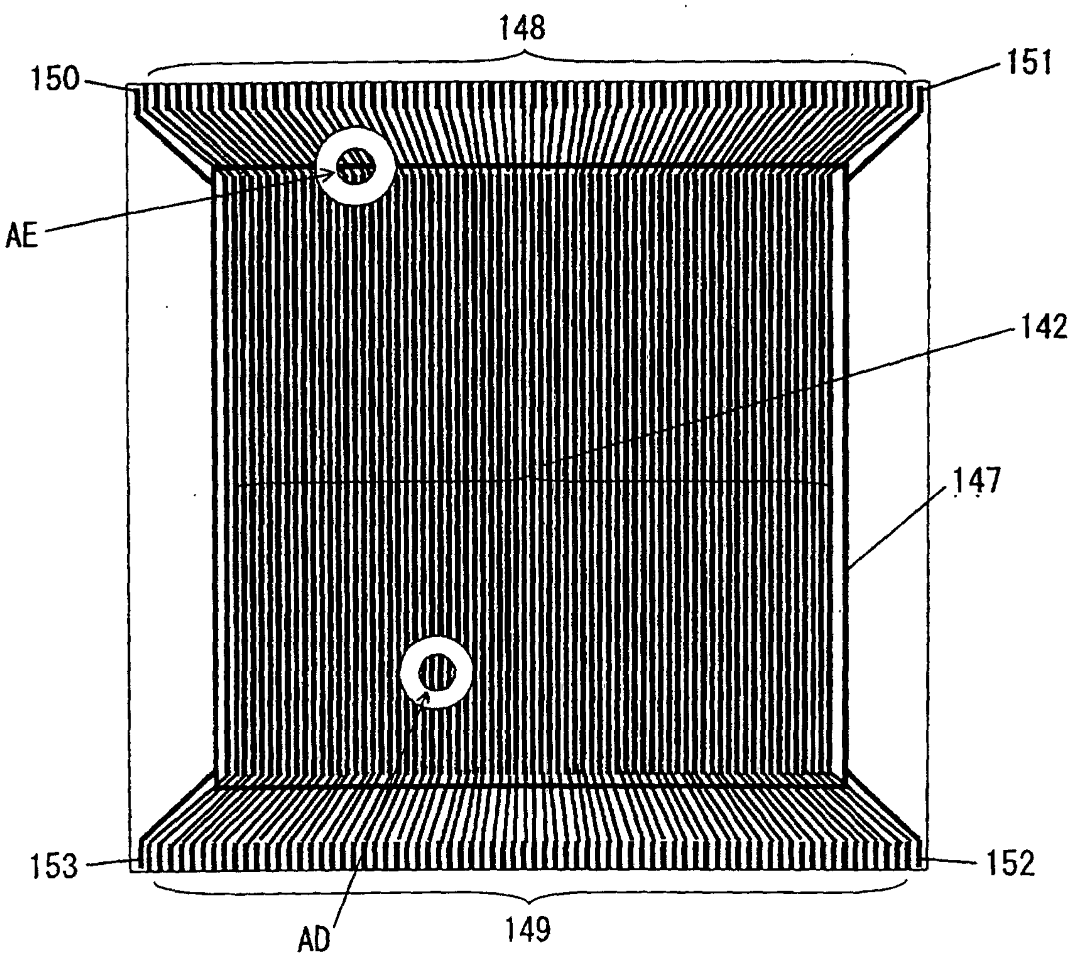


Fig.82

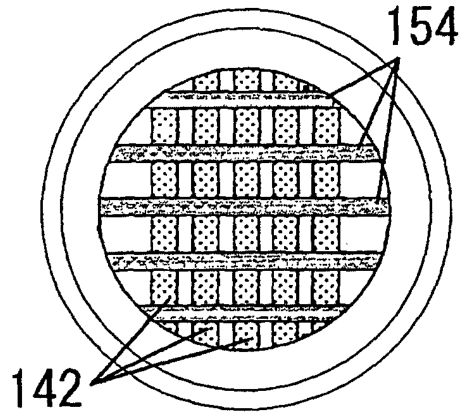


Fig.83

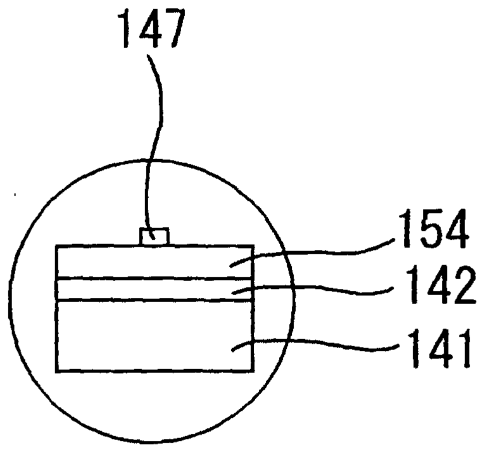


Fig.84

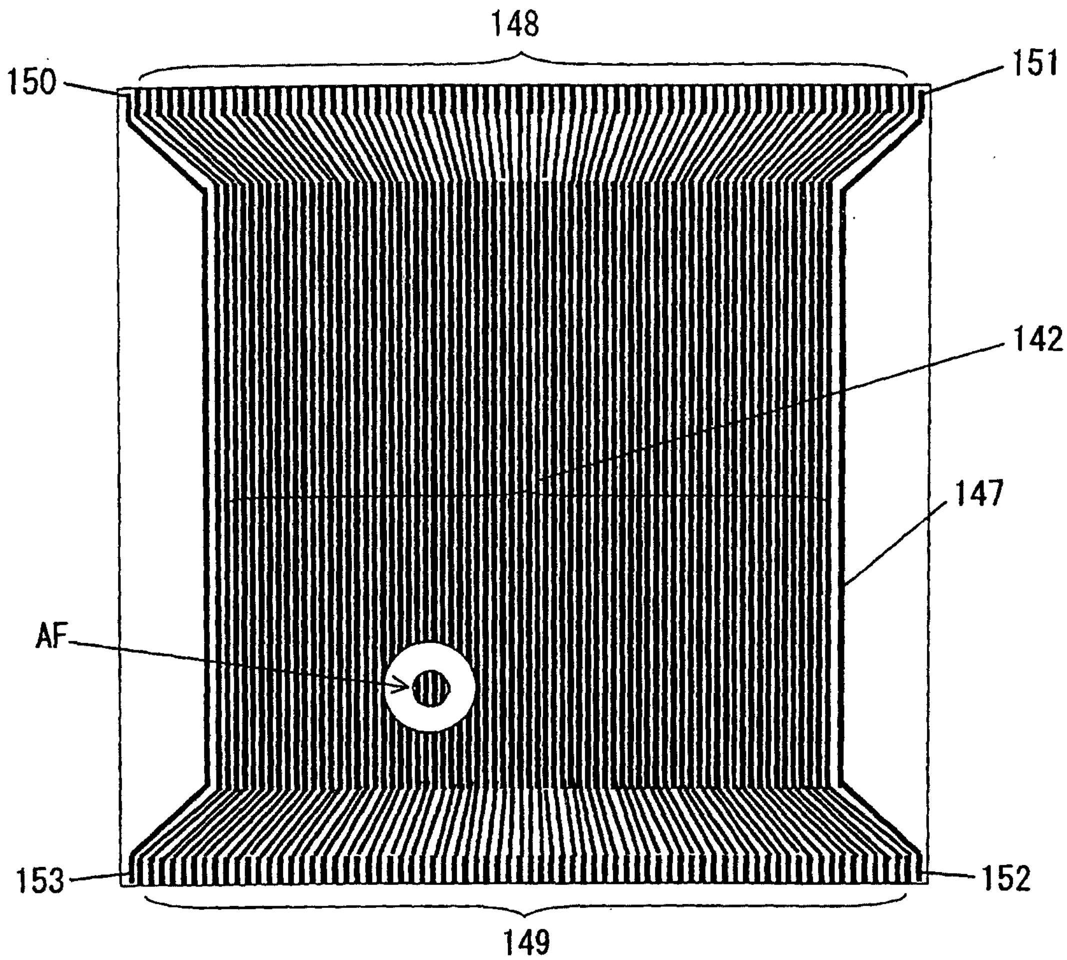


Fig.85

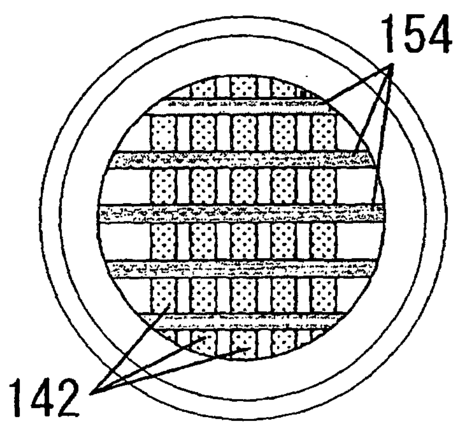


Fig.86

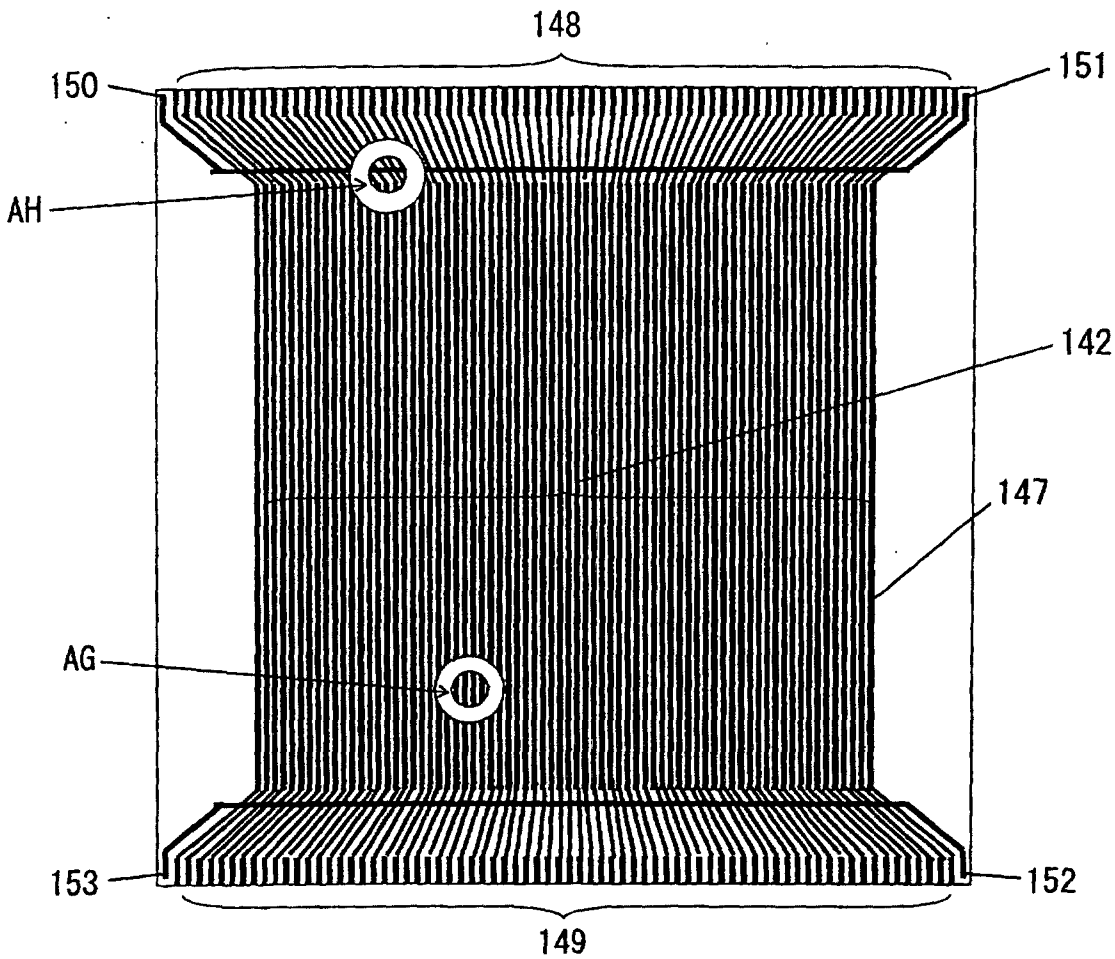


Fig.87

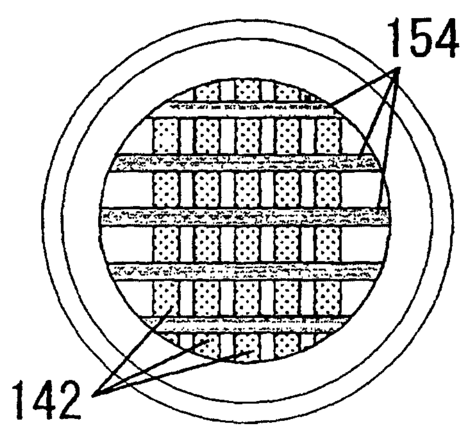


Fig.88

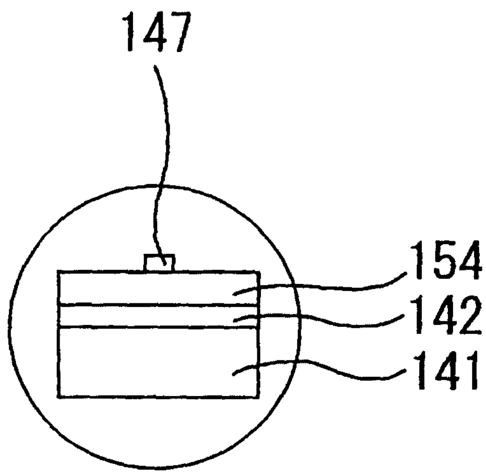


Fig.89

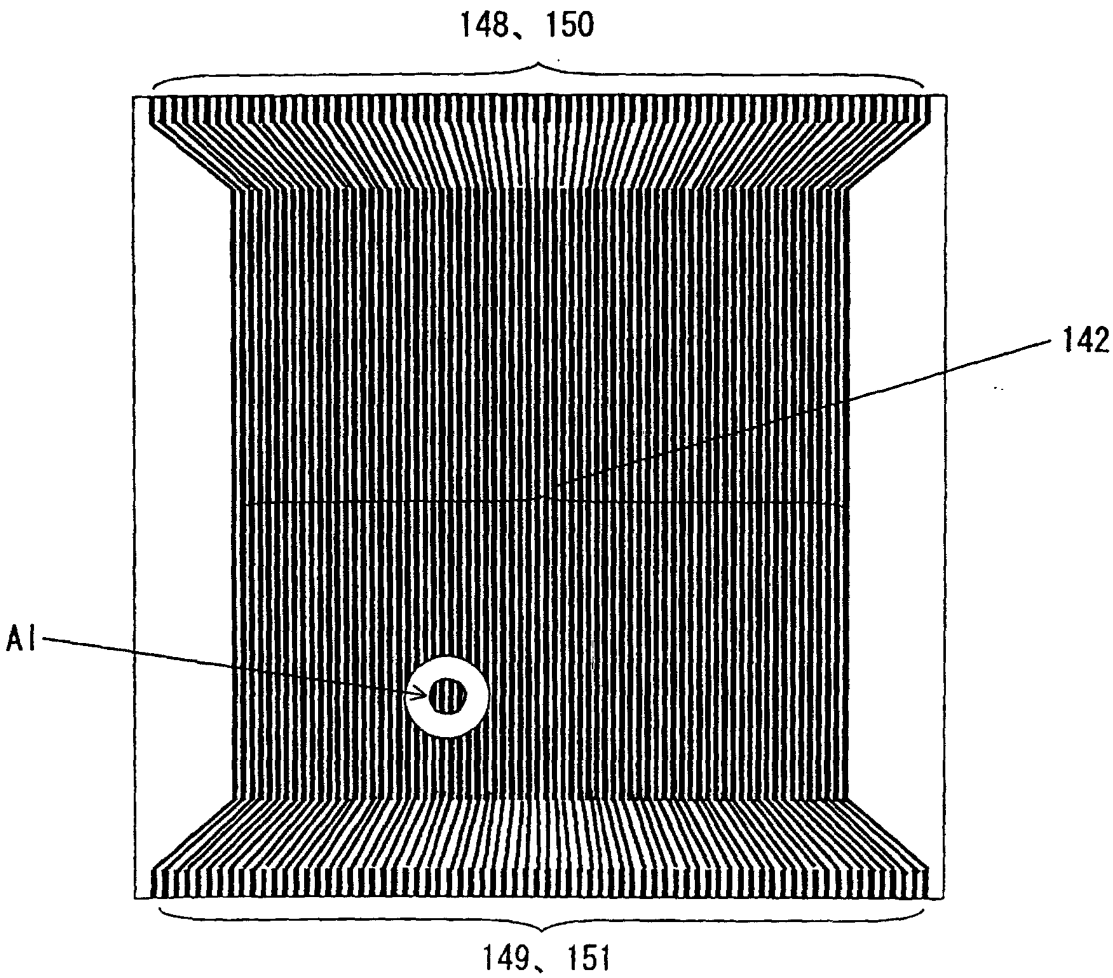


Fig.90

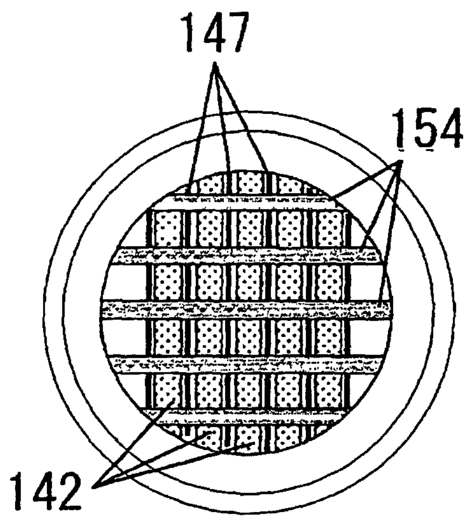


Fig.91

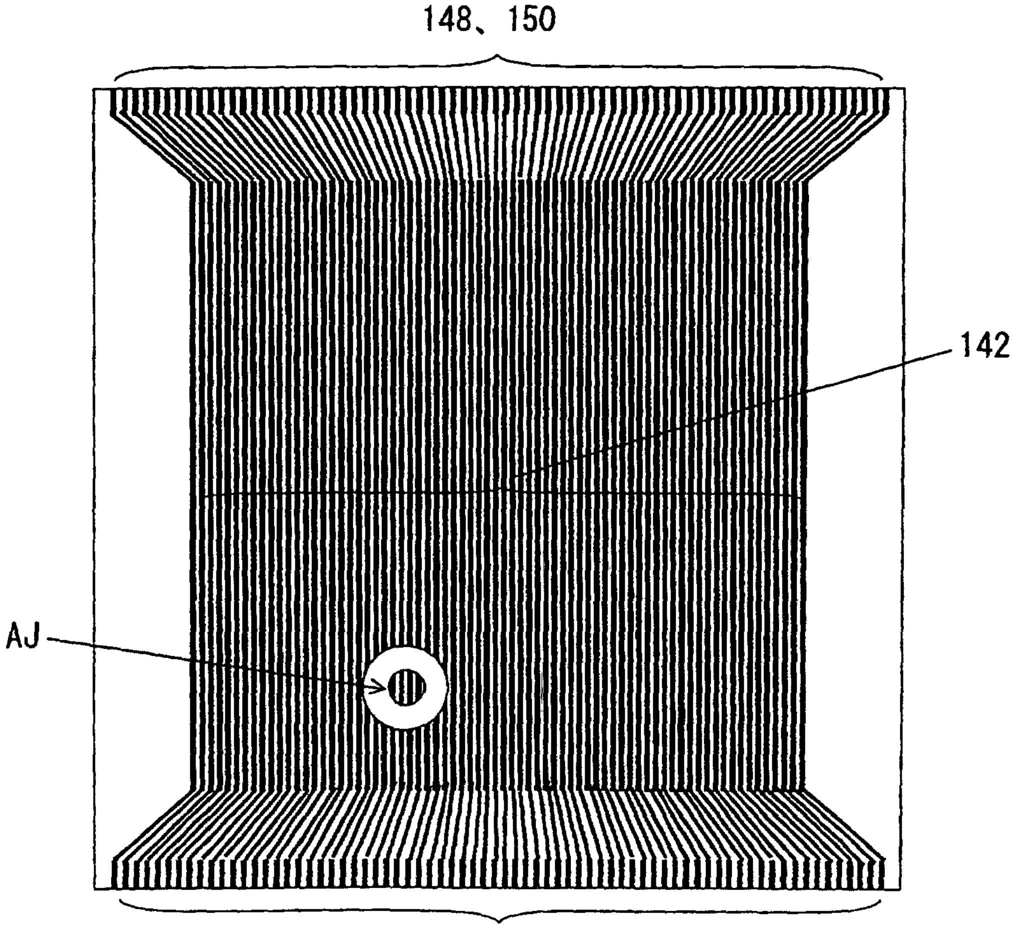


Fig.92

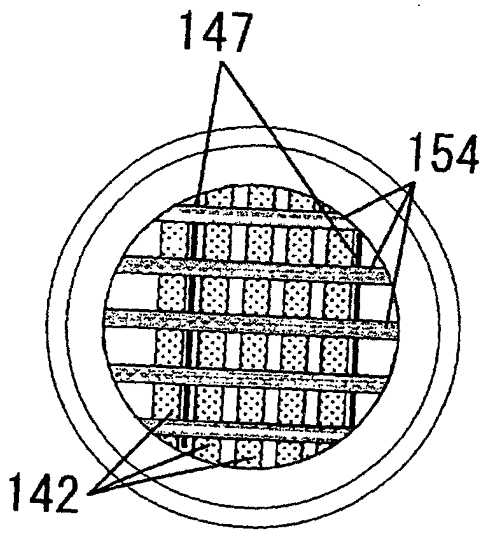


Fig.93

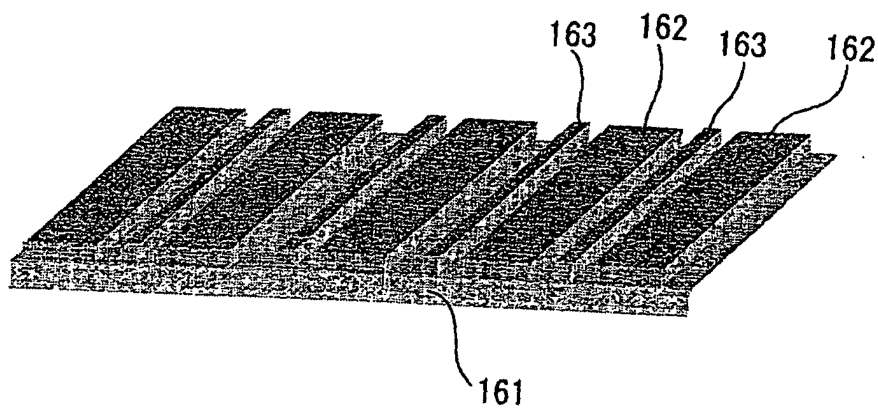


Fig.94

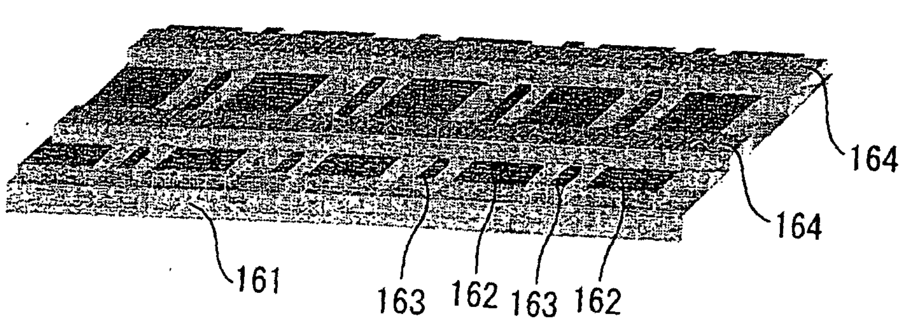


Fig.95

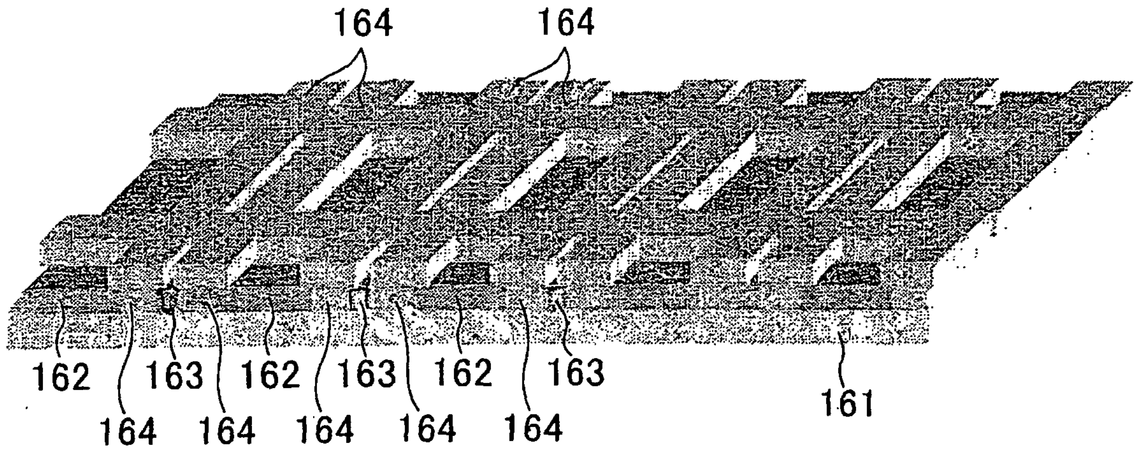
164
164
162
163
162
163
162
163
161
164
164
164
164
164

Fig.96

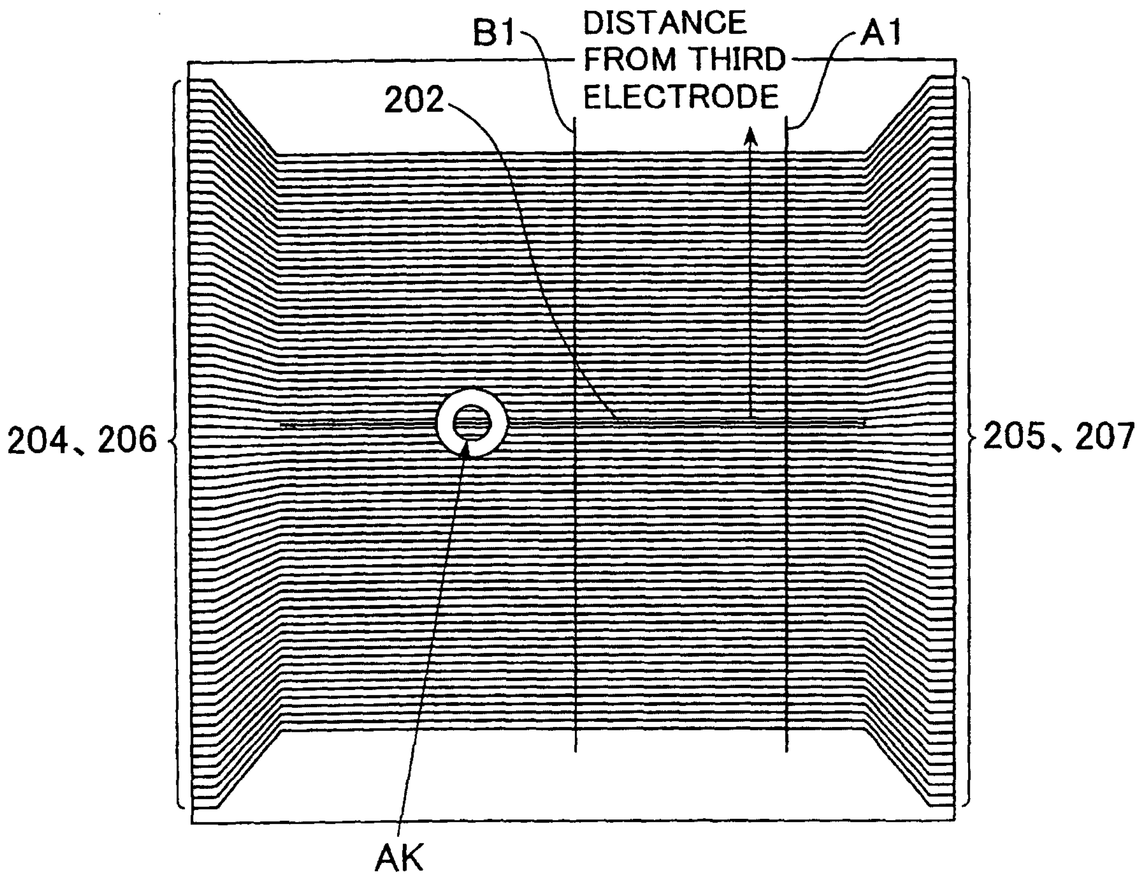
B1
DISTANCE FROM THIRD ELECTRODE
A1
202
204、206
205、207
AK

Fig.97

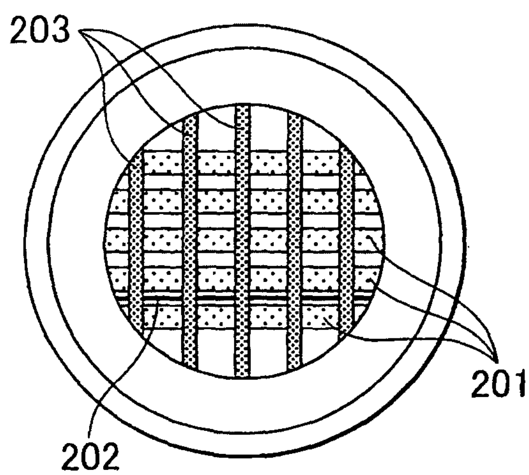
203
201
202

Fig.98

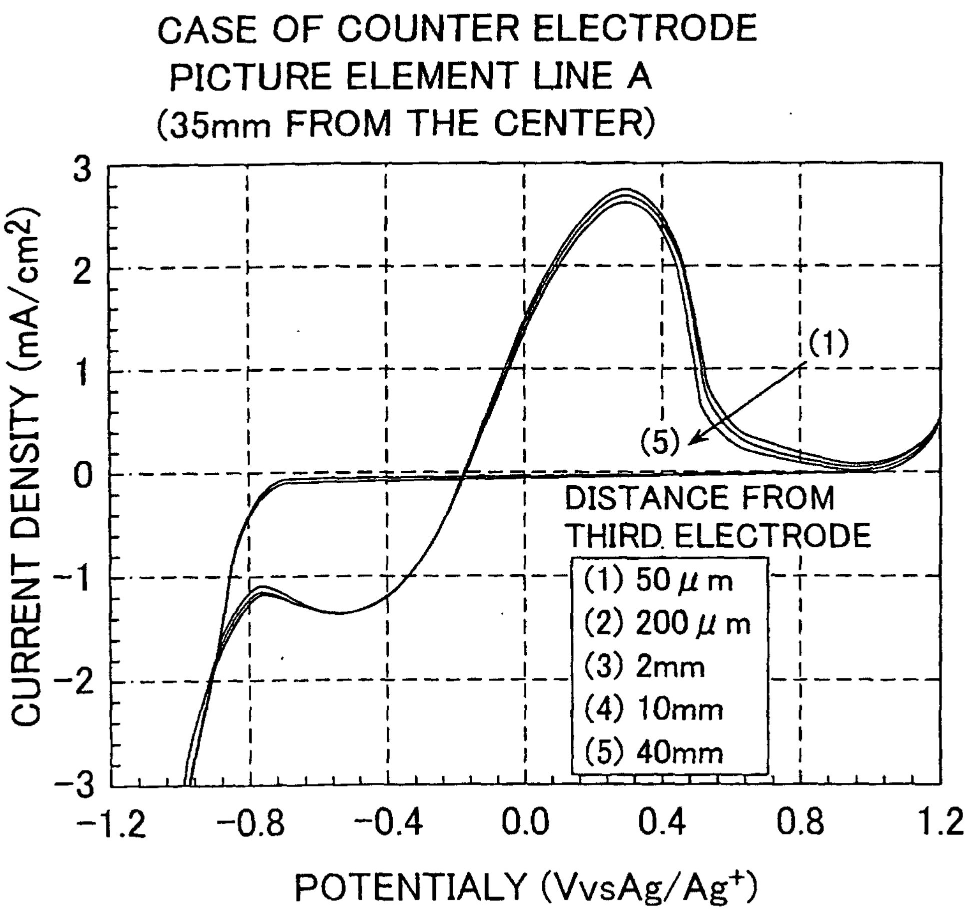
CASE OF COUNTER ELECTRODE
PICTURE ELEMENT LINE A
(35mm FROM THE CENTER)
CURRENT DENSITY (mA/cm2)
3
2
1
0
−1
−2
−3
−1.2
−0.8
−0.4
0.0
0.4
0.8
1.2
POTENTIALY (VvsAg/Ag+)
(1)
(5)
DISTANCE FROM
THIRD ELECTRODE
(1) 50 μm
(2) 200 μm
(3) 2mm
(4) 10mm
(5) 40mm

Fig.99

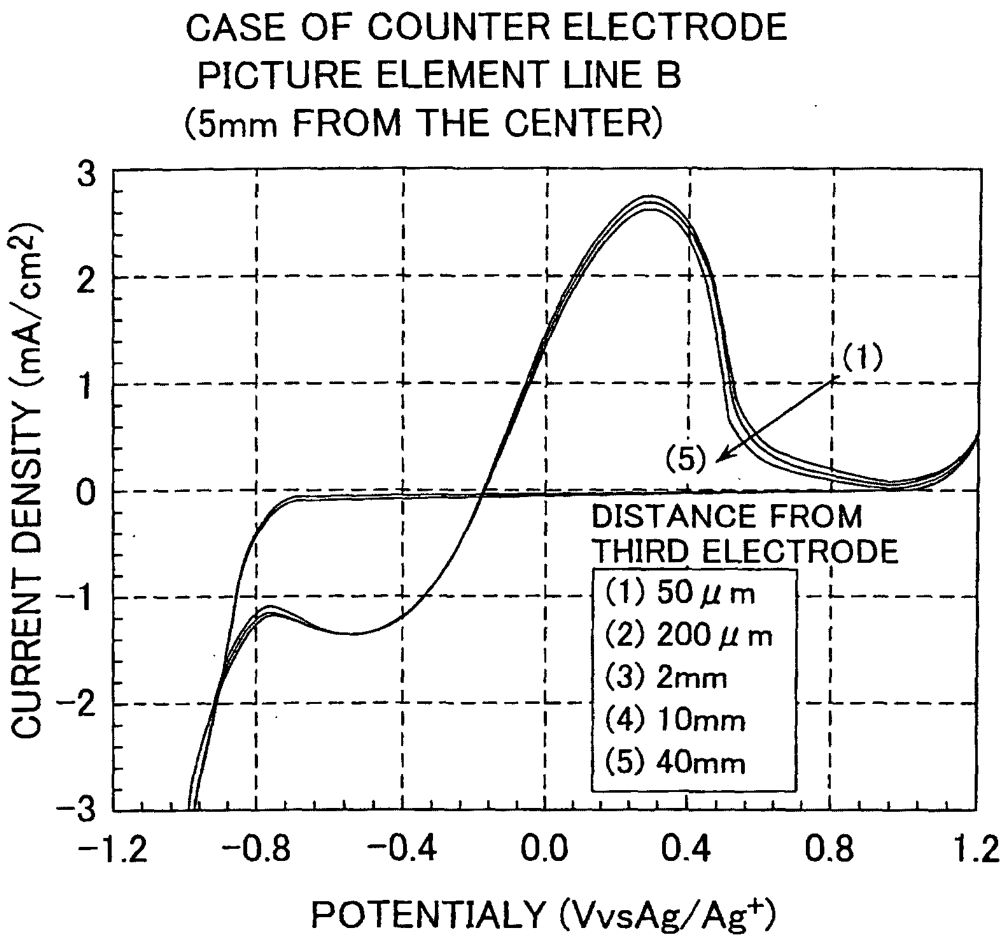
CASE OF COUNTER ELECTRODE
PICTURE ELEMENT LINE B
(5mm FROM THE CENTER)
CURRENT DENSITY (mA/cm2)
3
2
1
0
−1
−2
−3
−1.2
−0.8
−0.4
0.0
0.4
0.8
1.2
POTENTIALY (VvsAg/Ag+)
(1)
(5)
DISTANCE FROM
THIRD ELECTRODE
(1) 50 μm
(2) 200 μm
(3) 2mm
(4) 10mm
(5) 40mm

Fig.100

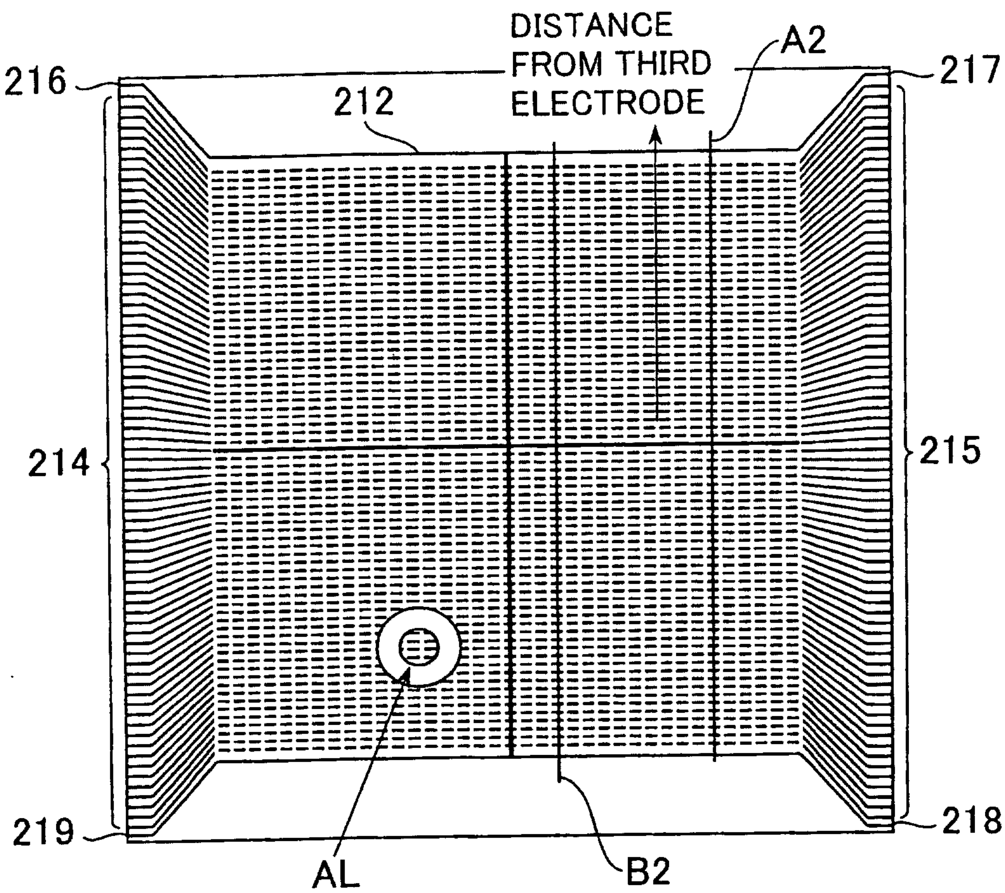


Fig.101

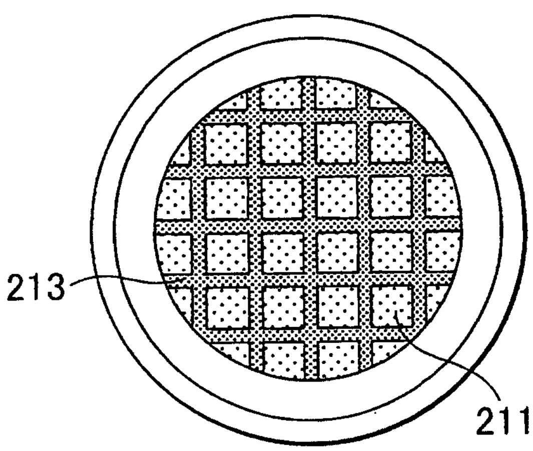


Fig.102

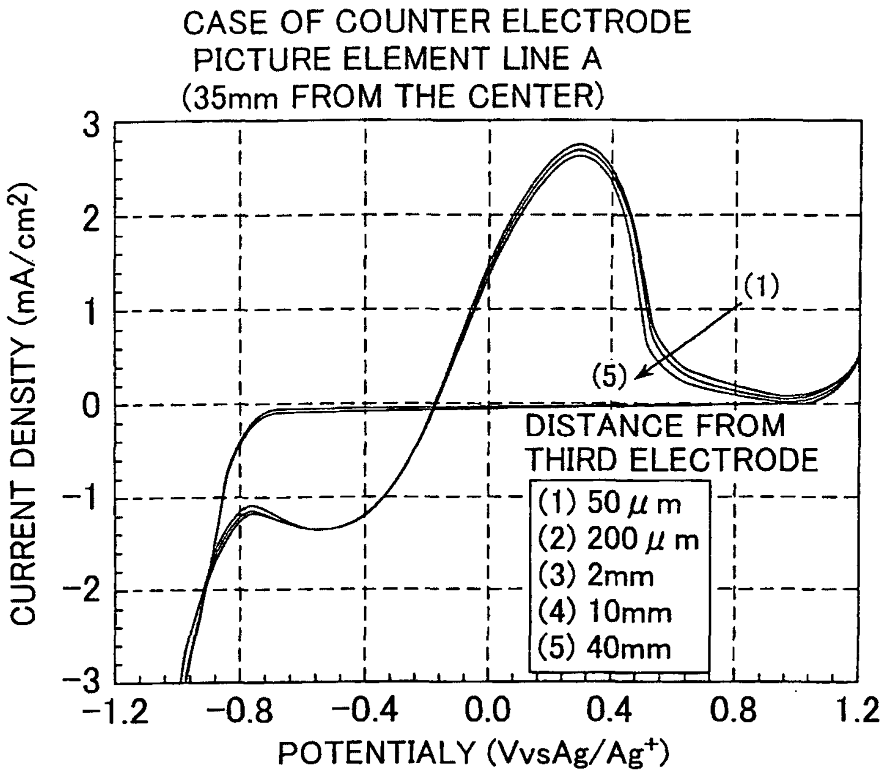


Fig.103

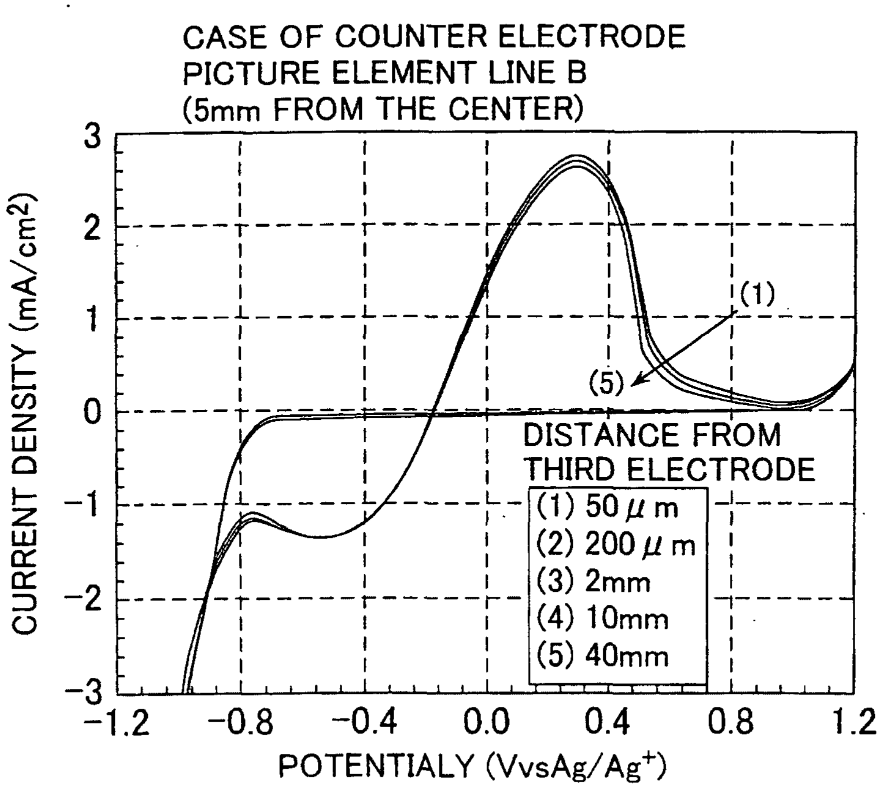


Fig.104

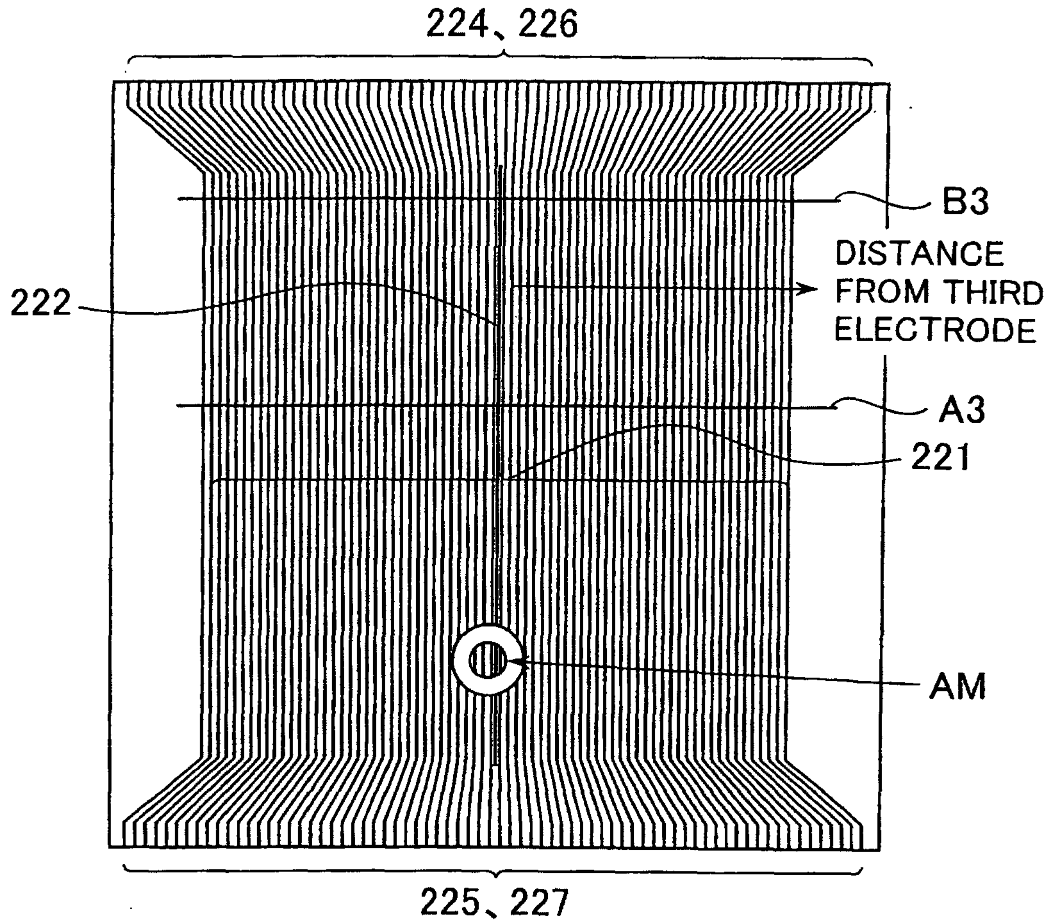


Fig.105

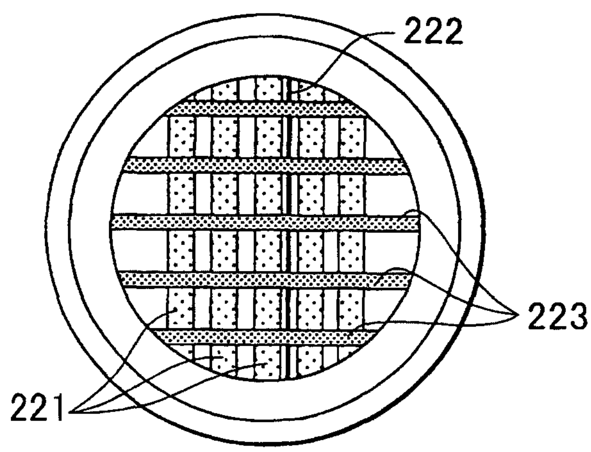


Fig.106

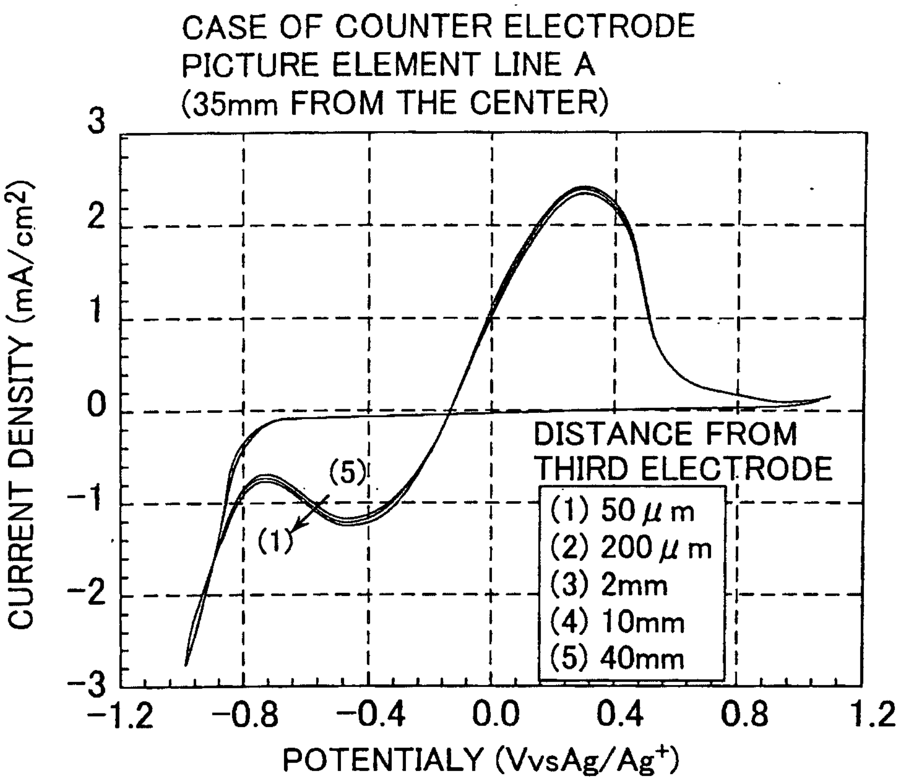


Fig.107

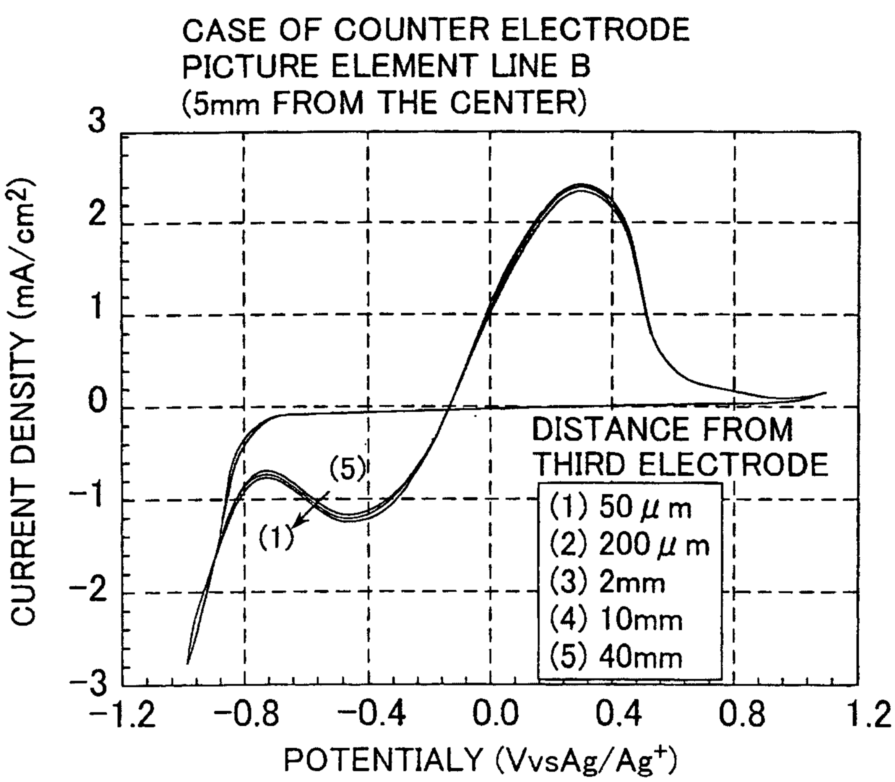


Fig.108

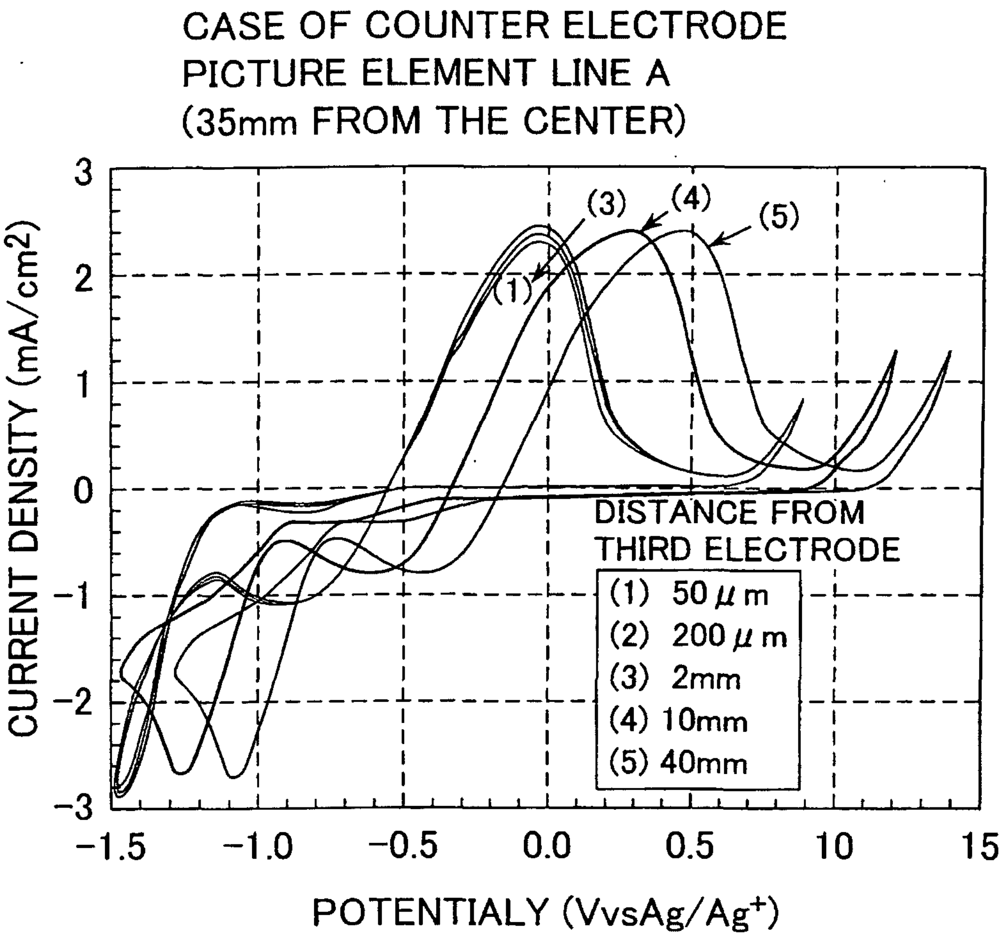
CASE OF COUNTER ELECTRODE
PICTURE ELEMENT LINE A
(35mm FROM THE CENTER)
CURRENT DENSITY (mA/cm2)
3
2
1
0
−1
−2
−3
−1.5
−1.0
−0.5
0.0
0.5
10
15
POTENTIALY (VvsAg/Ag+)
(1)
(3)
(4)
(5)
DISTANCE FROM
THIRD ELECTRODE
(1) 50 μm
(2) 200 μm
(3) 2mm
(4) 10mm
(5) 40mm

Fig.109

## INTERNATIONAL SEARCH REPORT

International application No.
PCT/JP03/01346

A. CLASSIFICATION OF SUBJECT MATTER
Int.Cl[7] G02F1/15, 1/17

According to International Patent Classification (IPC) or to both national classification and IPC

B. FIELDS SEARCHED

Minimum documentation searched (classification system followed by classification symbols)
Int.Cl[7] G02F1/15, 1/17

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | EP 130249 A1 (INTERNATIONAL BUSINESS MACHIENS CORP.),<br>09 January, 1985 (09.01.85),<br>Full text<br>& US 4649382 A & JP 60-14296 A | 1-4,7-9, 27-28,30-32<br>5-6,10-18, 21-26,29 |
| Y | EP 901034 A2 (Sony Corp.),<br>10 March, 1999 (10.03.99),<br>Full text<br>& US 6261478 B1 & JP 11-142895 A | 10-18,21-26 |
| Y | JP 54-51541 A (Sharp Corp.),<br>23 April, 1979 (23.04.79),<br>Full text<br>(Family: none) | 5-6 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 March, 2003 (06.03.03) | 18 March, 2003 (18.03.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/01346

C (Continuation). DOCUMENTS CONSIDERED TO BE RELEVANT

| Category* | Citation of document, with indication, where appropriate, of the relevant passages | Relevant to claim No. |
|---|---|---|
| Y | JP 1-193782 A (Nippon Telegraph And Telephone Corp.), 03 August, 1989 (03.08.89), Full text (Family: none) | 29 |
| E,X | WO 02/52339 A1 (Sony Corp.), 11 September, 2002 (11.09.02), Full text & JP 2002-258327 A | 1-4,10-19, 24-28,30-32 |
| A | JP 54-68264 A (Sharp Corp.), 01 June, 1979 (01.06.79), Full text (Family: none) | 1-32 |

Form PCT/ISA/210 (continuation of second sheet) (July 1998)